(19)

Europäisches
Patentamt
European
Patent Office
Office européen
des brevets

(11)  **EP 4 095 099 A1**

(12)  **EUROPEAN PATENT APPLICATION**
published in accordance with Art. 153(4) EPC

(43) Date of publication:
**30.11.2022   Bulletin 2022/48**

(21) Application number: **21743745.8**

(22) Date of filing: **15.01.2021**

(51) International Patent Classification (IPC):
**C01B 39/48** *(2006.01)*        **C01B 39/14** *(2006.01)*
**C01B 39/26** *(2006.01)*        **C01B 39/38** *(2006.01)*

(52) Cooperative Patent Classification (CPC):
**C01B 39/14; C01B 39/26; C01B 39/38;
C01B 39/48;** Y02E 60/10

(86) International application number:
**PCT/JP2021/001192**

(87) International publication number:
**WO 2021/149600 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **23.01.2020   JP 2020009291**

(71) Applicant: **Sony Group Corporation
Minato-Ku, Tokyo, 108-0075 (JP)**

(72) Inventors:
  • **TABATA, Seiichiro
    Tokyo 108-0075 (JP)**
  • **YOKOI, Toshiyuki
    Yokohama-shi, Kanagawa 221-0804 (JP)**

(74) Representative: **D Young & Co LLP
120 Holborn
London EC1N 2DY (GB)**

(54)    **METHOD FOR PRODUCING POROUS MATERIAL, POROUS MATERIAL OBTAINED BY SAID METHOD, AND SI-SOURCE COMPOSITION FOR POROUS MATERIAL PRODUCTION**

(57)    To provide a technique enabling the effective use of a plant-derived Si source. The present technique is capable of providing a production method of a porous material containing Si and Al, in which a first Si source composition that is a plant-derived Si source and an Al source are used as at least raw materials. The first Si source composition may be a Si source recovered when a treatment for recovering the Si source is carried out after a carbonization treatment of a plant-derived raw material. A second Si source composition may be a treatment product obtained by a decarburization treatment of a plant-derived raw material.

Fig. 1

EP 4 095 099 A1

**Description**

[Technical Field]

The present technique relates to a production method of a porous material, a porous material obtained thereby and a Si source composition for producing a porous material.

[Background Art]

In agriculture or industry, a large amount of by-products are generated. However, almost all of these by-products are disposed of while remaining unused. In order to dispose of these by-products, energy for disposal (for example, incineration) is required, and additionally, a waste treatment facility, an incineration facility, a final disposal site and the like become necessary. Disposal of by-products tends to put a load on the global environment and increase costs.

For example, in PTL 1, the following proposal has been made: a porous carbon material for which a plant-derived material having a silicon content rate of 10 weight% or more is used as a raw material, the value of the specific surface area according to the nitrogen BET method is 10 $m^2$/gram or more, the silicon content rate is 1 weight% or less and the volume of pores is 0.1 $cm^3$/gram or more can be obtained by a production method of a porous carbon material in which the plant-derived material is carbonized at 800°C to 1400°C and then treated with an acid or an alkali and the plant-derived material is used as a raw material, and the porous carbon material can be used as a negative electrode material for batteries, an adsorbent, a mask, an adsorption mask or a carrier.

In addition, PTL 2 discloses a porous carbon material for which a plant containing at least one component selected from the group consisting of sodium, magnesium, potassium and calcium is used as a raw material.

[Citation List]

[Patent Literature]

[PTL 1]
JP 2008-273816 A
[PTL 2]

[Summary]

[Technical Problem]

Furthermore, there is a need to promote the effective use of a plant-derived Si source that is generated from agriculture, industry or the like.

Therefore, an object of the present technology is to provide a technique enabling the effective use of a plant-derived Si source.

[Solution to Problem]

As a result of intensive studies, the present inventors found that the use of a Si source obtained from a plant-derived raw material makes it possible to produce a variety of porous materials. Therefore, it is possible to provide a technique enabling the effective use of a plant-derived Si source, and the present technique was completed. In the present technique, the plant-derived Si source may be a plant-derived by-product.

The present technique is capable of providing a production method of a porous material containing Si and Al, in which at least a first Si source composition that is a plant-derived Si source and an Al source are used as raw materials. Furthermore, a second Si source composition may be used as a raw material. The first Si source composition may be a Si source recovered when a treatment for recovering the Si source is carried out after a carbonization treatment of a plant-derived raw material.

The treatment for recovering the Si source may be a treatment by alkali extraction that is carried out by adjusting a NaOH/Si mole ratio (theoretical ratio).

The first Si source composition may have a silicon content of 10 g/L or more.

A Si/Al composition ratio (mass ratio) of the first Si source composition may be 1 to 300.

The second Si source may be a mineral-derived Si source and/or a plant-derived Si source.

The second Si source composition may be a treatment product obtained by a decarburization treatment of a plant-derived raw material.

The second Si source composition may be plant-derived ash.

The first Si source composition may be a Si source recovered when a treatment for recovering the Si source is carried out after a carbonization treatment of a plant-derived raw material, and the second Si source composition may be plant-derived ash.

Furthermore, an organic structure-directing agent may be used as a raw material.

A heating treatment of a mixture of the first Si source composition that is a plant-derived Si source and the Al source may be carried out.

The mixture may further contain the second Si source composition.

The heating treatment may be hydrothermal synthesis.

The heating treatment may be carried out in order of aging and then hydrothermal synthesis.

The first Si source composition may be an aqueous solution recovered by removing silica from a plant-derived raw material containing the silica.

The porous material may be a zeolite.

The plant may be a gramineous plant.

In addition, the present technique is capable of providing a porous material obtained by the manufacturing method of a porous material.

In addition, the present technique is capable of providing a Si source composition for producing a porous material containing a Si source recovered when a treatment for recovering the Si source is carried out after a carbonization treatment of a plant-derived raw material.

[Brief Description of Drawings]

[Fig. 1]

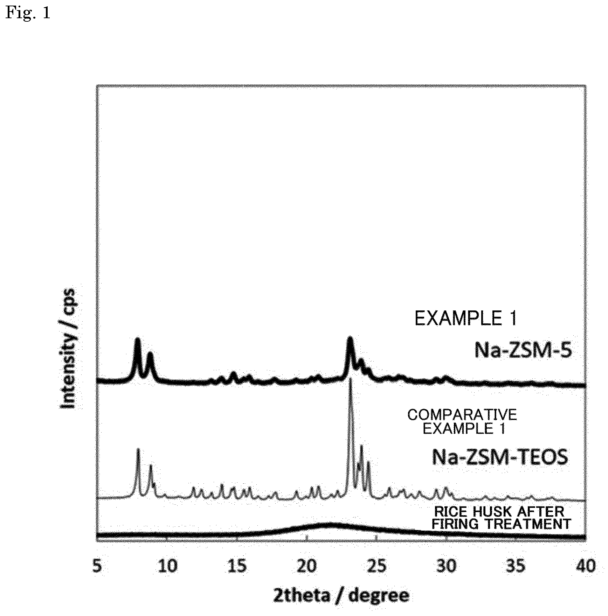

Fig. 1 is a view showing an XRD of Na-ZSM-5: a porous material (MFI type) of Example 1 in the upper tier, an XRD of Na-ZSM-TEOS: (MFI type) of Comparative Example 1 in the middle tier and an XRD of a rice husk after a firing treatment in the lower tier.

[Fig. 2]

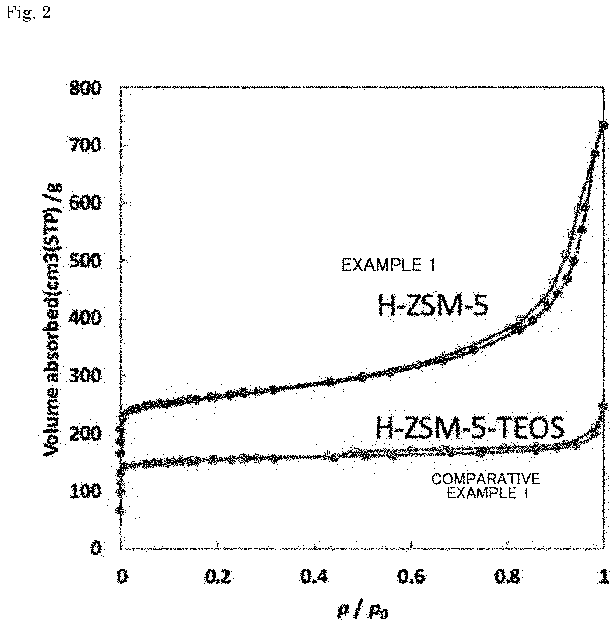

Fig. 2 is a view showing an adsorption isotherm of Na-ZSM-5 (• and ○): the porous material (MFI type) of Example 1 in the upper tier and an adsorption isotherm of Na-ZSM-TEOS (• and ○): the MFI type of Comparative Example 1 in the lower tier.

[Fig. 3]

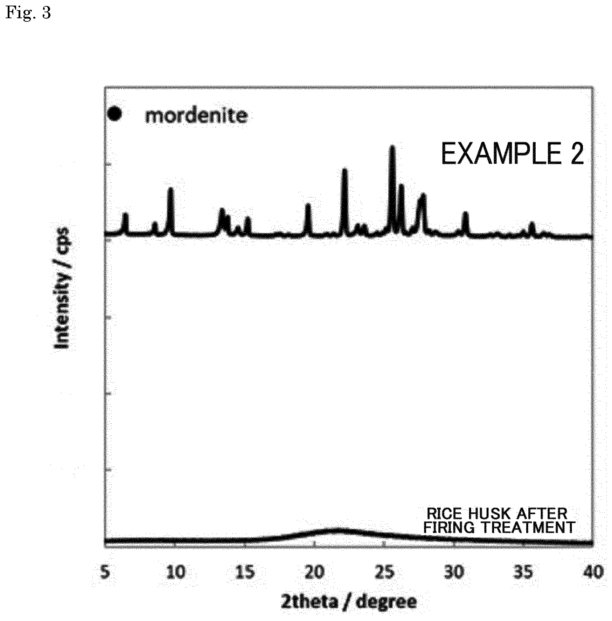

Fig. 3 is a view of an XRD of mordenite: a porous material of Example 2 in the upper tier and an XRD after a firing treatment in the lower tier.

[Fig. 4]

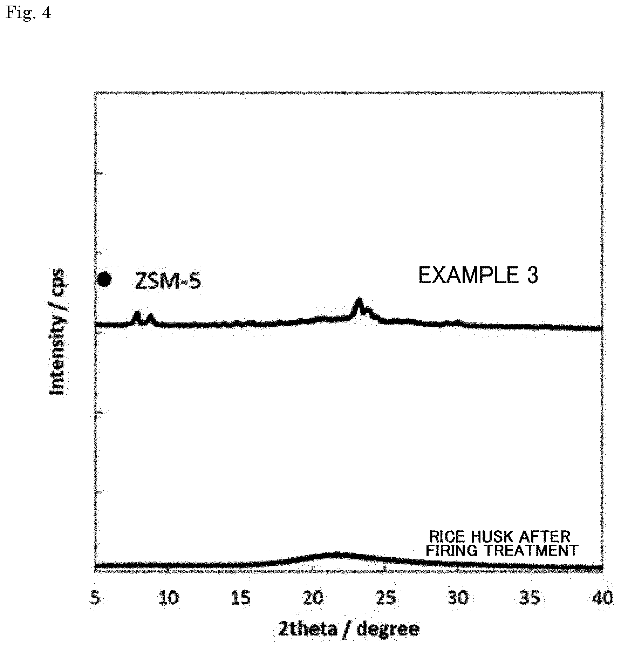

Fig. 4 is a view of each XRD of a porous material (MFI type (Na-ZSM-5)) of Example 3 in the upper tier and after a firing treatment in the lower tier.

[Fig. 5]

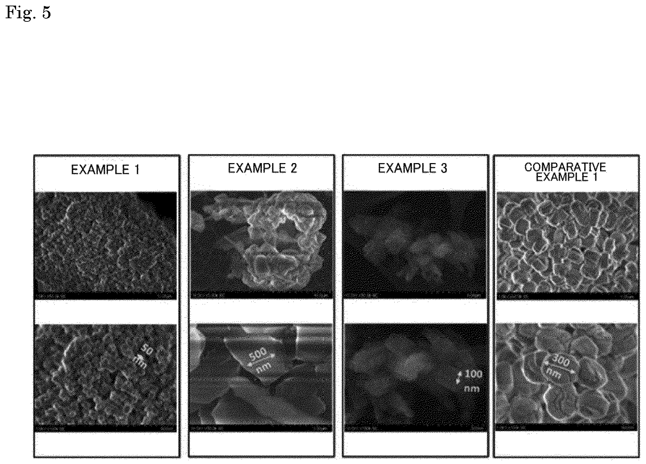

Fig. 5 is a view of SEM photographs of a zeolite (MFI type) of Example 1, a zeolite (mordenite) of Example 2, a zeolite (MFI type) of Example 3 and a zeolite (MFI type) of Comparative Example 1.

[Fig. 6]

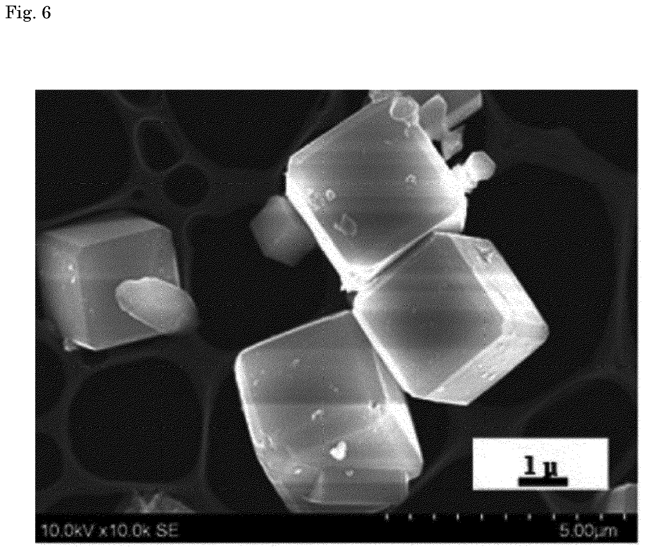

Fig. 6 is a view of an SEM photograph of a zeolite (LTA type) of Example 4.

[Fig. 7]

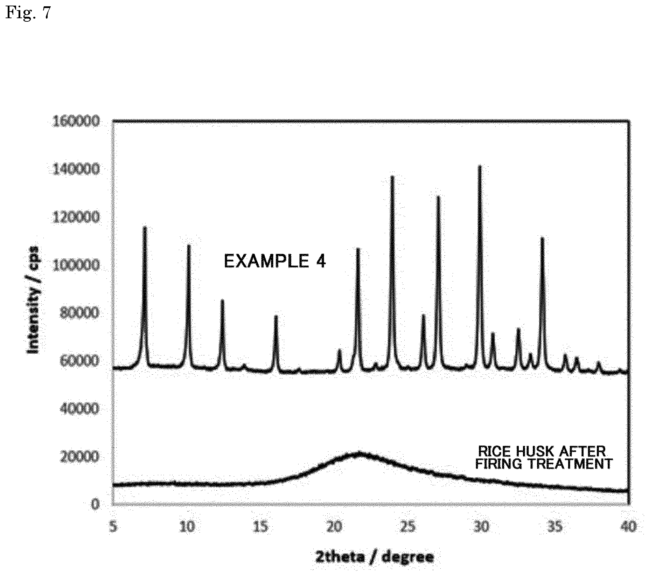

Fig. 7 shows a view of each XRD of a zeolite (LTA type) of Example 4 in the upper tier and after a firing treatment in the lower tier.

[Fig. 8]

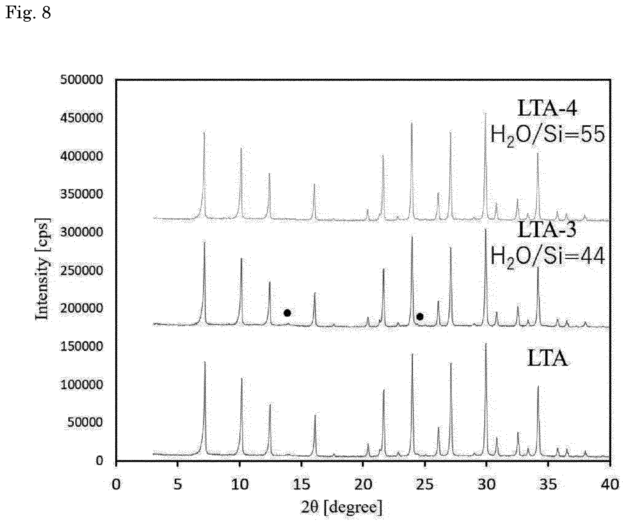

Fig. 8 shows a view of each XRD of a zeolite (LTA type) of Example 6 in the upper tier (LTA-4), a zeolite (LTA type) of Example 5 in the middle tier (LTA-3) and the zeolite of Example 4 in the lower tier (LTA). The ● mark in the middle tier indicates a zeolite SOD-derived peak.

[Fig. 9]

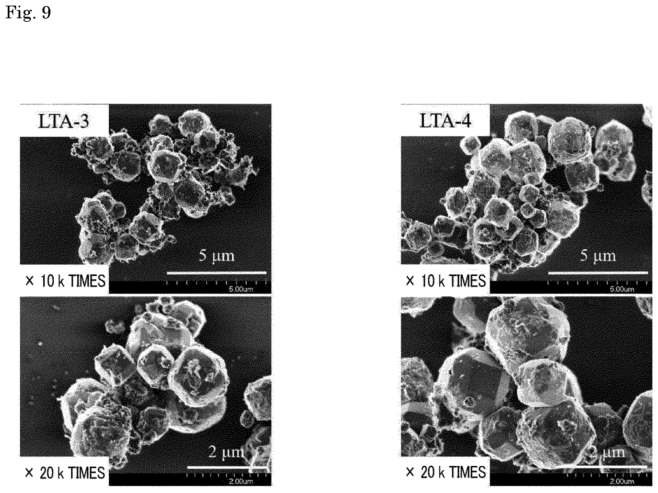

Fig. 9 shows SEM photographs of the zeolite (LTA type) of Example 6 on the right side (LTA-4) and the zeolite (LTA type) of Example 5 on the left side (LTA-3).

[Fig. 10]

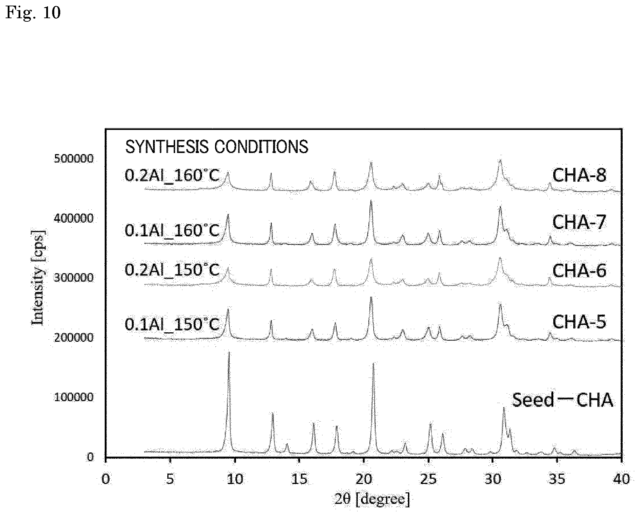

Fig. 10 shows a view of each XRD of a CHA type zeolite used as a seed crystal as Seed-CHA, a zeolite (CHA type) of Example 11 as CHA-5, a zeolite (CHA type) of Example 12 as CHA-6, a zeolite (CHA type) of Example 13 as CHA-7 and a zeolite (CHA type) of Example 14 as CHA-8 sequentially from the bottom.

[Fig. 11]

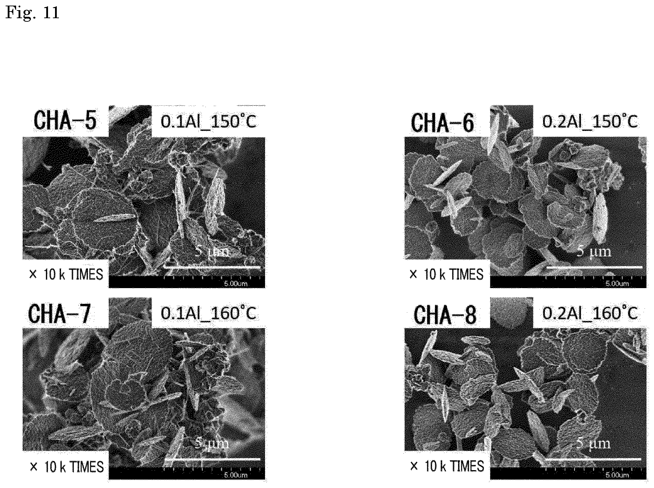

Fig. 11 shows each SEM photograph of the zeolite (CHA type) of Example 11 as CHA-5 on the upper left side, the zeolite (CHA type) of Example 12 as CHA-6 on the upper right side, the zeolite (CHA type) of Example 13 as CHA-7 on the lower left side and the zeolite (CHA type) of Example 14 as CHA-8 on the lower right side.

[Fig. 12]

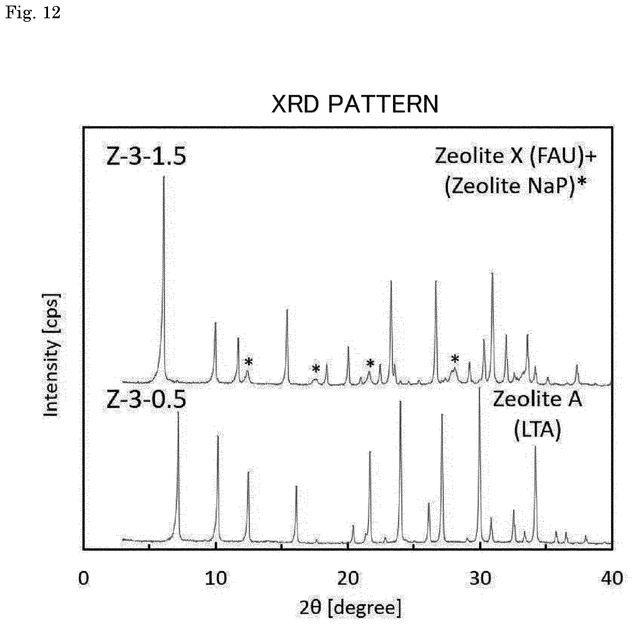

Fig. 12 shows a view of each XRD of a zeolite (FAU type) of Example 16 in the upper tier (Z-3-1.5) and a zeolite (LTA type) of Example 15 in the lower tier (Z-3-0.5). The * mark in the upper tier indicates the peak of zeolite NaP (GIS type).

[Fig. 13]

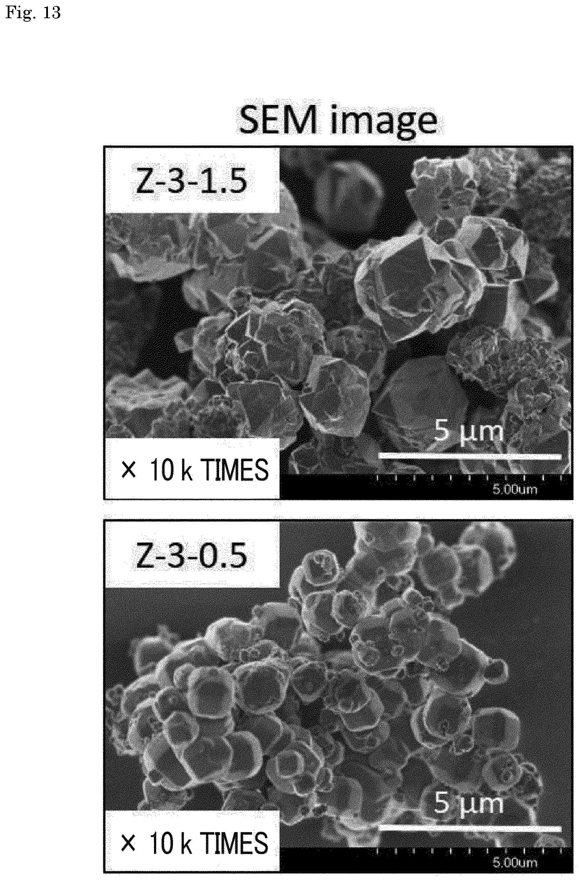

Fig. 13 shows SEM photographs of the zeolite (FAU type) of Example 16 in the upper tier (Z-3-1.5) and the zeolite (LTA type) of Example 15 in the lower tier (Z-3-0.5).

[Fig. 14]

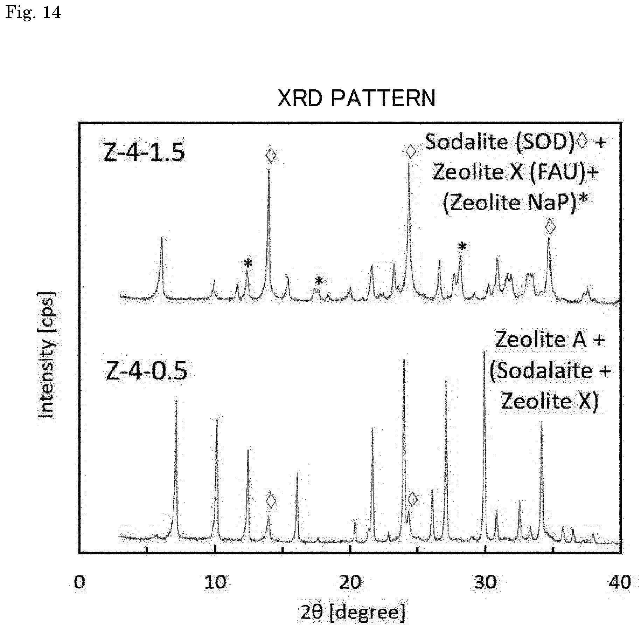

Fig. 14 shows a view of each XRD of a zeolite (FAU type) of Example 17 in the upper tier (Z-4-1.5) and a zeolite (LTA type) of Example 18 in the lower tier (Z-4-0.5). The * mark in the upper tier indicates the peak of zeolite NaP (GIS type). The □ marks in the upper tier and the lower tier indicate the peaks of sodalite (SOD type).

[Fig. 15]

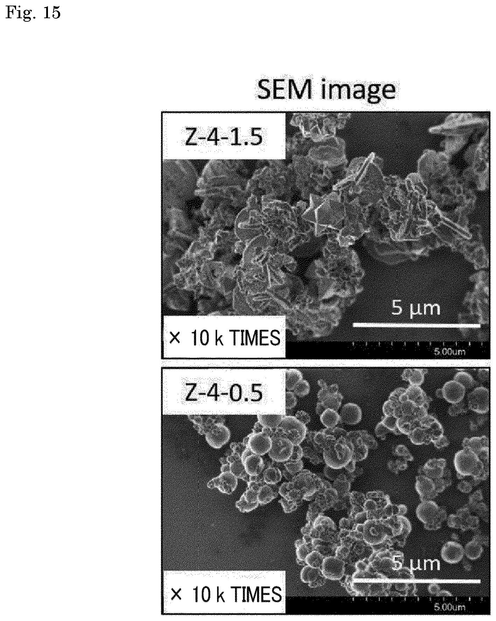

Fig. 15 shows SEM photographs of the zeolite (FAU type) of Example 18 in the upper tier (Z-4-1.5) and the zeolite (LTA type) of Example 15 in the lower tier (Z-3-0.5).

[Description of Embodiments]

An embodiment to be described below shows an example of a representative embodiment of the present technique, and the scope of the present technique is not narrowly interpreted by the embodiment.

Hereinafter, a preferable form for carrying out the present technique will be described with reference to drawings and the like. In the drawings, the same or equivalent elements or members will be given the same reference sign, and duplicate description will not be repeated as appropriate.

Unless particularly otherwise described, percentages in the present specification are a mass-based expression. In addition, the upper limit value and lower limit value of each numerical range can be arbitrarily combined together as desired. The description in the present specification will be made in the following order.

<1. Outline of present technique>
<2. Production method of porous material of present technique>

2-1. Raw material
2-1-1. First Si source composition
2-1-1-1. Composition of first Si source composition
2-1-1-2. Plant-derived Si source and production method thereof
2-1-1-3. Production method of first Si source composition
2-1-1-3-1) Plant-derived material (raw material)
2-1-1-3-2) Carbonization treatment
2-1-1-3-3) Pretreatment of carbonization treatment (preliminary carbonization treatment)
2-1-1-3-4) Si source removal treatment (Si source recovery treatment)
2-1-1-3-4-1) Alkali treatment
2-1-1-3-4-1a) Alkali extraction
2-1-1-3-4-2) Acid treatment
2-1-2. Composition containing first Si source
2-1-3. Porous carbon material after Si source treatment
2-1-4. Second Si source composition
2-1-4-1. Production method of plant-derived second Si source composition
2-1-5. Al source
2-1-6. Alkali metal source
2-1-7. Organic structure-directing agent (OSDA)
2-1-8. Amount of water
2-2. Production step of porous material
2-2-1. Gel composition of raw material
2-2-2. Aging

2-2-3. Hydrothermal synthesis
2-2-4. Recovery of inorganic porous material (preferably zeolite)
2-2-5. Production example of inorganic porous material (preferably zeolite)
2-2-5-1) Production method of LTA type zeolite
2-2-5-2) Production method of CHA type zeolite
2-2-5-3) Production method of FAU type zeolite

<3. Porous material of present technique>
<4. Si source composition for producing porous material>
<5. Each measurement method of present technique>

<1. Outline of present technique>

Plants such as vegetables, grain and timber are in wide use in a broad range of industrial fields such as agriculture, forestry and industry. In the current status, a large amount of a by-product is generated from plants upon harvesting, processing and the like.

Since the use of plants is considered as one of specific measures for climate change, contribution can be made to the global environment by promoting the more effective use of plant-derived by-products or wastes.

Therefore, the present inventors carried out a broad range of studies regarding the effective use of plant-derived by-products or wastes as recovered materials. For example, an efficient increase in grain production is beneficial from the viewpoint of the global population growth, but shells or stems are generated as a by-product or waste at the time of processing whole grains (brown rice, wheat and the like) from grain. For such a by-product or waste generated in a large amount, disposal such as incineration or burial becomes necessary.

In addition, a porous carbon material such as activated carbon or a high-purity carbon material is processed from, for example, shells (for example, coconut shells, walnut shells and rice shells), stems (for example, bamboo and the like), timber and the like. At the time of processing a porous carbon material, the porous carbon material is washed to produce high-purity carbon, but a by-product or waste is generated at this time. This porous carbon material is widely used as an electrode or negative electrode active material for fuel batteries (for example, lithium-ion secondary batteries and the like) or an adsorbent (for, for example, medical uses, air purification, water treatment and the like).

In consideration of such a current status, the present inventors paid attention to a component of liquid waste that is recovered to further increase the purity of a precursor of a porous carbon material at the time of producing the porous carbon material from a plant-derived raw material. Since the recovered material contains silica, the present inventors studied to what highly functional material this recovered material containing silica can be converted as a plant-derived Si source.

In addition, as a result of considerable trial and error, the present inventors found that the use of a plant-derived recovered material containing a first Si source and an Al source as at least raw materials makes it possible to produce a porous material containing Si and Al. Furthermore, the present inventors found that the use of a plant-derived recovered material containing a first Si source, a second Si source, and an Al source as at least raw materials makes it possible to produce a porous material containing Si and Al. Therefore, it was possible to achieve the provision of a technique enabling the effective use of a plant-derived Si source, which is one of the objects of the present technique.

Specifically, it was possible to convert a Si source to be discharged to an inorganic porous material, which is one of highly functional materials, to a valuable material in a production step of a porous carbon material based on a plant-derived raw material. This makes it possible to effectively use a disposed Si source and also makes it possible to reduce the disposal cost. Here, in the present invention, the plant-derived Si source may not be a plant-derived by-product, and a Si source obtained from a plant-derived raw material can be used.

In addition, conventionally, as a raw material of Si sources for inorganic porous materials, only mineral (for example, silica stone, silica sand or the like)-derived silicic acid has been used. Mineral-derived silicic acid is obtained by mining a mineral, firing the mineral by heating at a high temperature of, for example, 1000°C and purifying the mineral, and thus the production energy is high.

On the other hand, the plant-derived recovered material containing a Si source of the present technique can be produced by heating at 500°C to 100°C, which is lower than the firing temperature of the mineral-derived silicic acid.

Therefore, according to the present technique, it was possible to significantly reduce the production energy compared with a case where conventional mineral-derived silicic acid is used, and, in the present technique, it was possible to reuse a plant-derived Si source (for example, a by-product or the like). This is also beneficial from the viewpoint of global warming.

In addition, conventionally, zeolites have been industrially produced from a mineral-based Si source, but the present technique makes it possible to industrially provide zeolites from a plant-based Si source alone.

Minerals in the present technique refer to naturally occurring inorganic crystal substances that are formed by a geological action.

As described above, the present technique is capable of converting a plant-derived Si source to an inorganic porous material, which is one of highly functional materials. The present technique enables the obtainment of an inorganic porous material with a reduced production energy compared with a case where a conventional mineral-derived Si source is used. In addition, in the case of using a plant-derived by-product or the like, it is possible to effectively use a disposed plant-derived by-product, and it is also possible to reduce the disposal cost.

In the present technique, it is possible to produce a variety of inorganic porous materials (preferably silicic acid-based porous materials). Porous materials can be used as, for example, molecular sieves (for example, in petroleum refining), ion exchange materials (for example, in petroleum refining, water purification (for beverages, for ultrapure water and the like), heavy metal adsorption (for example, cesium, strontium and the like)), catalysts and adsorbents (for example, for adsorption of a variety of gases and the like).

The present technique is capable of producing, among these silicic acid-based porous materials, zeolites (zeolites). It is said that zeolites are microporous crystalline aluminosilicates and can be ordinarily represented by $m^{n+}_{x/n}Al_xSi_yO_{2x+2}{}^{yx-} \cdot zH_2O$.

Zeolites can be obtained from naturally occurring minerals by mining or the like from nature. However, it is advantageous that zeolites can be produced by artificial synthesis as in the present technique since it is possible to obtain a variety of zeolites or to obtain zeolite with stable quality.

Zeolites in the present technique are not particularly limited, and it is known that, as the zeolites, for example, there are a variety of structures, such as an A type (LTA), an Y type (FAU), mordenite (MOR), a beta type (BEA), ZSM-5 (MFI), zeolite Y or zeolite X (FAU), SSZ-13 (CHA) and GIS. The notations in the parentheses are the structural codes regulated by the International Zeolite Association.

According to the present technique, zeolites having a variety of structures and properties can be artificially synthesized.

<2. Production method of porous material of present technique>

The present technique is capable of providing, as a production method of a porous material, a method for producing a porous material containing Si and Al in which a first Si source composition containing a plant-derived Si source and an Al source are used as at least raw materials. Furthermore, a second Si source composition is preferably used as a raw material. In addition, the first Si source composition and/or the second Si source composition are preferably plant-derived Si sources (for example, recovered materials, by-products or the like). A typical example of the production method of a porous material of the present technique will be described, but the present technique is not limited thereto.

According to the present technique, it is possible to provide a technique enabling the effective use of a plant-derived Si source. More preferably, a Si source that is generated at the time of producing a product (main product) from a plant raw material (for example, a recovered material, a by-product or the like) can be effectively used. In addition, it is possible to effectively use Si sources that have been conventionally disposed of (for example, recovered materials, by-products and the like). The effects of the present technique are not always limited to effects described herein and may be any effects described in the present disclosure.

2-1. Raw material

2-1-1. First Si source composition

The first Si source composition that is used as a raw material of the present technique is a composition containing a first Si source. The first Si source composition is preferably a plant-derived Si source (for example, a recovered material, a by-product or the like), and at least a Si source (preferably silica) is contained in the by-product or the like. Therefore, the first Si source composition is preferably produced using a plant-derived raw material containing a Si source, the first Si source composition is more preferably obtained by carrying out a treatment for recovering a Si source after a carbonization treatment of the plant-derived raw material at the time of this production, the treatment is preferably an alkali treatment, and the alkali treatment is still more preferably an alkali extract that is obtained by adjusting the NaOH/Si mole ratio (theoretical ratio) in the recovered material.

In the present technique, the by-product refers to, in a step of producing a product that is the main object from a plant raw material, a different product that is generated in association with the step. The Si source is preferably a Si source that has been conventionally disposed of (for example, a recovered material, a by-product or the like), which makes it possible to reduce the disposal cost and to effectively use disposed Si sources (for example, recovered materials, by-products and the like).

2-1-1-1. Composition of first Si source composition

As the first Si source composition of the present technique, a plant-derived Si source to be described below (for example, a recovered material or the like) can be used. Therefore, the composition (here, configuration components and the proportions of the amounts thereof) of the first Si source composition of the present technique is preferably the same as the composition of the plant-derived Si source. In the present technique, the plant-derived Si source is more preferably used as it is (approximately 100 mass%) as the first Si source composition from the viewpoint of enabling effective utilization of disposed Si sources.

In addition, the first Si source composition may be produced by blending an arbitrary component with the plant-derived Si source as necessary, but at least 90 mass% or more of the first Si source composition is preferably the plant-derived Si source and the first Si source composition is more preferably substantially the plant-derived Si source from the viewpoint of the effective use of disposed Si sources.

The form of the first Si source composition is not particularly limited, and examples thereof include a liquid form, a semisolid form, a solid form (for example, a powder form, a crushed form or the like) and the like. In a case where a Si source to be disposed of (for example, a recovered material or the like) is an aqueous solution, the first Si source composition is also preferably used in an aqueous solution state from the viewpoint of enabling to suppress the production energy.

In the production method of the present technique, the use of the plant-derived Si source makes it possible to obtain a variety of porous materials (for example, zeolite MFI type, LTA type, CHA type, Nap (GIS type), FAU type (zeolite X, zeolite Y), mordenite (MOR type), sodalite (SOD type) and the like), and thus it is considered that the plant-derived Si source contributes to the fact that a porous material can be efficiently produced. Furthermore, in the production method of the present technique, the use of the plant-derived Si source makes it possible to more favorably produce an LTA type zeolite pure phase, a CHA type zeolite single phase, almost pure zeolite A (LTA type) and zeolite X (FAU type) and the like, and, at this time, synthesis in the absence of an organic structure-directing agent (OSDA) is also possible. In addition, in order to effectively use the plant-derived Si source, a component that is generated in the production process may be contained to an extent that the effects of the present technique are not impaired.

The composition of the first Si source composition preferably contains at least silicon (Si), aluminum (Al) and an alkali metal (for example, Na, K or the like). The alkali metal is not particularly limited, examples thereof include sodium, potassium, lithium and the like, one or two or more selected from the group of these are preferably used, and sodium is more preferable.

The Si/Al composition ratio (mass/mass) of the first Si source composition is not particularly limited, but a preferable lower limit value thereof is preferably 1 or more, more preferably 10 or more, still more preferably 25 or more, more preferably 50 or more and more preferably 70 or more, and a preferable upper limit value thereof is preferably 300 or less, more preferably 200 or less, still more preferably 150 or less, far still more preferably 120 or less and more preferably 100 or less. A preferably numerical value range of the Si/Al composition ratio (mass ratio) in the first Si composition is more preferably 1 to 300, more preferably 1 to 120 and still more preferably 50 to 100.

The Si/Al composition ratio (mass/mass) of the first Si source composition is not particularly limited, but a preferable lower limit value thereof is preferably 1 or more, more preferably 10 or more, still more preferably 25 or more, more preferably 50 or more and more preferably 70 or more, and a preferable upper limit value thereof is preferably 300 or less, more preferably 200 or less, still more preferably 150 or less, far still more preferably 120 or less and more preferably 100 or less. A preferably numerical value range of the Si/Al composition ratio (mass ratio) in the first Si composition is more preferably 1 to 300, more preferably 1 to 120 and still more preferably 50 to 100. These preferable upper limit value, lower limit value and the like may be the preferable upper limit values and preferable lower limit values of a Si source composition obtained by an alkali treatment with no adjustment of the mole ratio (theoretical ratio) of NaOH/Si and a Si source composition obtained by an acid treatment. In the case of using the first Si source composition having such a Si/Al composition ratio (mass/mass) as a raw material, the second Si source composition and the Al source are desirably used as a raw material, and the use of such a first Si source composition makes it possible to more favorably produce an MFI type zeolite, mordenite (MOR type zeolite) and the like.

In addition, in the case of a first Si source composition obtained by a treatment by alkali extraction that is carried out by adjusting the mole ratio (theoretical ratio) of NaOH/Si, the Si/Al composition ratio (mass/mass) in the first Si source composition is not particularly limited, but a preferable upper limit value thereof is preferably 0.01 or more, more preferably 0.05 or more and still more preferably 0.1 or more, additionally, a preferable upper limit value is preferably 100 or less, more preferably 50 or less and still more preferably 30 or less, and the preferably numerical value range is more preferably 0.01 to 100, more preferably 0.05 to 50 and more preferably 0.1 to 30. In the case of using the first Si source composition obtained by a treatment by alkali extraction that is carried out by adjusting the mole ratio (theoretical ratio) of NaOH/Si as a raw material, it is desirable to use the Al source as a raw material without using the second Si source composition, and the use of such a first Si source composition makes it possible to more favorably produce an LTA type zeolite and a CHA type zeolite. Even in a case where the range of the Si/Al composition ratio (mass/mass) in the first Si source composition is not preferable, the Si/Al composition ratio (mass/mass) may be appropriately adjusted to a desired gel composition ratio in the raw material by adding the Al source to the first Si source composition.

The Si/Na composition ratio (mass/mass) in the first Si source composition is not particularly limited, but a preferable lower limit value thereof is preferably 0.01 or more, more preferably 0.05 or more, still more preferably 0.1 or more and more preferably 0.2 or more, additionally, a preferable upper limit value thereof is preferably 3 or less, more preferably 2.5 or less or 1 or less, and the preferable numerical value range is more preferably 0.01 to 3 and more preferably 0.2 to 2.5.

The Si/Na composition ratio (mass/mass) in the first Si source composition is not particularly limited, but a preferable lower limit value thereof is preferably 0.01 or more, more preferably 0.05 or more and still more preferably 0.1 or more, more preferably 0.2 or more, and a preferable upper limit value thereof is preferably 1 or less, more preferably 0.7 or less, still more preferably 0.5 or less and more preferably 0.3 or less. From the viewpoint of producing an MFI type zeolite or mordenite (MOR type zeolite), a preferable numerical value range of the Si/Al composition ratio (mass ratio) in the first Si composition is more preferably 0.01 to 1 and more preferably 0.2 to 0.5. These preferable upper limit value, lower limit value and the like may be the preferable upper limit values and preferable lower limit values of a Si source composition obtained by an alkali treatment with no adjustment of the mole ratio (theoretical ratio) of NaOH/Si and a Si source composition obtained by an acid treatment. In the case of using the first Si source composition having such a Si/Na composition ratio (mass/mass) as a raw material, the second Si source composition and the Al source are desirably used as a raw material, and the use of such a first Si source composition makes it possible to more favorably produce an MFI type zeolite, mordenite (MOR type zeolite) and the like.

In the case of the first Si source composition obtained by a treatment by alkali extraction that is carried out by adjusting the mole ratio (theoretical ratio) of NaOH/Si, the Si/Na composition ratio (mass/mass) in the first Si source composition is not particularly limited, but a preferable lower limit value thereof is preferably 0.1 or more, more preferably 0.3 or more, 1.0 or more, 1.5 or more or 2.0 or more, and a preferable upper limit value thereof is preferably 3 or less, 2.5 or less, 1.0 or less or 0.7 or less. A preferably numerical value range of the Si/Al composition ratio (mass ratio) in the first Si composition is preferably 0.3 to 2.5.

In the case of more favorably producing CHA type mordenite using the first Si source composition obtained by a treatment by alkali extraction that is carried out by adjusting the mole ratio (theoretical ratio) of NaOH/Si as a raw material, a preferable lower limit value of the Si/Na composition ratio (mass/mass) in the first Si source composition is preferably 1.0 or more, more preferably 1.5 or more and still more preferably 1.8 or more, additionally, a preferable upper limit value thereof is preferably 3.0 or less, more preferably 2.5 or less and still more preferably 2.3 or less, and the preferable numerical value range is more preferably 1.8 to 2.5.

In addition, in the case of more favorably producing LTA type mordenite or an FAU type zeolite using the first Si source composition obtained by a treatment by alkali extraction that is carried out by adjusting the mole ratio (theoretical ratio) of NaOH/Si as a raw material, a preferable lower limit value of the Si/Na composition ratio (mass/mass) in the first Si source composition is preferably 0.1 or more, more preferably 0.3 or more and still more preferably 0.5 or more, additionally, a preferable upper limit value thereof is preferably 1.3 or less, more preferably 1.0 or less and still more preferably 0.8 or less, and the preferable numerical value range is more preferably 0.3 to 1.0.

The content (g/L) of Si (silicon) in the first Si source composition is not particularly limited, but a preferable lower limit value thereof is preferably 10 g/L or more, more preferably 20 g/L or more and still more preferably 25 g/L or more, additionally, a preferable upper limit value thereof is preferably 500 g/L or less, more preferably 450 g/L or less, still more preferably 400 g/L or less and preferably 300 g/L or less, and the preferable numerical value range is more preferably 10 to 500 g/L and more preferably 20 to 300 g/L.

The content (g/L) of Si (silicon) in the first Si source composition is not particularly limited, but a preferable lower limit value thereof is preferably 25 g/L or more, more preferably 50 g/L or more, still more preferably 100 g/L or more, more preferably 150 g/L or more and more preferably 200 g/L or more, and a preferable upper limit value thereof is preferably 500 g/L or less, more preferably 450 g/L or less, still more preferably 400 g/L or less and preferably 300 g/L or less. A preferable numerical value range of the Si content (g/L) in the first Si composition is more preferably 50 to 500 g/L and more preferably 100 to 300 g/L from the viewpoint of producing an MFI type zeolite or mordenite (MOR type zeolite). These preferable upper limit value, lower limit value and the like may be the preferable upper limit values and preferable lower limit values of a Si source composition obtained by an alkali treatment with no adjustment of the mole ratio (theoretical ratio) of NaOH/Si and a Si source composition obtained by an acid treatment. In the case of using the first Si source composition having such a content (g/L) of Si (silicon) as a raw material, the second Si source composition and the Al source are desirably used as a raw material, and the use of such a first Si source composition makes it possible to more favorably produce an MFI type zeolite, mordenite (MOR type zeolite) and the like.

In the case of the first Si source composition obtained by a treatment by alkali extraction that is carried out by adjusting the mole ratio (theoretical ratio) of NaOH/Si, the content (g/L) of Si (silicon) in the first Si source composition is not particularly limited, but a preferable lower limit value thereof is preferably 20 g/L or more, more preferably 23 g/L or more and still more preferably 25 g/L or more or 28 g/L or more, additionally, a preferable upper limit value thereof is preferably 100 g/L or less, more preferably 50 g/L or less and still more preferably 40 g/L or less, 38 g/L or less, 29 g/L or less or the like, and the preferable numerical value range is preferably 20 to 50 g/L.

In the case of more favorably producing CHA type mordenite using the first Si source composition obtained by a treatment by alkali extraction that is carried out by adjusting the mole ratio (theoretical ratio) of NaOH/Si as a raw material, a preferable lower limit value of the content (g/L) of Si (silicon) in the first Si source composition is preferably 20 g/L or more, more preferably 23 g/L or more, still more preferably 24 g/L or more and more preferably 25 g/L or more, additionally, a preferable upper limit value thereof is preferably 33 g/L or less, more preferably 30 g/L or less, still more preferably 29 g/L or less and more preferably 28 g/L or less, and the preferable numerical value range is more preferably 23 to 30 g/L.

In addition, in the case of more favorably producing LTA type mordenite or an FAU type zeolite using the first Si source composition obtained by a treatment by alkali extraction that is carried out by adjusting the mole ratio (theoretical ratio) of NaOH/Si as a raw material, the content (g/L) of Si (silicon) in the first Si source composition may be within a range as described below, a preferable lower limit value thereof is preferably 28 g/L or more, more preferably 30 g/L or more, still more preferably 32 g/L and more preferably 33 g/L or more, additionally, a preferable upper limit value thereof is preferably 40 g/L or less, more preferably 39 g/L, still more preferably 38 g/L or less and more preferably 37 g/L or less, and the preferable numerical value range is more preferably 32 to 38 g/L.

The Na content (g/L) in the first Si source composition is not particularly limited, but a preferable lower limit value thereof is preferably 5 g/L or more and more preferably 10 g/L or more or 50 g/L or more, additionally, a preferable upper limit value thereof is preferably 1000 g/L or less, more preferably 950 g/L or less, still more preferably 900 g/L or less and preferably 850 g/L or less, and the preferable numerical value range is more preferably 5 to 900 g/L.

The Na content (g/L) in the first Si source composition is not particularly limited, but a preferable lower limit value thereof is preferably 100 g/L or more and more preferably 200 g/L or more, still more preferably 300 g/L or more, more preferably 400 g/L or more, more preferably 500 g/L or more and more preferably 600 g/L or more, and a preferable upper limit value thereof is preferably 1000 g/L or less, more preferably 950 g/L or less, still more preferably 900 g/L or less and preferably 850 g/L or less. A preferable numerical value range of the Na content (g/L) in the first Si source composition is more preferably 50 to 900 g/L and more preferably 100 to 850 g/L from the viewpoint of producing an MFI type zeolite or mordenite (MOR type zeolite). These preferable upper limit value, lower limit value and the like may be the preferable upper limit values and preferable lower limit values of a Si source composition obtained by an alkali treatment with no adjustment of the mole ratio (theoretical ratio) of NaOH/Si and a Si source composition obtained by an acid treatment. In the case of using the first Si source composition having such a Si/Na composition ratio (mass/mass) as a raw material, the second Si source composition and the Al source are desirably used as raw materials, and the use of such a first Si source composition makes it possible to more favorably produce an MFI type zeolite, mordenite (MOR type zeolite) and the like.

In the case of the first Si source composition obtained by a treatment by alkali extraction that is carried out by adjusting the mole ratio (theoretical ratio) of NaOH/Si, the Na content (g/L) in the first Si source composition is not particularly limited, but a preferable lower limit value thereof is preferably 5 g/L or more, more preferably 8 g/L or more and still more preferably 10 g/L or more, 20 g/L or more, 30 g/L or more, 40 g/L or more or 50 g/L or more, additionally, a preferable upper limit value thereof is preferably 100 g/L or less, more preferably 80 g/L or less, still more preferably 70 g/L or less, more preferably 60 g/L or less or the like, and the preferable numerical value range is more preferably 10 to 80 g/L.

In the case of more favorably producing a CHA type zeolite using the first Si source composition obtained by an alkali treatment by the adjustment of the mole ratio (theoretical ratio) of NaOH/Si as a raw material, a preferable lower limit value of the Na content (g/L) in the first Si source composition is preferably 5 g/L or more, more preferably 8 g/L or more, still more preferably 9 g/L and more preferably 10 g/L or more, additionally, a preferable upper limit value thereof is preferably 20 g/L or less, more preferably 18 g/L or less, still more preferably 16 g/L or less, more preferably 15 g/L or less and more preferably 14 g/L or less, and the preferable numerical value range is more preferably 8 to 15 g/L.

In addition, in the case of more favorably producing an LTA type zeolite or a FAU type zeolite using the first Si source composition obtained by an alkali treatment by the adjustment of the mole ratio (theoretical ratio) of NaOH/Si as a raw material, a preferable lower limit value of the Na content (g/L) in the first Si source composition is preferably 20 g/L or more, more preferably 30 g/L or more, still more preferably 40 g/L, more preferably 45 g/L or more and more preferably 50 g/L or more, additionally, a preferable upper limit value thereof is preferably 80 g/L or less, more preferably 70 g/L or less, still more preferably 65 g/L or less and more preferably 60 g/L or less, and the preferable numerical value range is more preferably 30 to 70 g/L.

The pH of the first Si source composition is preferably within the alkali region (preferably 8 to 14), preferably 10 or higher, more preferably 11 or higher, still more preferably 12 or higher and more preferably 13 or higher.

The content of each element of the first Si source composition, each composition ratio and each mass ratio can be measured by the ICP atomic emission spectroscopy and are preferably measured in a state of g/1 L (volume) of water.

2-1-1-2. Plant-derived Si source and production method thereof

The plant-derived Si source that is used in the present technique (for example, a recovered material, a by-product, waste or the like) is preferably the same composition (here, the configuration components and the proportions of amounts thereof) as the above-described first Si source composition. Specifically, the Si/Al composition ratio (mass ratio), Si/Na composition ratio (mass ratio), Si content (g/L), silica content (g/L), Al content (g/L), content (g/L) of the alkali metal (for example, Na), content of water and the like in the plant-derived Si source are preferably the same as the composition of the above-described first Si source composition.

"Plant" in the plant-derived Si source is not particularly limited, and examples thereof include plants that can be used in the production of a porous carbon material to be described below (for example, terrestrial plants, algae and the like). Among these, gramineous plants are preferable from the viewpoint of the effective use, and plants having a Si content rate of preferably 4 mass% or more and more preferably 5 mass% or more at a portion that is used are preferable. Among the gramineous plants, one or two or more selected from the group consisting of paddy (rice) and wheat (for example, barley, common wheat, rye and the like) are more preferable. In addition, the portion of the plant that is used is not particularly limited, but is preferably a hull and/or a stem and more preferably a hull (shell). In rice (paddy), a rice husk and/or a straw is preferable from the viewpoint of the production energy or the viewpoint of the effective use.

2-1-1-3. Production method of first Si source composition

In the present technique, the first Si source composition is preferably a recovered material (more preferably a by-product, waster or the like) obtained by using a plant-derived material as a raw material, carbonizing the plant-derived raw material and recovering a Si source from this carbonized substance by a treatment such as a Si source recovery treatment, a Si source removal treatment or a washing treatment.

Furthermore, the first Si source composition is preferably a Si source (for example, a by-product or the like) generated in a production step of a porous carbon material (main product) in which a plant-derived material is used as a raw material from the viewpoint of the effective use of waste.

More preferably, the first Si source composition in the present technique is preferably a substance removed when a plant-derived raw material is carbonized and then a Si source is removed.

A production method of the first Si source composition of the present technique is not particularly limited. The production method of the first Si source composition of the present technique can be produced with reference to, for example, PTL 1 (JP 2008-273816 A), PTL 2 (JP 2012-179589 A) or the like.

Furthermore, a more specific example of the production method of the first Si source composition will be described below, but the present technique is not limited thereto.

The production step of a porous carbon material (main product) in which a plant-derived material is used as a raw material will be described.

The production step of a porous carbon material preferably includes a carbonization treatment of a plant-derived raw material using a plant-derived material as the raw material and the recovery of a Si source after the carbonization treatment or the removal of the Si source. This makes it possible to obtain a plant-derived Si source that is used as the first Si source composition of the present technique.

2-1-1-3-1) Plant-derived material (raw material)

The plant-derived material is not particularly limited, examples thereof include grain such as rice (paddy), wheat (for example, barley, common wheat, rye and the like), Echinochloa esculenta (Japanese millet) and Hungarian grass (foxtail millet), gramineous plants such as reeds; marine plants such as brown seaweed and laminaria; and the like, the plant-derived material is not limited thereto, and examples thereof further include Tracheophyta that live on land, pteridophyte, bryophyte, algae, marine plants and the like. Among these, gramineous plants are preferable from the viewpoint of the effective use, furthermore, among these, rice (paddy) and/or wheat are preferable, and rice (paddy) is more preferable.

A portion that is used as the raw material is not particularly limited, but a hull (so-called shell), a stem and/or the like are preferable from the viewpoint of the effective use or the viewpoint of the production energy. More specifically, chaff (rice husk), a straw (straw), a reed (reed), a seaweed stem and the like are preferable. One or two or more selected from the group consisting of these materials can be used. It is known that, ordinarily, approximately 10 to 30 mass% of silica (4 to 15 mass% of silicon) is contained in the hulls (so-called shells) of rice and wheat (more preferably a rice husk).

In addition, the shape or form of the plant-derived material is also not particularly limited and may be, for example, a rice husk or a straw itself or may be a dried product. Furthermore, plant-derived materials that have undergone a variety of treatments such as a fermentation treatment, a roasting treatment and an extraction treatment in a food and beverage process of beer, whisky or the like can also be used. More preferably, from the viewpoint of recycling industrial wastes, rice husks, straws, wheat hulls and the like after grain threshing or a hull removal treatment of cleaned barley or the like are preferably used. This processed straw or rice husk can be easily procured in large quantities from, for example, agricultural cooperative societies, liquor manufacturers or food companies.

In addition, the silicon content rate in the plant-derived raw material is not particularly limited, but is preferably 4 mass% or more, more preferably 5 mass% or more, still more preferably 7 mass% or more, far still more preferably 9 mass% or more, and the upper limit value thereof may be, for example, 15 mass%, 14 mass% or 13 mass% or less. In addition, silicon is preferably contained in the plant-derived raw material as an amorphous silica component.

Ordinarily, it is said that the silicon content rate in a rice husk is approximately 9 mass% and the silicon content rate in straw is approximately 7 mass%. In addition, silicon is contained in a rice husk or a straw as an amorphous silica component, and the silicon content rate in a rice husk used in examples to be described below was approximately 9 mass%.

2-1-1-3-2) Carbonization treatment

The carbonization treatment is not particularly limited, and a porous carbon material, which is a main product, is preferably obtained from the plant-derived material. The carbonization treatment is preferably a carbonization treatment of the plant-derived material at 400°C to 1400°C, and the temperature of the carbonization treatment is more preferably 450°C or higher and still more preferably 500°C to 800°C.

In the present technique, a material after the carbonization treatment and before a Si source removal (recovery) treatment (for example, an acid or alkali treatment or the like) is also referred to as "porous carbon material precursor" or "carbonaceous substance".

In addition, the plant-derived raw material may be, before the carbonization treatment to be described below, crushed as desired to obtain desired particle sizes or may be classified or the plant-derived raw material may be washed in advance.

Here, the carbonization treatment means, ordinarily, the conversion of an organic substance (for example, the plant-derived material) to a carbonaceous substance by a heat treatment (for example, refer to JIS M0104-1984).

Examples of an atmosphere for the carbonization treatment include oxygen-blocked atmospheres, and specific examples thereof include an atmosphere in which the plant-derived material is put into a kind of steamed state such as a vacuum atmosphere or an inert gas atmosphere. The atmosphere is preferably an inert gas, the inert gas is not particularly limited, and, for example, a nitrogen gas, an argon gas and/or the like can be used, but a nitrogen gas is more preferable.

A temperature raising rate up to the carbonization temperature is not particularly limited; however, preferably, a lower limit value thereof under the above-described atmosphere is preferably 1 °C/minutes or faster, more preferably 3 °C/minute or faster, still more preferably 4 °C/minute or faster and far still more preferably 5 °C/minute or faster. In addition, preferably, an upper limit value thereof under the above-described atmosphere is preferably 10 °C/minute or slower, more preferably 8 °C/minute or slower and still more preferably 6 °C/minute or slower. The preferable range of the temperature raising rate is preferably 4°C to 6 °C/minute under the above-described atmosphere. The control of the temperature raising rate is not required as long as the temperature of the carbonization treatment can be controlled without controlling the temperature raising rate in the present technique as in the case of the production of a carbonized product for an active carbon raw material that is ordinarily carried out across the globe.

In addition, preferably, the upper limit of a carbonization treatment time is not particularly limited, but is preferably 10 hours or shorter and more preferably 7 hours or shorter. In addition, the lower limit of the carbonization treatment time is preferably set to a time long enough for the plant-derived material to be reliably carbonized, and examples thereof include 0.5 hours or longer, 1 hour or longer and the like.

The obtained porous carbon material precursor or porous carbon material may be crushed as desired to obtain desired particle sizes or may be classified. Alternatively, the porous carbon material after an activation treatment may be crushed as desired to obtain desired particle sizes or may be classified.

2-1-1-3-3) Pretreatment of carbonization treatment (preliminary carbonization treatment)

While also depending on the plant-derived material to be used, a pretreatment is preferably carried out before the carbonization treatment of the plant-derived material. Examples thereof include a preliminary heating treatment, a pretreatment using a solvent, and the like.

As the preliminary heating treatment, a heating treatment (preliminary carbonization treatment) is preferably carried out on the plant-derived material at a temperature lower than the temperature for the carbonization treatment (for example, 400°C to 700°C) in an oxygen-blocked state.

This makes it possible to extract a tar component that may be generated in the process of the carbonization treatment, and consequently, it is possible to reduce or remove the tar component that may be generated in the process of the carbonization treatment. Therefore, it is possible to reduce or remove the tar component in the plant-derived Si source (for example, a recovered material, a by-product or the like).

As the "oxygen-blocked state" in the preliminary carbonization treatment, the above-described atmosphere for the "carbonization treatment" can be adopted, and examples thereof include a nitrogen gas, an argon gas and the like. Examples of a preferable material on which the heating treatment is carried out in an inert gas atmosphere include plants that generate a large amount of pyroligneous acid (tar or a light petroleum oil component).

In addition, before the preliminary carbonization treatment, depending on the plant-derived material to be used, the treatment can be appropriately changed, and a treatment for reducing a mineral component or moisture that is contained in the plant-derived material in advance or a treatment for preventing the generation of an abnormal odor in the process of the carbonization treatment is preferable.

For example, a pretreatment using an alcohol (for example, an alcohol having 1 to 3 carbon atoms such as methyl alcohol, ethyl alcohol or isopropyl alcohol or the like) is preferably carried out on the plant-derived material. This pretreatment using an alcohol makes it possible to reduce the mineral component or moisture or prevent the generation of an abnormal odor. Examples of this pretreatment using an alcohol include immersion, spraying and the like, and immersion is preferable.

In addition, examples of a preferable material on which the pretreatment using an alcohol is carried out include marine algae containing a large amount of iodine or a variety of minerals.

2-1-1-3-4) Si source removal treatment (Si source recovery treatment)

The Si source removal treatment (Si source recovery treatment) in the present embodiment is not particularly limited, and examples thereof include an acid or alkali treatment and the like. This treatment for removing (recovering) the Si source makes it possible to remove (recover) the Si source from the plant-derived raw material after the carbonization treatment (porous carbon material precursor, carbonaceous substance or porous material). Therefore, it is possible to recover the plant-derived Si source, and this recovery makes it possible to obtain a recovered material containing the Si source (plant-derived Si source).

In the present technique, this plant-derived Si source (for example, the recovered material, by-product or the like containing the Si source) can be used as the composition containing a first Si source.

Here, the Si source is not particularly limited as long as the Si source is a silicon component, and examples thereof include silicon oxides (so-called silica) such as silicon dioxide, silicon oxide and silicate.

Examples of the Si source removal treatment (Si source recovery treatment) include an acid or alkali treatment (preferably an alkali treatment), a dry etching method, a high-temperature firing treatment and the like.

The recovered material containing the Si source of the present technique is preferably obtained by recovering a treated liquid waste, a washed liquid waste or the like generated in the process of this Si source removal treatment (Si source recovery treatment), and, in particular, an acid or alkali-treated liquid of the porous carbon material precursor is preferable. In addition, the recovered material containing the Si source of the present technique can also be obtained by further carrying out a high-temperature firing treatment on the treatment product after the carbonization treatment.

In addition, the recovered material containing the Si source of the present technique is preferably adjusted such that the pH of the solution becomes alkaline from the viewpoint of obtaining an inorganic porous material of the present technique, and the pH is more preferably 8 or higher, still more preferably 11 or higher and far still more preferably 13 or higher. As an alkali that is used for the alkali adjustment at this time, an alkali in the section <alkali treatment> to be described below can be adopted, and, in particular, sodium hydroxide is preferable.

The acid or alkali treatment, which is preferable as the Si source removal (recovery) treatment, will be described below.

Specifically, when the acid or alkali treatment is carried out after the carbonization treatment, it is possible to remove (or recover) the silicon component in the plant-derived material from the porous carbon material precursor or the porous carbon material.

In addition, the silicon component in the carbonized plant-derived material may be removed based on a dry etching method.

In addition, it is possible to remove a mineral component contained in the carbonized plant-derived material by immersing the carbonized plant-derived material in an inorganic acid such as hydrochloric acid, nitric acid or sulfuric acid and to contain this mineral component in the recovered material containing the Si source.

A more preferable Si source removal (recovery) treatment is to treat the porous carbon material precursor with an acid or an alkali. Examples of a more specific treatment method include a method in which the porous carbon material precursor is immersed in an acid or alkali aqueous solution, a method in which the porous carbon material precursor and an acid or an alkali are reacted in a gaseous phase and the like. A more preferable Si source recovery treatment is preferably an alkali treatment.

2-1-1-3-4-1) Alkali treatment

In the case of carrying out the Si source removal treatment (Si source recovery treatment) with an alkali (base), examples of the alkali that is used include a hydroxide, an oxide and the like, and, among these, a hydroxide that is easy to handle is preferable. Furthermore, examples of the hydroxide include an alkali hydroxide metal salt, an alkali earth hydroxide metal salt and the like, and, among these, from the viewpoint of obtaining a Si source composition that is a raw material of an inorganic porous material, an alkali hydroxide metal salt (for example, sodium hydroxide, potassium hydroxide or the like) is preferable, and sodium hydroxide is more preferable.

In addition, the temperature of the alkali treatment is not particularly limited, but a preferable lower limit value thereof is preferably 0°C or higher, more preferably 20°C or higher, still more preferably 50°C or higher, more preferably 60°C or higher and more preferably 70°C or higher, additionally, a preferable upper limit value thereof is preferably 300°C or lower, more preferably 130°C or lower, still more preferably 120°C or lower and more preferably 110°C or lower, and the preferable numerical range is preferably 0°C to 300°C, more preferably 20°C to 120°C and more preferably 70°C to 110°C.

In addition, the time of the alkali treatment is not particularly limited, but a preferable lower limit value thereof is preferably 3 hours or longer, more preferably 6 hours or longer, still more preferably 8 hours or longer, more preferably 12 hours or longer and still more preferably 18 hours or longer, a preferable upper limit value thereof is not particularly limited, the treatment may be carried out for a long period of time; however, from the viewpoint of the operation efficiency, the preferable upper limit value is preferably 48 hours or shorter, more preferably 30 hours or shorter, still more preferably 18 hours or shorter and more preferably 15 hours or shorter. It is preferable to carry out the alkali treatment additionally for 0.5 to 2 hours (100°C to 120°C) in a pressure-resistant container as necessary.

From the viewpoint of the operation efficiency, an alkali solution is preferably used in the alkali treatment, and the alkali solution is more preferably in an aqueous solution state. The pH at the time of this treatment needs to be in the alkali region and, preferably, is preferably 9 or higher, more preferably 10 or higher, still more preferably 11 or higher, more preferably 12 or higher and more preferably 13 or higher.

In addition, the concentration of an alkali metal in the aqueous solution that is used in the alkali treatment is not particularly limited, but is preferably 5 to 50 mass% from the viewpoint of the handling.

2-1-1-3-4-1a) Alkali extraction

As the first Si source composition, a recovered material containing the Si source obtained by a treatment by alkali extraction that is carried out by adjusting the mole ratio (theoretical ratio) of NaOH/Si after the carbonization treatment of the plant-derived material (hereinafter, also referred to as "alkali extract") is preferably used from the viewpoint of improving the efficiency of the production of the inorganic porous material (preferably an LTA type or a CHA type) of the present technique.

The present inventors studied a treatment of the treatment product after the carbonization treatment of the plant-derived material (hereinafter, also referred to as "carbonization treatment product") by alkali extraction that is carried out by setting the mole ratio (theoretical ratio) of NaOH/Si in the alkali extract and adjusting this mole ratio. As a result, it was found that the extraction efficiency of the Si source from the carbonization treatment product can be improved by setting the mole ratio (theoretical ratio) of NaOH/Si in the alkali extract and adjusting the mole ratio to become this mole ratio to alkali-extract the Si source composition from the carbonization treatment product, one or two or more zeolites selected from an LTA type zeolite, a CHA type zeolite, an FAU type zeolite and the like can be more purely produced by using this alkali extract as the first Si source composition and, furthermore, the second Si source composition may not be used as a raw material. In addition, the present inventors also found that the use of this alkali extraction also makes it possible to treat a large amount of the carbonization treatment product and, furthermore, the extraction efficiency of the Si source from the carbonization treatment product is favorable, and thus it is also possible to further improve the quality of a porous carbon material that is obtained from the carbonization treatment product.

As described above, when the recovered material containing the Si source obtained by the alkali extraction is used as the first Si source composition, which is a raw material, it is possible to more favorably produce an inorganic porous material (preferably an LTA type zeolite or a CHA type zeolite). Furthermore, this recovered material containing the Si source obtained by the alkali extraction can be used to more favorably produce an LTA type zeolite and/or a CHA type zeolite. The use of this recovered material containing the Si source obtained by the alkali extraction makes it possible to more favorable produce an LTA type zeolite pure phase or a CHA type zeolite single phase.

In addition, for the Si source composition obtained with no adjustment of the mole ratio (theoretical ratio) of NaOH/Si, the gel composition ratio of the raw material is preferably adjusted using the second Si source composition; however, for the Si source composition obtained by the treatment by the alkali extraction that is carried out by adjusting the mole ratio (theoretical ratio) of NaOH/Si, there is an advantage of not adjusting the gel composition ratio of the raw material using the second Si source composition.

Regarding the materials, the carbonization treatment, the alkali treatment as the Si source recovery treatment in the alkali extraction, the description of the "2-1-1-3-4-1) Alkali treatment" can be appropriately adopted, and more preferable conditions will be described below.

As the plant-derived material at the time of obtaining the carbonization treatment product that is used in the alkali extraction, preferably, gramineous plants are preferable, a hull and a stem are more preferable, and the hulls (so-called shells) of rice and/or wheat are still more preferable.

A preferable temperature of the alkali extraction is not particularly limited, but a preferable lower limit value thereof is preferably 50°C or higher, more preferably 60°C or higher and more preferably 70°C or higher, additionally, a preferable upper limit value thereof is preferably 130°C or lower, more preferably 120°C or lower, still more preferably 110°C or lower, more preferably 100°C or lower and more preferably 90°C or lower, and the preferable numerical range is preferably 50°C to 120°C and more preferably 60°C to 100°C.

A preferable time of the alkali extraction is not particularly limited, but a preferable lower limit value thereof is preferably 2 hours or longer, more preferably 6 hours or longer, more preferably 8 hours or longer, more preferably 12 hours or longer and more preferably 18 hours or longer, additionally, a preferable upper limit value thereof is not particularly limited, the treatment may be carried out for a long period of time; however, from the viewpoint of the operation efficiency, the preferable upper limit value is preferably 60 hours or shorter, more preferably 48 hours or shorter, still more preferably 36 hours or shorter, more preferably 30 hours or shorter and more preferably 28 hours or shorter, and the preferable numerical value range is preferably 2 to 36 hours and more preferably 6 to 30 hours. The alkali extraction may be additionally carried out for 0.5 to 2 hours (100°C to 120°C) in a pressure-resistant container as necessary.

Preferable alkali extraction is more preferably carried out at 50°C to 130°C for 8 to 48 hours and still more preferably carried out at 60°C to 110°C for 18 to 30 hours.

In the alkali treatment, the amount of water that is used for the alkali treatment with respect to 1 part by mass of the carbonization treatment product is preferably 1 to 10 parts by mass and more preferably 3 to 8 parts by mass.

After the alkali extraction, a post treatment such as filtration may be carried out in a filtration device or the like configured to remove a suspended solid, an insoluble matter or the like from the recovered material by filtration or the like, this makes it possible to remove the suspended solid, the insoluble matter or the like in the recovered material, and thus improvement in the quality of an inorganic porous material to be produced afterwards is also possible. As the filtration, well-known industrial filtration can be used.

Regarding the mole ratio (theoretical ratio) of NaOH/Si in the alkali extraction of the present technique, from the viewpoint of the Si extraction efficiency and the viewpoint of producing a desired zeolite, a preferable lower limit value is preferably 0.1 or more, more preferably 0.3 or more, and a preferable upper limit value thereof is not particularly limited and is, for example, 4 or less, 3.5 or less, 3 or less or the like. A preferable numerical value range of the mole ratio (theoretical ratio) of NaOH/Si is preferably 0.1 to 4, and the first Si source composition suitable for an arbitrary zeolite can be obtained by appropriately adjusting the mole ratio (theoretical ratio) of NaOH/Si within this range. Furthermore, the alkali extraction of the present technique is preferable from the viewpoint of improvement in the mass production capability of a porous material since the adjustment of the mole ratio (theoretical ratio) of NaOH/Si increases the Si extraction efficiency byapproximately 80% or more at a mole ratio of 0.5 or more and makes it possible to increase the Si extraction efficiency to 100% at a mole ratio of 1.0 to 2.0. In addition, the use of the recovered material containing the Si source (preferably liquid extract) obtained by the alkali extraction that is carried out by appropriately adjusting this mole ratio (theoretical ratio) of NaOH/Si also makes it possible to efficiently produce an LTA type zeolite, a CHA type zeolite, an FAU type zeolite and the like with more favorable quality.

Furthermore, in the case of producing an LTA type zeolite, it is preferable to adjust the mole ratio (theoretical ratio) of NaOH/Si to preferably 2 to 4, more preferably 3 to 4 and still more preferably 2.5 to 3.5, it is more preferable to produce a raw material with a gel composition ratio preferable for an LTA type zeolite using the first Si source composition, the Al source and appropriate water as at least the raw materials, and it is still more preferable to add the Al source such that the Si/Al composition ratio (mass/mass) at this time reaches 1.0 to 2.0.

Furthermore, in the case of producing an FAU type zeolite, it is preferable to adjust the mole ratio (theoretical ratio) of NaOH/Si to preferably 2 to 4, more preferably 3 to 4 and still more preferably 2.5 to 3.5, it is more preferable to produce a raw material with a gel composition ratio preferable for an FAU type zeolite using the first Si source composition, the Al source and appropriate water as at least the raw materials, and it is still more preferable to add the Al source such that the Si/Al composition ratio (mass/mass) at this time reaches 0.1 to 1.0.

Furthermore, in the case of producing a CHA type zeolite, it is preferable to adjust the mole ratio (theoretical ratio) of NaOH/Si to preferably 0.1 to 1.0, more preferably 0.2 to 0.9 and still more preferably 0.3 to 0.8, and it is more preferable to produce a raw material with a gel composition ratio preferable for a CHA type zeolite using the first Si source composition, the Al source and an alkali metal source (preferably Na and K) as at least the raw materials.

The "Si extraction efficiency" in the alkali extraction of the present technique is a value that can be obtained by [Si measured concentration (mol/L) of plant-derived material ash/Si theoretical concentration (mol/L) of plant-derived material ash] $\times$ 100 (%) and can be obtained by, for example, in the case of a rice husk, [Si measured concentration (mol/L) of rice husk charcoal/Si theoretical concentration of rice husk charcoal of 1.20 mol/L] × 100 (%).

As an example, the amount of Si in the "mole ratio of NaOH/Si" in the alkali extraction can be calculated by the weight residue by TG (thermogravimetric analysis) (for example, the weight residue of a rice husk of 42%) × the Si content rate of material ash (for example, the Si content rate of rice husk charcoal of 90%).

Here, these weight residue and Si content rate of rice husk charcoal are not particularly limited to those of the rice husk and may be the weight residue and Si content rate of material ash of a different plant-derived material. In addition, the weight residue by TG and the Si content rate may be average values obtained by extracting a plurality of samples from 1 lot of the plant-derived material.

The Si measured concentration (mol/L) can be measured using the ICP atomic emission spectroscopy (ICP-AES). The Na measured concentration (mol/L) can be measured using the atomic absorption spectrometry (AAs).

The recovered material containing the plant-derived Si source obtained by the alkali extraction is preferably a liquid form such as an aqueous solution.

The Si measured concentration (mol/L) of the alkali extract is mainly attributed to the alkali concentration in the alkali extraction, but a preferable lower limit value thereof is preferably 0.6 or more, more preferably 0.7 or more, still more preferably 0.8 or more and more preferably 0.9 or more and a preferable upper limit value thereof is not particularly limited, but is preferably 1.3 or less, more preferably 1.2 or less and still more preferably 1.1 or less.

Regarding the Na measured concentration (mol/L) of the alkali extract, a preferable lower limit value thereof is preferably 0.3 or more, more preferably 0.4 or more and still more preferably 0.5 or more and a preferable upper limit value thereof is preferably 2 or less and more preferably 1.5 or less.

In a case where the alkali extract is used as an LTA type zeolite and/or an FAU type zeolite, regarding the Na measured concentration (mol/L) of the alkali extract, a preferable upper limit value thereof is preferably 0.8 mol/L or less, and the numerical value range is more preferably 0.3 to 0.8 mol/L.

In a case where the alkali extract is used as a CHA type zeolite, regarding the Na measured concentration (mol/L) of the alkali extract, a preferable lower limit value thereof is preferably 0.7 mol/L or more and more preferably 0.8 mol/L or more and the numerical value range is more preferably 0.8 to 1.5 mol/L.

In this alkali extract, in a case where a gramineous plant, preferably, a rice husk is used as a material, it is possible to easily extract and recover the gramineous plant at a Si measured concentration in the alkali extract within a range of 0.9 to 1.1 mol/L, and, in the alkali extraction, a gramineous plant, preferably a rice husk is desirably used as a material. Furthermore, regardless of the amount of a hydroxide used that is used in the alkali extraction, this Si measured concentration or extraction efficiency is approximately the same and is thus desirable from the viewpoint of enabling to provide recovered material having stable quality.

In addition, regarding the mole ratio (theoretical ratio) of NaOH/Si at the time of the alkali extraction, from the viewpoint of the production of a CHA type zeolite, a preferable lower limit value is preferably 0.1 or more, more preferably 0.3 or more, additionally, a preferable upper limit value thereof is preferably 1.0 or less and more preferably 0.8 or less, and a preferable numerical value range is more preferably 0.3 to 0.8. The use of the first Si source composition obtained by carrying out the alkali extraction so as to obtain this mole ratio of NaOH/Si after the carbonization treatment makes it possible to easily produce a CHA type zeolite without using the second Si source composition and, furthermore, makes it possible to produce a single-phase CHA type zeolite in the absence of an OSDA. In addition, a CHA type zeolite can also be obtained by drying without firing after the drying. The mass production of a CHA type zeolite is also possible. Therefore, the present technique is capable of providing the first Si source composition that is intended to produce a CHA type zeolite or that is used to produce a CHA type zeolite and is capable of providing a composition for producing a CHA type zeolite containing the first Si source composition and a production method of a CHA type zeolite using the first Si source composition.

In addition, regarding the mole ratio (theoretical ratio) of NaOH/Si at the time of the alkali extraction, from the viewpoint of the production of an LTA type zeolite and/or an FAU type zeolite, a preferable lower limit value is preferably 1.0 or more, more preferably 2.0 or more, still more preferably 2.5 or more and more preferably 3.0 or more, additionally, a preferable upper limit value thereof is preferably 4.0 or less and more preferably 3.5 or less, and a preferable numerical value range is more preferably 2.5 to 3.5. The use of the first Si source composition obtained by carrying out the alkali extraction so as to obtain this mole ratio (theoretical ratio) of NaOH/Si after the carbonization treatment makes it possible to easily produce an LTA type zeolite without using the second Si source composition and, furthermore, makes it possible to produce a single-phase LTA type zeolite. In addition, an LTA type zeolite can also be obtained by drying without firing after the drying. The mass production of an LTA type zeolite is also possible. Therefore, the present technique is capable of providing the first Si source composition that is intended to produce an LTA type zeolite or that is used to produce an LTA type zeolite and is capable of providing a composition for producing an LTA type zeolite containing the first Si source composition and a production method of an LTA type zeolite using the first Si source composition.

In the case of removing (or recovering) the silicon component (for example, silicon dioxide) contained in the porous carbon material precursor with a sodium hydroxide aqueous solution, when the sodium hydroxide aqueous solution is heated, silicon dioxide reacts as shown by the following chemical formula (A) and is removed as sodium

silicate ($Na_2SiO_3$), and a porous carbon material can be obtained. In addition, in a case where sodium hydroxide is reacted in a gaseous phase and treated, the solid of sodium hydroxide reacts as shown by the chemical formula (A) by being heated and is removed as sodium silicate ($Na_2SiO_3$), and a porous carbon material can be obtained. Furthermore, an alkali-treated porous carbon material is preferably washed and dried.

$$SiO_2 + 2NaOH \rightarrow Na_2SiO_3 + H_2O \quad (A)$$

In addition, a solution that is used for the washing is not particularly limited, but water is preferably used since it is easy to effectively use the Si source recovered in the production of the porous material of the present technique (for example, a recovered material, a by-product or the like) in an aqueous solution. Examples of a water-based solvent include water, alcohol, acetone and the like, and one or two or more selected from the group consisting of these can also be used as necessary. As the alcohol, the alcohol at the time of the above-described "pretreatment" can be adopted, and ethyl alcohol is preferable.

As described above, the process of an alkali treatment for removing (recovering) the Si source generates an alkali treatment liquid waste (a liquid waste after the alkali treatment, a liquid waste after washing or the like), and thus it is possible to obtain a recovered material containing the Si source of the present technique by recovering these liquid wastes. In the present technique, this recovered material containing the plant-derived Si source is preferably used as the first Si source composition. In addition, a liquid waste containing plant-derived silica (hereinafter, also referred to as "silica liquid waste") is preferably used as this recovered material containing the plant-derived Si source in the production of the porous material of the present technique.

2-1-1-3-4-2) Acid treatment

In the case of carrying out a treatment for the removal of the Si source with an acid, the acid that is used is not particularly limited, examples thereof include fluorine compounds exhibiting the acidity such as hydrogen fluoride, hydrofluoric acid, ammonium fluoride, calcium fluoride and sodium fluoride, and one or two or more selected from the group consisting of these can be used.

In the case of using the fluorine compound, the amount of a fluorine element preferably becomes 4 times the amount of a silicon element in the silicon component contained in the porous carbon material precursor with hydrofluoric acid, and the concentration of a fluorine compound aqueous solution is preferably 10 mass% or more. In the case of removing the silicon component (for example, silicon dioxide) contained in the porous carbon material precursor, silicon dioxide reacts with hydrofluoric acid as shown by a chemical formula (B) or a chemical formula (C) and is removed as hexafluorosilicic acid ($H_2SiF_6$) or silicon tetrafluoride ($SiF_4$), and a porous carbon material can be obtained. In addition, after that, the porous carbon material is preferably washed and dried. Regarding the washing, the order of the washing in the above-described <alkali treatment> can be adopted.

In the case of the treatment with the acid, it is possible to remove a mineral component contained in the porous carbon material precursor by a treatment with an inorganic acid, for example, hydrochloric acid, nitric acid, sulfuric acid or the like.

As described above, the recovered material containing the Si source of the present technique can be obtained by recovering an acid treatment liquid waste (a liquid waste after an acid treatment for removing (recovering) the Si source or a liquid waste after washing) generated by the process of the acid treatment, and this recovered material containing the plant-derived Si source is preferably used as the first Si source composition.

Furthermore, it is preferable to add an alkali agent to the acid treatment liquid waste such that the acid treatment liquid waste is in the same alkali region as in the above-described alkali treatment from the viewpoint of the production efficiency. As the alkali agent that is used to put the acid treatment liquid waste into the alkali region at this time, the same alkali agent as in the above-described alkali treatment (for example, a hydroxide) can be used, and sodium hydroxide is preferable.

$$SiO_2 + 6HF \rightarrow H_2SiF_6 + 2H_2O \quad (B)$$

$$SiO_2 + 4HF \rightarrow SiF_4 + 2H_2O \quad (C)$$

2-1-2. Composition containing first Si source

As described above, the plant-derived Si source (for example, the recovered material containing plant-derived Si or the like) can be obtained from the plant-derived material. In the present technique, a by-product, waste or the like that is obtained at the time of obtaining a porous carbon material as the main product is preferably used as the recovered material containing the plant-derived Si source from the viewpoint of the effective use or the viewpoint of the cost. The composition of a composition containing the obtained Si source (for example, a recovered material, a by-product or the like) is preferably the same as the composition of the above-described first Si source composition from the viewpoint of enabling to reduce the operation man-hour, the production energy and the like.

The recovered material of the plant-derived Si source is preferably used in a liquid form such as an aqueous solution. This makes it possible to facilitate the appropriate addition of the second Si source composition, the Al source, the Na source, water and the like to the liquid-form recovered material and the production of an intended gel composition. In addition, in a case where the recovered material is a liquid form, it is also an advantage that an insoluble substance that is contained in the recovered material (more preferably a water-insoluble substance) is easily removed with removal means such as filtration or centrifugation to be described below. Therefore, the liquid-form recovered material is also preferable from the viewpoint of the easiness in handling, improvement in the operation efficiency, the energy efficiency and the like in the production of the porous material of the present technique.

The recovered material of the plant-derived Si source is not limited to a liquid state such as an aqueous solution and may be put into a state of a solid or semisolid shape state such as a powder or a frozen or crushed material as necessary from the viewpoint of storage, transfer and the like. In addition, the recovered material containing the Si source may be diluted with a water-based solvent such as water or may be condensed or the like by the evaporation of water or the like as necessary.

Furthermore, in order to remove an impurity such as a water-insoluble substance from the recovered material of the plant-derived Si source, a well-known production method such as separation can be adopted as necessary. The removal of an impurity from the recovered material of the plant-derived Si source is preferable from the viewpoint of easily enabling the homogenization of an intended porous material.

Examples thereof include a filtration method, a deposition method, a centrifugation method, an ion exchange method, an electrodialysis method, an isoelectric point method, a crystallization method and the like, and one or two or more selected from the group consisting of these can be used.

In addition, as separation equipment for filter separation, an acid-resistant or alkali-resistant film is preferably used, examples thereof include filter paper (for example, paper filter paper or glass filter paper); films such as a nylon film, a polypropylene film, a polytetrafluoroethylene film, a polyether sulfone film, a polyvinylidene fluoride film and a glass fiber film; filters and the like, but the acid-resistant or alkali-resistant film is not limited thereto.

It is preferable to use separation equipment capable of removing an insoluble substance or the like that is preferably 10 pm or more and more preferably 1.0 pm or more from the recovered material of the plant-derived Si source, and, for example, separation equipment (for example, a filter or the like) having a pore diameter of 10 pm or less, 1.0 pm or less or the like is preferable.

2-1-3. Porous carbon material after Si source removal (recovery) treatment

As a preferable porous carbon material, a carbon material is preferably configured to have a value of the specific surface area by the nitrogen BET method of 10 $m^2$/gram or more, a silicon (Si) content rate of 1 weight% or less and a volume of fine pores by a BJH method and an MP method of 0.1 $cm^3$/gram or more.

In addition, it is preferable that the magnesium (Mg) content rate in the porous carbon material is 0.01 weight% or more and 3 weight% or less, the potassium (K) content rate is 0.01 weight% or more and 3 weight% or less, the calcium (Ca) content rate is 0.05 weight% or more and 3 weight% or less.

2-1-4. Second Si source composition

The second Si source composition is a composition containing a second Si source.

The second Si source is not particularly limited, and a variety of well-known substances can be used.

As the second Si source, for example, fumed silica, colloidal silica, amorphous silica, sodium silicate, methyl silicate, ethyl silicate, a silicon alkoxide such as trimethylethoxysilane, tetraethyl orthosilicate (TEOS), an aluminosilicate gel or the like can be used. Fumed silica, colloidal silica, amorphous silica, sodium silicate, methyl silicate, ethyl silicate, a silicon alkoxide and an aluminosilicate gel are preferable. One or two or more selected from the group consisting of these can be used.

The derivation of the second Si source is not particularly limited, examples thereof include derivation from a mineral, derivation from a microbe (for example, a diatom, a bioengineered microorganism or the like), derivation from a plant and the like, any of these may be used, and one or two or more selected from the group consisting of these can be used. In addition, the second Si source composition derived from these can also be obtained by a well-known production method. Among these, a plant-derived Si source (preferably having a Si content rate of 4 mass% or more) is preferable from the viewpoint of the effective use or the viewpoint of the production energy.

Furthermore, as a plant that is used at the time of producing the second Si source composition, the plants that are used in the first Si source are more preferably adopted from the viewpoint of the effective use and the viewpoint of the production energy, and, among these, the gramineous plants are preferable, and rice (paddy) and/or wheat is more preferable. The portion of the plant is preferably a hull and/or a stem, and the hull and/or the stem is more preferable from the viewpoint of the effective use or the viewpoint of the production energy since the hull and the stem can be obtained as a plant-derived waste or by-product containing a large amount of Si at the time of grain threshing or the like. In particular, a rice husk and/or a straw is preferable from the viewpoint of enabling the easy production of a variety of zeolites or the viewpoint of the production energy.

In a case where the second Si source composition is produced from a plant-derived by-product, the second Si source composition is preferably a different composition from the first Si source composition from the viewpoint of enabling the easy production of a variety of zeolites or the viewpoint of the production energy.

In addition, the second Si source composition is preferably plant-derived ash obtained by ashing a plant from the viewpoint of enabling the easy production of a variety of zeolites or the viewpoint of the production energy. The second Si source composition, which is this plant-derived ash, may also be used as the first Si source composition. Compared with the recovered material by the alkali treatment or the like, the merits of the plant-derived ash are that the amorphous $SiO_2$ reactivity is high, the range of a synthetic gel is free and the extraction operability, the preservability, the transportability and the like are easy, and, on the other hand, the demerits thereof are that the energy consumption becomes large, an impurity such as inorganic salts is likely to remain and the use of a porous carbon material is not possible. Since the present technique is capable of recovering a treatment product that has been conventionally considered as waste as an alkali treatment product and converting this recovered material to a highly functional material, the recovered material of the present technique is more desirable than plant-derived ash that is obtained by high-temperature firing.

The composition of the second Si source composition preferably contains at least silicon (Si), aluminum (Al) and an alkali metal (for example, Na, K or the like). The form of the composition is not particularly limited, and examples thereof include liquid (for example, an aqueous solution), solid (for example, a powder form) and the like. In a case where the first Si source composition is liquid such as an aqueous solution, the second Si source composition may be solid, and in a case where the first Si source composition is solid, the second Si source composition may be liquid.

The alkali metal is not particularly limited, examples thereof include sodium, potassium, lithium and the like, one or two or more selected from the group of these are preferably used, and sodium is more preferable.

The Si content in the second Si source composition is not particularly limited, but a preferable lower limit value thereof is preferably 70 mass% or more, more preferably 80 mass% or more, still more preferably 85 mass% or more and more preferably 90 mass% or more, additionally, a preferable upper limit value thereof is preferably 98 mass% or less, more preferably 95 mass% or less, still more preferably 93 mass% or less and more preferably 92 mass% or less, and a preferable numerical value range is preferably 90 to 92 mass%.

The potassium content in the second Si source composition is not particularly limited, but a preferable lower limit value thereof is preferably 2 mass% or more, more preferably 3 mass% or more, still more preferably 4 mass% or more and more preferably 4.5 mass% or more, additionally, a preferable upper limit value thereof is preferably 10 mass% or less, more preferably 8 mass% or less, still more preferably 6 mass% or less, more preferably 5.5 mass% or less and more preferably 5.3 mass% or less, and a preferable numerical value range is preferably 4.5 to 5.5 mass%.

The calcium content in the second Si source composition is not particularly limited, but a preferable lower limit value thereof is preferably 0.1 mass% or more, more preferably 0.5 mass% or more and still more preferably 0.8 mass% or more, additionally, a preferable upper limit value thereof is preferably 1.6 mass% or less, more preferably 1.4 mass% or less, still more preferably 1.2 mass% or less and more preferably 1.1 mass% or less, and a preferable numerical value range is preferably 0.9 to 1.2 mass%.

The iron content in the second Si source composition is not particularly limited, but a preferable lower limit value thereof is preferably 0.1 mass% or more, more preferably 0.2 mass% or more, still more preferably 0.3 mass% or more and more preferably 0.4 mass% or more, additionally, a preferable upper limit value thereof is 1.0 mass% or less, more preferably 0.8 mass% or less, still more preferably 0.6 mass% or less and more preferably 0.55 mass% or less, and a preferable numerical value range is preferably 0.4 to 0.6 mass%.

The phosphorus content in the second Si source composition is not particularly limited, but a preferable lower limit value thereof is preferably 0.1 mass% or more, more preferably 0.2 mass% or more, still more preferably 0.3 mass% or more and more preferably 0.4 mass% or more, additionally, a preferable upper limit value thereof is preferably 1.0 mass% or less, more preferably 0.8 mass% or less, still more preferably 0.6 mass% or less and more preferably 0.55 mass% or less, and a preferable numerical value range is preferably 0.4 to 0.6 mass%.

The content of different metals other than Si, K, Ca, Fe and P in the second Si source composition is not particularly limited, but a preferable upper limit value thereof is preferably 1.8 mass% or less, more preferably 1.7 mass% or less and still more preferably 1.5 mass% or less. The Al content in the second Si source composition is not particularly limited, but a preferable lower limit value thereof is preferably 1.5 mass% or less, more preferably 1.0 mass% or less and still more preferably 0.5 mass% or less.

2-1-4-1. Production method of plant-derived second Si source composition

A production method of the second Si source composition that is used in the present technique is not particularly limited, and the second Si source composition can be produced by a well-known production method.

Particularly, the plant-derived second Si source composition also makes it possible to effectively use by-products, wastes or the like that are generated in large quantities and makes it possible to decrease the production energy compared with mineral-derived second Si source compositions.

The second Si source composition in the present technique is more preferably a treatment product obtained by a decarburization treatment of a plant-derived raw material. This treatment product is preferably plant-derived ash.

As the decarburization treatment, a heating treatment for thermal decomposition is preferably carried out. As the material, gramineous plants are preferably, among them, rice (paddy) or wheat is more preferable, furthermore, the hull and/or stem thereof is more preferable, and, in particular, a rice husk is more preferable.

As an atmosphere of the decarburization treatment, an oxygen-containing gas is preferable, and an air is more preferable from the viewpoint of the cost. In addition, the flow rate of the atmosphere is not particularly limited, but is preferably 50 to 500 mL/min, more preferably 100 to 400 mL/min and still more preferably 100 to 300 mL/min.

A heating temperature of the decarburization treatment is not particularly limited, but a preferable lower limit value thereof is preferably 350°C or higher, more preferably 400°C or higher and still more preferably 450°C or higher, and a preferable upper limit value thereof is preferably 900°C or lower, more preferably 800°C or lower, still more preferably 700°C or lower, more preferably 650°C or lower and more preferably 600°C or lower.

A heating time of the decarburization treatment is not particularly limited, but a preferable lower limit value thereof is preferably 3 hours or longer, more preferably 4 hours or longer, more preferably 5 hours or longer, more preferably 7 hours or longer and more preferably 9 hours or longer, and a preferable upper limit value thereof is preferably 24 hours or shorter, more preferably 18 hours or shorter, still more preferably 15 hours or shorter, far still more preferably 13 hours or shorter, more preferably 11 hours or shorter and more preferably 10 hours or shorter.

Preferable conditions of the heating temperature and the heating time of the decarburization treatment are preferably 450°C to 600°C and 7 to 11 hours.

2-1-5. Al source

The Al source is not particularly limited and may be an Al source that is ordinarily used at the time of producing an inorganic porous material (preferably a silicic oxide-based porous material), and a variety of well-known substances can be used.

Examples of the Al source include inorganic aluminum compounds such as aluminum nitrate ($Al(NO_3)_3$), aluminum hydroxide, aluminum sulfate, aluminum oxide, sodium aluminate and hydrates thereof; organic aluminum compounds such as aluminum acetate and aluminum alkoxide; and the like.

In addition, examples of the sodium aluminate include sodium aluminate ($NaAlO_2$), hydroxyl complexes such as sodium tetrahydroxoaluminate ($Na[Al(OH)_4]$), and the like.

In addition, examples of the aluminum alkoxide include aluminum alcoholates such as aluminum diisopropylate mono sec-butyrate, aluminum sec-butylate, aluminum isopropylate and aluminum ethylate and the like.

As the Al source, one or two or more selected from the group consisting of these may be used.

Among these, aluminum nitrate ($Al(NO_3)_3$) and/or sodium aluminate ($NaAlO_2$) are preferable.

In the production method of the porous material (preferably zeolite) of the present technique, the amount of aluminum in the raw material can be appropriately changed depending on an intended inorganic porous material (preferably zeolite). The amount of aluminum in the raw material is not particularly limited, but a preferable lower limit value of the mole ratio to 1 mol of silicon (Si) in the raw material is preferably 0.01 or more and more preferably 0.05 or more, and a preferable upper limit value thereof is preferably 10 or less, more preferably 5 or less, still more preferably 3 or less, more preferably 2 or less, preferably 0.01 to 10, more preferably 0.05 to 3 and still more preferably 0.05 to 2.

For example, in the case of an MFI type, regarding the amount of aluminum in the raw material, a preferable lower limit value of the mole ratio to 1 mol of silicon (Si) in the raw material is preferably 0.001 or more, more preferably 0.05 or more and still more preferably 0.01 or more and a preferably upper limit value thereof is preferably 1.0 or less, more preferably 0.5 or less, still more preferably 0.2 or less and more preferably 0.1 or less.

For example, in the case of mordenite (MOR), regarding the amount of aluminum in the raw material, a preferable lower limit value of the mole ratio to 1 mol of silicon (Si) in the raw material is preferably 0.01 or more, more preferably 0.05 or more and still more preferably 0.08 or more, and a preferably upper limit value thereof is preferably 1.0 or less and more preferably 0.5 or less, still more preferably 0.3 or less and more preferably 0.2 or less.

In addition, for example, in the case of an LTA type, regarding the amount of aluminum in the raw material, a preferable lower limit value of the mole ratio to 1 mol of silicon (Si) in the raw material is preferably 0.05 or more, more preferably 0.1 or more, still more preferably 0.25 or more, more preferably 0.5 or more, more preferably 1 or more and more preferably 1.5 or more, additionally, an upper limit value thereof is preferably 4 or less, more preferably 3 or less, still more preferably 2.5 or less, more preferably 2 or less and more preferably 1 or less, and the preferable numerical value range is preferably 1 to 3 and more preferably 1.5 to 2.5.

In addition, for example, in the case of a CHA type, regarding the amount of aluminum in the raw material, a preferable lower limit value of the mole ratio to 1 mol of silicon (Si) in the raw material is preferably 0.05 or more, more preferably 0.1 or more, still more preferably 0.15 or more, additionally, a preferable upper limit value thereof is preferably 1.0 or less and more preferably 0.5 or less, still more preferably 0.3 or less and more preferably 2.5 or less, and the preferable numerical value range is preferably 0.1 to 0.5 and more preferably 0.15 to 0.3.

In addition, for example, in the case of an FAU type (zeolite X), regarding the amount of aluminum in the raw material, a preferable lower limit value of the mole ratio to 1 mol of silicon (Si) in the raw material is preferably 0.1 or more, more preferably 0.3 or more and still more preferably 0.5 or more and a preferably upper limit value thereof is preferably 1.5 or less, more preferably 1.0 or less and still more preferably 0.8 or less, and the preferable numerical value range is preferably 0.3 to 1.0, more preferably 0.5 to 0.8.

2-1-6. Alkali metal source

In the present technique, the alkali metal source may be contained in the above-described first Si source composition and/or the second Si source composition. In addition, a plant or a plant-derived recovered material (for example, by-product) is used as a raw material of the present technique, and this contains the alkali metal source, which is preferable.

In addition, the alkali metal source may be further blended with the raw material of the present technique as necessary.

An alkali metal atom of the alkali metal source is not particularly limited, and well-known metal atoms that are used for the synthesis of an inorganic porous material (preferably silicic acid-based porous material) can be used. As an alkali metal, for example, at least one or two or more selected from the group consisting of lithium, sodium, potassium, rubidium and cesium are preferably used, and it is more preferable to make an alkali metal ion present and crystallized.

Furthermore, the alkali metal ion is preferably at least one of sodium, potassium and cesium and more preferably sodium and/or cesium. When at least one alkali metal atom of these is contained, the progress of crystallization becomes easy, and the generation of an impurity crystal or the like becomes difficult.

In the production method of the porous material (preferably zeolite) of the present technique, the amount of the alkali metal (preferably sodium) in the raw material can be appropriately changed depending on an intended inorganic porous material (preferably zeolite). The amount of the alkali metal (preferably sodium) in the raw material is not particularly limited, but a preferable lower limit value of the mole ratio to 1 mol of silicon (Si) in the raw material is preferably 0.01 or more, more preferably 0.1 or more, additionally, a preferable upper limit value thereof is preferably 10 or less, and a preferable numerical value range is more preferably 0.05 to 10.

For example, in the case of an MFI type, regarding the amount of the alkali metal (preferably sodium) in the raw material, a preferable lower limit value of the mole ratio to 1 mol of silicon (Si) in the raw material is preferably 0.01 or more, more preferably 0.05 or more and still more preferably 0.08 or more and a preferable upper limit value thereof is preferably 2 or less, more preferably 1 or less and still more preferably 0.5 or less. In addition, for example, in the case of mordenite (MOR), regarding the amount of the alkali metal (preferably sodium) in the raw material, a preferable lower limit value of the mole ratio to 1 mol of silicon (Si) in the raw material is preferably 0.01 or more, more preferably 0.05 or more and still more preferably 0.08 or more and a preferable upper limit value thereof is preferably 2 or less, more preferably 1 or less and still more preferably 0.5 or less.

In addition, for example, in the case of an LTA type, regarding the amount of the alkali metal (preferably sodium) in the raw material, a preferable lower limit value of the mole ratio to 1 mol of silicon (Si) in the raw material is preferably 1 or more, more preferably 1.5 or more, more preferably 2 or more, more preferably 2.5 or more and a preferably upper limit value thereof is preferably 20 or less, more preferably 15 or less, still more preferably 10 or less, more preferably 9 or less, more preferably 8 or less, more preferably 5 or less, more preferably 4 or less, more preferably 3.5 or less, and the preferable numerical value range is 2 to 4.

In addition, for example, in the case of a CHA type, regarding the amount of the alkali metal in the raw material, a preferable lower limit value of the mole ratio to 1 mol of silicon (Si) in the raw material is preferably 0.2 or more, more preferably 0.4 or more, still more preferably 0.6 or more, more preferably 0.7 or more and more preferably 0.8 or more, additionally, a preferably upper limit value thereof is preferably 1.5 or less, more preferably 1.3 or less, still more preferably 1.1 or less and more preferably 1.0 or less, and the preferable numerical value range is 0.5 to 1.5.

In addition, for example, in the case of a CHA type, regarding the amount of sodium in the raw material, a preferable lower limit value of the mole ratio to 1 mol of silicon (Si) in the raw material is preferably 0.2 or more, more preferably 0.4 or more and still more preferably 0.6 or more and more preferably 0.7 or more, additionally, a preferably upper limit value thereof is preferably 1.5 or less, more preferably 1.3 or less, still more preferably 1.0 or less and more preferably 0.9 or less, and the preferable numerical value range is 0.5 to 1.0.

In addition, for example, in the case of a CHA type, regarding the amount of potassium in the raw material, a preferable lower limit value of the mole ratio to 1 mol of silicon (Si) in the raw material is preferably 0.01 or more, more preferably 0.05 or more, additionally, a preferably upper limit value thereof is preferably 0.2 or less and more preferably 0.15 or less, and the preferable numerical value range is 0.01 to 0.2.

In addition, for example, in the case of an FAU type (zeolite X), regarding the amount of the alkali metal (preferably sodium) in the raw material, a preferable lower limit value of the mole ratio to 1 mol of silicon (Si) in the raw material is preferably 1 or more, more preferably 2 or more and still more preferably 2.5 or more and a preferably upper limit value thereof is preferably 10 or less, more preferably 8 or less, still more preferably 7 or less, more preferably 6 or less, more preferably 4 or less, more preferably 3.5 or less, and the preferable numerical value range is 2 to 4.

2-1-7. Organic structure-directing agent (OSDA)

An advantage of the present technique is that a porous material containing Si and Al can be produced by using the above-described first Si source composition, the second Si source composition and the Al source at least raw materials and blending appropriate water therewith even without containing an organic structure-directing agent in the raw material. As in the present technique, a porous material can be produced in the absence of an OSDA by using the plant-derived first Si source composition and/or the second Si source composition as raw materials.

In the present technique, an organic structure-directing agent is preferably further used as a raw material since it is easier to design the crystal structure of the porous material.

Advantages of synthesis using the organic structure-directing agent are that the ratio of a silicon atom to an aluminum atom in a crystallized zeolite becomes high and the crystallinity improves.

The organic structure-directing agent is not particularly limited, but an organic structure-directing agent capable of forming a desired porous material (preferably zeolite) is preferably selected. One or two or more selected from the group consisting of these can be used.

In the present technique, as a preferable organic structure-directing agent, an organic structure-directing agent suitable for the production of an intended inorganic porous material (preferably zeolite) is preferable.

Examples of the organic structure-directing agent include tetrapropylammonium bromide (TPABr), tetraethylammonium bromide (TEABr), tetrapropylammonium hydroxide (TPAOH), tetraethylammonium hydroxide (TEAOH) and the like. One or two or more selected from the group consisting of these can be used.

In the production method of the porous material (preferably zeolite) of the present technique, regarding the amount of the organic structure-directing agent in the raw material, a preferable upper limit value of the mole ratio to 1 mol of silicon (Si) in the raw material is preferably 0.5 or less, more preferably 0.3 or less, still more preferably 0.2 or less and more preferably 0.1 or less. In addition, in the present technique, in examples, with respect to 1.0 g of water, 0.28 g of tetraethylammonium hydroxide (TPAOH) was used. Therefore, the amount of the organic structure-directing agent that may be used with respect to 1.0 g of water is preferably approximately 0.05 to 1.0 g and more preferably approximately 0.1 to 0.5 g, this amount used is not particularly limited, and the organic structure-directing agent may not be used (0 g).

2-1-8. Amount of water

In the production method of the porous material (preferably zeolite) of the present technique, regarding the amount of water in the raw material, from the viewpoint of easily generating crystals, a preferable lower limit value of the mole ratio to 1 mol of silicon (Si) in the raw material is preferably 3 or more, more preferably 5 or more, still more preferably 8 or more and more preferably 9 or more.

In the present technique, from the viewpoint of suppressing the cost taken for a liquid waste treatment, regarding the amount of water, a preferable upper limit value of the mole ratio to 1 mol of silicon (Si) in the raw material is preferably 200 mol or less, more preferably 180 or less and still more preferably 150 or less, and a preferable lower limit value thereof is more preferably 1 or more and still more preferably 10 or more. In addition, the amount of water may be adjusted depending on an intended porous material.

For example, in the case of an MFI type, regarding the amount of water, the mole ratio to 1 mol of silicon (Si) in the raw material is preferably 5 to 100, more preferably 5 to 50 and still more preferably 10 to 25.

For example, in the case of mordenite, regarding the amount of water, the mole ratio to 1 mol of silicon (Si) in the raw material is preferably 10 to 40.

For example, in the case of an LTA type, regarding the amount of water, a preferable upper limit value of the mole ratio to 1 mol of silicon (Si) in the raw material is preferably 10 or more, more preferably 20 or more, more preferably 30 or more, still more preferably 40 or more, more preferably 45 or more and more preferably 50 or more, additionally, a preferable lower limit value thereof is preferably 300 or less, more preferably 200 or less, still more preferably 100 or less, more preferably 80 or less, more preferably 70 or less, more preferably 65 or less and more preferably 60 or less, and the preferable numerical value range is preferably 10 to 300 and more preferably 20 to 100.

For example, in the case of a CHA type, regarding the amount of water, a preferable upper limit value of the mole ratio to 1 mol of silicon (Si) in the raw material is preferably 30 or more, more preferably 50 or more, still more preferably 80 or more and more preferably 90 or more, additionally, a preferable lower limit value thereof is preferably 300 or less, more preferably 200 or less, still more preferably 150 or less, more preferably 130 or less, more preferably 120 or less and more preferably 110 or less, and the preferable numerical value range is preferably 10 to 200 and more preferably 50 to 150.

For example, in the case of an FAU type (zeolite X), regarding the amount of water, a preferable upper limit value of the mole ratio to 1 mol of silicon (Si) in the raw material is preferably 10 or more, more preferably 20 or more, more preferably 30 or more, still more preferably 40 or more, more preferably 45 or more and more preferably 50 or more, additionally, a preferable lower limit value thereof is preferably 300 or less, more preferably 200 or less, still more preferably 100 or less, more preferably 80 or less, more preferably 70 or less, more preferably 65 or less and more preferably 60 or less, and the preferable numerical value range is preferably 10 to 300 and more preferably 20 to 100.

2-2. Production step of porous material

In the production step of the porous material of the present technique, it is preferable that the above-described first Si source composition and the Al source are used as at least raw materials, the raw materials are made to form a specific gel composition (mole ratio), and a heating treatment is carried out, thereby producing a porous material containing Si and Al. Furthermore, the second Si source composition may be contained in the raw material as necessary as a raw material. In addition, the order of the mixing of the individual raw materials is not particularly limited, and, for example, the Al source or the like may be added to the first Si source composition so as to adjust the gel composition to a specific gel composition (mole ratio) or the first Si source composition or the like may be added to an aqueous solution containing the Al source, the alkali metal source or the like. In addition, it is preferable that the individual raw materials are mixed together at the same time or at different times and a heating treatment is carried out. For this mixing, the raw materials may be stirred at a temperature with a range of 10°C to 40°C or may be stirred at room temperature (approximately 20°C to 30°C), and the stirring may be carried out for approximately 1 to 3 hours. For the heating treatment, means or a method for a heating treatment that is ordinarily carried out on inorganic porous materials is preferably used.

2-2-1. Gel composition of raw material

The gel composition of the raw material is not particularly limited, and the above-described mole ratios of Al, Na, $H_2O$ and the organic structure-directing agent to 1 mol of silicon (Si) in the raw material may be appropriately combined.

The Si/Al composition ratio (mass/mass) in the gel composition in the raw material is preferably adjusted to become a desired Si/Al composition ratio (mass/mass) of a zeolite.

The Si/Al composition ratio (mass/mass) in the gel composition in the raw material is not particularly limited, a preferable lower limit value thereof is preferably 0.1 or more, more preferably 0.3 or more, 0.5 or more, 1 or more or the like, and a preferable upper limit value thereof is preferably 200 or less, more preferably 150 or less and still more preferably 120 or less. A preferable numerical value range of the Si/Al composition ratio (mass/mass) in the raw material is more preferably 0.1 to 200 and more preferably 0.3 to 120.

For example, in the case of an MFI type, the Si/Al composition ratio (mass/mass) in the raw material is not particularly limited, but is preferably 0.5 to 130, more preferably 1 to 110, still more preferably 3 to 50 and more preferably 5 to 20.

For example, in the case of mordenite (MOR), the Si/Al composition ratio (mass/mass) in the raw material is not particularly limited, but is preferably 1 to 100, more preferably 2 to 50, still more preferably 3 to 30, more preferably 5 to 20 and more preferably 5 to 15.

For example, in the case of an LTA type, the Si/Al composition ratio (mass/mass) in the raw material is not particularly limited, but a preferable lower limit value thereof is preferably 0.1 or more, more preferably 0.2 or more, still more preferably 0.4 or more, more preferably 0.5 or more and more preferably 0.7 or more, additionally, a preferably upper limit value thereof is preferably 50 or less, more preferably 20 or less, still more preferably 10 or less, still more preferably 5 or less, more preferably 3 or less, more preferably 2 or less, more preferably 1.5 or less and more preferably 1 or less, and the preferable numerical value range is preferably 0.2 to 10, more preferably 0.5 to 5, still more preferably 0.5 to 2 and more preferably 0.8 to 1.0.

For example, in the case of a CHA type, the Si/Al composition ratio (mass/mass) in the raw material is not particularly limited, but a preferable lower limit value thereof is preferably 0.05 or more, more preferably 0.1 or more, still more preferably 0.2 or more, more preferably 0.3 or more, more preferably 0.4 or more, additionally, a preferably upper limit value thereof is preferably 5 or less, more preferably 3 or less, still more preferably 1 or less and more preferably 0.8 or less, and the preferable numerical value range is preferably 0.1 to 1 and more preferably 0.3 to 0.8.

For example, in the case of an FAU type (zeolite X), the Si/Al composition ratio (mass/mass) in the raw material is not particularly limited, but is preferably 0.5 to 5, more preferably 1 to 3 and still more preferably 1 to 2. For example, in the case of an SOD type, the Si/Al composition ratio (mass/mass) in the raw material is not particularly limited, but is preferably 0.1 to 100, more preferably 0.5 to 50 and still more preferably 1 to 20. For example, in the case of a GIS type, the Si/Al composition ratio (mass/mass) in the raw material is not particularly limited, but is preferably 0.1 to 100, more preferably 0.5 to 50 and still more preferably 1 to 20.

The gel composition (mole ratio) to 1 mol of silicon (Si) in the raw material can be adjusted by adding the Al source or the like to the first Si source composition so as to obtain a desired gel composition (mole ratio) of a zeolite.

The gel composition (mole ratio) to 1 mol of silicon (Si) in the raw material is not particularly limited, but Si:Al:Na:$H_2O$ is preferably Si 1:Al 0.005 to 2: Na 0.05 to 10:$H_2O$ 5 to 200.

In the case of an MFI type, as a preferable gel composition (mole ratio), Si:Al:Na:$H_2O$ is preferably Si 1:Al 0.01 to 1.0:Na 0.05 to 0.5:$H_2O$ 5 to 30 and more preferably Si 1:Al 0.06 to 0.1:Na 0.1 to 0.4:$H_2O$ 10 to 25.

In the case of mordenite (MOR), as a preferable gel composition (mole ratio), Si:Al:Na:$H_2O$ is preferably Si 1:Al 0.01 to 0.5:Na 0.1 to 1.0:$H_2O$ 10 to 40 and more preferably Si 1:Al 0.05 to 0.15:Na 0.2 to 0.6:$H_2O$ 15 to 35.

In the case of an LTA type, as a preferable gel composition (mole ratio), Si:Al:Na:$H_2O$ is preferably Si 1:Al 0.5 to 5:Na 1 to 10:$H_2O$ 40 to 300, more preferably Si 1:Al 0.5 to 3:Na 1 to 8:$H_2O$ 50 to 200 and still more preferably Si 1:Al 0.5 to 2:Na 1.5 to 8:$H_2O$ 50 to 70.

In the case of a CHA type, as a preferable gel composition (mole ratio), regarding Si:Al:Na:K:$H_2O$, Si:Al:Na:$H_2O$ is preferably Si 1:Al 0.1 to 1:Na 0.6 to 2:K 0.05 to 0.3:$H_2O$ 10 to 200 and more preferably Si 1:Al 0.2 to 0.5:Na 0.8 to 1:K 0.05 to 0.15:$H_2O$ 50 to 150.

In the case of an FAU type (zeolite X), as a preferable gel composition (mole ratio), Si:Al:Na:$H_2O$ is preferably Si 1:Al 0.1 to 2:Na 1 to 5:$H_2O$ 10 to 200 and preferably Si 1:Al 0.5 to 1:Na 1 to 4 (preferably 2 to 3):$H_2O$ 50 to 150.

In the case of an SOD type, as a preferable gel composition (mole ratio), Si:Al:Na:$H_2O$ is preferably Si 1:Al 0.1 to 50:Na 0.1 to 50:$H_2O$ 10 to 200 and more preferably Si 1:Al 1 to 10:Na 1 to 10:$H_2O$ 30 to 100. In the case of a GIS type, as a preferable gel composition (mole ratio), Si:Al:Na:$H_2O$ is preferably Si 1:Al 0.1 to 50:$N_a$ 0.1 to 50:$H_2O$ 10 to 200 and more preferably Si 1:Al 1 to 10:$N_a$ 0.1 to 10:$H_2O$ 30 to 100.

2-2-2. Aging

The raw material prepared as described above may be aged and hydrothermally synthesized or may be hydrothermally synthesized without being aged. Before the aging and the hydrothermal synthesis, the raw material may be stirred at approximately 10°C to 40°C, and the stirring time may be approximately 1 to 3 hours.

In order to obtain a highly crystalline inorganic porous material (preferably zeolite), the raw material is preferably aged under a predetermined temperature condition for a predetermined period of time. The raw material is preferably aged under stirring for a predetermined period of time since it is possible to improve the raw material to a more homogeneous state.

For example, in the case of producing an MFI type, it is preferable that the raw material of the first Si source composition (or a raw material obtained by mixing the Si sources of the first Si source composition and the second Si source composition as necessary) is aged, after the aging, the Al source is further mixed as a raw material, and then hydrothermal synthesis is carried out. The first Si source composition (appropriately the second Si source composition) and the Al source may be mixed together and then aged, and, at this time, the first Si source composition may be mixed in the end.

For example, in the case of producing mordenite (MOR), it is preferable that a raw material obtained by mixing the Si source of the first Si source composition (or the Si sources of the first Si source composition and the second Si source composition) and the Al source is aged and then hydrothermally synthesized. The first Si source composition (appropriately the second Si source composition) and the Al source may be mixed together and then aged, and, at this time, the first Si source composition may be mixed in the end.

For example, in the case of producing an LTA type, it is preferable that a raw material obtained by mixing the Si source of the first Si source composition (or the Si sources of the first Si source composition and the second Si source composition), the Al source, appropriately, the alkali metal source and/or water is hydrothermally synthesized, and aging is preferably skipped. The first Si source composition, the second Si source composition, the Al source, approximately, the alkali metal source and/or water may be aged after mixed, and, at this time, the first Si source composition may be mixed in the end.

For example, in the case of producing a CHA type, the first Si source composition is mixed with a mixture of the Al source, the alkali metal source (preferably Na and K) and water to adjust the gel composition of the raw material. It is preferable that 10 to 30 parts by mass of a seed crystal of a CHA type with respect to 100 parts by mass of the raw material is added to and mixed with the raw material with this gel composition and hydrothermally synthesized, and aging is preferably skipped. The seed crystal may be a seed crystal produced in advance from the raw material with this gel composition by a well-known crystallization method or may be a seed crystal that can be procured from the market.

An aging temperature is not particularly limited, but an upper limit value thereof is preferably 110°C or lower, more preferably 90°C or lower and still more preferably 80°C or lower, and a lower limit value thereof is preferably 10°C or higher, more preferably 50°C or higher, still more preferably 60°C or higher and more preferably 70°C or higher. The aging temperature may be constant during the aging or may be changed stepwise or continuously.

An aging time is not particularly limited, but a lower limit value thereof is preferably 2 hours or longer, preferably 3 hours or longer, more preferably 5 hours or longer, still more preferably 8 hours or longer, more preferably 12 hours or longer and still more preferably 18 hours or longer, and a preferable upper limit value thereof is preferably 30 days or shorter, more preferably 10 days or shorter, still more preferably 4 days or shorter, still more preferably 2 days or shorter and more preferably 36 hours or shorter.

2-2-3. Hydrothermal synthesis

The hydrothermal synthesis is preferably carried out by putting the aged raw material prepared as described above into a pressure-resistant container (for example, an autoclave container or the like) and holding the raw material at a predetermined temperature under self-generated pressure (self-generated pressure) or gas pressurization weak enough not to impair crystallization while being stirred or rotating or shaking the container or in a stationary state. The raw material may be aged in the same manner using a pressure-resistant container.

A reaction temperature at the time of the hydrothermal synthesis is not particularly limited, but a lower limit value thereof is preferably 80°C or higher, more preferably 85°C or higher, still more preferably 90°C or higher, more preferably 95°C or higher and more preferably 100°C or higher or 130°C or higher, and an upper limit value thereof is preferably 200°C or lower, more preferably 190°C or lower and still more preferably 180°C or lower.

A hydrothermal synthesis time is not particularly limited, but a lower limit value thereof is preferably 10 hours or longer, more preferably 15 hours or longer and still more preferably 20 hours or longer, and a preferable upper limit value thereof is preferably 30 days or shorter, more preferably 10 days or shorter, still more preferably 7 days or shorter, more preferably 5 days or shorter, more preferably 4 days or shorter, more preferably 3 days or shorter, still more preferably 48 hours or shorter, more preferably 36 hours or shorter and more preferably 30 hours or shorter. The reaction temperature may be constant during the reaction or may be changed stepwise or continuously.

For example, in the case of the hydrothermal synthesis of an MFI type or mordenite (MOR), a lower limit value of the reaction temperature is preferably 110°C or higher, preferably 120°C or higher, more preferably 130°C or higher, more preferably 140°C or higher, still more preferably 150°C or higher and more preferably 160°C or higher, and an upper limit value thereof is preferably 200°C or lower, more preferably 190°C or lower and still more preferably 180°C or lower. For example, in the case of the hydrothermal synthesis of an LTA type, a lower limit value of the reaction temperature is preferably 80°C or higher, more preferably 85°C or higher, still more preferably 90°C or higher, more preferably 95°C or higher and preferably 100°C or higher, additionally, an upper limit value thereof is preferably 200°C or lower, more preferably 190°C or lower, more preferably 180°C or lower, more preferably 160°C or lower, more preferably 140°C or lower, more preferably 130°C or lower, more preferably 120°C or lower, more preferably 110°C or lower and more preferably 100°C or lower, and the preferable numerical value range is 80°C to 110°C. A preferable time of the hydrothermal synthesis at this time is preferably 15 to 48 hours and more preferably 20 to 36 hours. The conditions for the hydrothermal synthesis of an LTA type can be applied as the conditions for the hydrothermal synthesis of an FAU type.

For example, in the case of the hydro synthesis of a CHA type, a lower limit value of the reaction temperature is preferably 100°C or higher, more preferably 130°C or higher and still more preferably 140°C or higher, and an upper limit value thereof is preferably 200°C or lower, more preferably 190°C or lower and still more preferably 180°C or lower. A preferable time of the hydrothermal synthesis at this time is preferably 20 hours or longer, more preferably 48 hours or longer, still more preferably 60 hours or longer and more preferably 66 hours or longer, and an upper limit value thereof is more preferably 96 hours or shorter, more preferably 84 hours or shorter and still more preferably 78 hours or shorter.

The raw material is reacted under the above-described conditions, whereby it becomes possible to obtain an inorganic porous material (preferably zeolite) with a favorable yield.

According to the production method of the present technique, it is possible to convert a plant-derived silica liquid waste to a functional material. Furthermore, the present technique is capable of reducing the disposal cost and is thus capable of reducing the cost of a main product. Furthermore, the present technique is capable of producing creation with a new value from a recovered material, a by-product or the like that has been conventionally disposed of.

In addition, as a conventional inorganic porous material, sodium silicate produced by treating the silica stone or silica sand of ore together with sodium carbonate at a high temperature of 1200°C has been used, and thus the production energy is extremely high. On the other hand, the present technique is capable of using a liquid waste that is generated at the time of an alkali treatment of a main product at approximately 100°C and thus also has an advantage of a low production energy.

2-2-4. Recovery of inorganic porous material (preferably zeolite)

After the hydrothermal synthesis, the inorganic porous material (preferably zeolite), which is a product, is preferably separated from a hydrothermal synthesis reaction liquid.

There is a case where the obtained inorganic porous material (preferably zeolite) normally contains either or both of the organic structure-directing agent and the alkali metal in pores. A separation method of the inorganic porous material (preferably zeolite) from the hydrothermal synthesis reaction liquid is not particularly limited, and normal examples thereof include filtration, decantation, direct drying and the like.

The inorganic porous material (preferably zeolite) separated and recovered from the hydrothermal synthesis reaction liquid is washed with water, dried and then fired as necessary in order to remove the organic structure-directing agent and the like use at the time of the production, whereby a zeolite not containing the organic structure-directing agent and the like can be obtained. In addition, the organic structure-directing agent can also be removed by a treatment method to be described next.

As the removal treatment of either or both of the organic structure-directing agent and the alkali metal, a liquid phase treatment using a chemical containing an acidic solution or an organic structure-directing agent decomposition component, an ion exchange treatment using a resin or the like or a thermal decomposition treatment can be adopted, and these treatments may be used in combination. Preferably, the organic structure-directing agent and the like that are contained can be removed by a method in which the organic structure-directing agent and the like are fired at a temperature of 300°C to 1000°C under an air, an oxygen-containing inert gas, an inert gas atmosphere, in the absence of oxygen such as a vacuum or in an environment in which the flow of an air from and to the outside is blocked or extracted with an organic solvent such as an ethanol aqueous solution. Preferably, the organic structure-directing agent and the like are preferably removed by firing from the viewpoint of the productivity.

Regarding a firing temperature in this case, preferably, a lower limit value thereof is preferably 300°C or higher, more preferably 400°C or higher, still more preferably 450°C or higher and more preferably 500°C or higher, and, preferably, an upper limit value thereof is preferably 900°C or lower, more preferably 850°C or lower and still more preferably 800°C or lower. As the inert gas, nitrogen or the like can be used. In addition, the firing may be carried out in an oxygen-free state such as a vacuum or in an environment state in which the flow of an air from and to the outside is blocked. In addition, a firing time is not particularly limited; however, a preferable lower limit value thereof is preferably 1 hour or longer and more preferably 5 hours or longer, additionally, a preferable upper limit value thereof is preferably 20 hours or shorter and more preferably 15 hours or shorter, and the preferable numerical value range is preferably 1 to 20 hours and more preferably 5 to 15 hours.

2-2-5. Production example of inorganic porous material (preferably zeolite)

In the present technique, the first Si source composition, which is a plant-derived Si source, is used as a raw material, whereby it is possible to appropriately produce and provide a variety of inorganic porous materials (preferably zeolites). Among first Si source compositions, a recovered material obtained from the carbonization treatment product by the alkali extraction is used as the first Si source composition, whereby it is possible to efficiently produce an LTA type zeolite, a CHA type zeolite and an FAU type zeolite each having favorable quality, and other zeolites can also be favorably produced.

The plant-derived material that is used as the carbonization treatment product is preferably a gramineous plant and more preferably a rice husk and/or a wheat shell.

The recovered material obtained by the alkali extraction is preferably a recovered material obtained by alkali extraction such that the mole ratio of NaOH/Si becomes a specific mole ratio. The temperature of the alkali extraction is preferably 50°C to 120°C, and the alkali extraction time is preferably 12 to 36 hours.

Regarding the production method of the inorganic porous material (preferably zeolite), such as an LTA type zeolite, a CHA type zeolite or an FAU type zeolite, according to the present technique, the description of each configuration such as the plant-derived material, the carbonization treatment, the Si source removal treatment (Si source recovery treatment), the alkali treatment, the Al source, the alkali metal source or the amount of water, which are duplicate to the configuration of "2-1." to "2-2-4." or the like, will not be repeated as appropriate, but the description of "2-1." to "2-2-4." and the like is also applicable to the present embodiment, and the description can be appropriately adopted.

2-2-5-1) Production method of LTA type zeolite

The present technique is capable of providing a production method of an LTA type zeolite including carrying out a carbonization treatment on a plant-derived raw material (preferably a rice husk), then, carrying out a treatment of recovering a Si source by alkali extraction and using a first Si source composition containing the Si source recovered at this time and an Al source as at least raw materials. As a recovered material containing the Si source obtained by this alkali extraction, a recovered material for the production of an LTA type zeolite is preferably used. Specifically, an alkali extract is more preferably an alkali extract prepared such that the mole ratio of NaOH/Si reaches 2.5 to 3.5. When this alkali extract is used as the first Si source composition, it is possible to easily produce an LTA type zeolite without using a second Si source composition, and furthermore, it is possible to produce a single-phase LTA type zeolite in the absence of an OSDA.

In addition, at the time of adjusting the gel composition of an LTA type raw material, one or two or more selected from an Al source, an alkali metal source and water may be appropriately blended. At this time, the mole ratio of Si/Al in the raw material is preferably adjusted to 0.1 to 1.0 and may be adjusted by, for example, adding an Al source to the alkali extract.

In the production method of an LTA type zeolite, the raw material adjusted to a specific gel composition is preferably mixed before hydrothermal synthesis, and the mixing temperature at this time may be approximately room temperature of approximately 10°C to 30°C. After mixed, the raw material is preferably hydrothermally synthesized, at this time, the raw material is more preferably hydrothermally synthesized in a stationary state, and aging may not be carried out before the hydrothermal synthesis. The temperature of the hydrothermal synthesis is preferably 70°C to 110°C and more preferably 80°C to 100°C, and the time of the hydrothermal synthesis is preferably 12 to 48 hours and more preferably 18 to 30 hours. Furthermore, the hydrothermal synthesis may be carried out while the raw material is stirred or in a stationary state, but is preferably carried out while the raw material is in a stationary state. After the hydrothermal synthesis, filtration, washing and then drying are carried out, whereby an LTA type zeolite having favorable quality can be obtained. When an alkali extract having a specific mole ratio (theoretical ratio) of NaOH/Si is used, an LTA type zeolite having favorable quality can be obtained even without further carrying out firing after drying.

The specific gel composition (mole ratio), which is a raw material for an LTA type, is more preferably Si 1:Al 0.5 to 3:Na 1 to 8:$H_2O$ 50 to 200 and still more preferably Si 1:Al 0.5 to 2:Na 1.5 to 8:$H_2O$ 50 to 70.

2-2-5-2) Production method of CHA type zeolite

The present technique is capable of providing a production method of a CHA type zeolite including carrying out a carbonization treatment on a plant-derived raw material (preferably a rice husk), then, carrying out a treatment of recovering a Si source by alkali extraction and using a first Si source composition containing the Si source recovered at this time and an Al source as at least raw materials. As a recovered material containing the Si source obtained by this alkali extraction, a recovered material for the production of an LTA type zeolite is preferably used. Specifically, an alkali extract is more preferably an alkali extract prepared such that the mole ratio of NaOH/Si reaches 0.3 to 0.8. When this alkali extract is used as the first Si source composition, it is possible to easily produce a CHA type zeolite without using a second Si source composition, and furthermore, it is possible to produce a single-phase CHA type zeolite in the absence of an OSDA.

In addition, at the time of adjusting the gel composition of a CHA type raw material, one or two or more selected from an Al source, an alkali metal source and water may be appropriately blended.

In the production method of a CHA type zeolite, the raw material adjusted to a specific gel composition is preferably mixed before hydrothermal synthesis, the mixing temperature at this time may be approximately room temperature of approximately 10°C to 30°C, and furthermore, 10 to 30 parts by mass of a seed crystal is more preferably blended and mixed with respect to 100 parts by mass. After mixed, the raw material is preferably hydrothermally synthesized, at this time, the raw material is more preferably hydrothermally synthesized in a stationary state, and aging may not be carried out before the hydrothermal synthesis. The temperature of the hydrothermal synthesis is preferably 70°C to 110°C and more preferably 80°C to 100°C, and the time of the hydrothermal synthesis is preferably 12 to 48 hours and more preferably 18 to 30 hours. Furthermore, the hydrothermal synthesis may be carried out while the raw material is stirred or in a stationary state, but is preferably carried out while the raw material is in a stationary state. After the hydrothermal synthesis, filtration, washing and then drying are carried out, whereby an LTA type zeolite having favorable quality can be obtained. When an alkali extract having a specific mole ratio (theoretical ratio) of NaOH/Si is used, an LTA type zeolite having favorable quality can be obtained even without further carrying out firing after drying.

Si:Al:Na:K:$H_2O$ in the specific gel composition (mole ratio), which is a raw material for a CHA type, is preferably Si 1:Al 0.1 to 1:Na 0.6 to 2:K 0.01 to 0.5:$H_2O$ 10 to 200 and preferably Si 1:Al 0.2 to 0.5:Na 0.8 to 1:K 0.05 to 0.15:$H_2O$ 50 to 150.

2-2-5-3) Production method of FAU type zeolite

The present technique is capable of providing a production method of an FAU type zeolite including carrying out a carbonization treatment on a plant-derived raw material (preferably a rice husk), then, carrying out a treatment of recovering a Si source by alkali extraction and using a first Si source composition containing the Si source recovered at this time and an Al source as at least raw materials.

As a recovered material containing the Si source obtained by this alkali extraction, a recovered material for the production of an FAU type zeolite is preferably used. Specifically, an alkali extract is more preferably an alkali extract prepared such that the mole ratio of NaOH/Si reaches 2.5 to 3.5. When this alkali extract is used as the first Si source composition, it is possible to easily produce an FAU type zeolite without using a second Si source composition, and furthermore, it is possible to produce a single-phase FAU type zeolite in the absence of an OSDA.

In addition, at the time of adjusting the gel composition of an FAU type raw material, one or two or more selected from an Al source, an alkali metal source and water may be appropriately blended. At this time, the mole ratio of Si/Al in the raw material is preferably adjusted to 1.0 to 2.0 and may be adjusted by, for example, adding the alkali extract to an aqueous solution containing the Al source and the alkali metal source.

In the production method of an FAU type zeolite, the raw material adjusted to a specific gel composition is preferably mixed before hydrothermal synthesis, and the mixing temperature at this time may be approximately room temperature of approximately 10°C to 30°C. After mixed, the raw material is preferably hydrothermally synthesized, at this time, the raw material is more preferably hydrothermally synthesized in a stationary state, and aging may not be carried out before the hydrothermal synthesis. The temperature of the hydrothermal synthesis is preferably 70°C to 110°C and more preferably 80°C to 100°C, and the time of the hydrothermal synthesis is preferably 12 to 48 hours and more preferably 18 to 30 hours. Furthermore, the hydrothermal synthesis may be carried out while the raw material is stirred or in a stationary state, but is preferably carried out while the raw material is in a stationary state. After the hydrothermal synthesis, filtration, washing and then drying are carried out, whereby an FAU type zeolite having favorable quality can be obtained. When an alkali extract having a specific mole ratio (theoretical ratio) of NaOH/Si is used, an LTA type zeolite having favorable quality can be obtained even without further carrying out firing after drying.

The specific gel composition (mole ratio), which is a raw material for an FAU type, is more preferably Si 1:Al 0.5 to 3:Na 1 to 8:$H_2O$ 50 to 200 and more preferably Si 1:Al 0.5 to 2:Na 1.5 to 8:$H_2O$ 50 to 70.

<3. Porous material of present technique>

The porous material (preferably zeolite) of the present technique can be obtained by <2. Production method of porous material of present technique>.

It is known that, ordinarily, zeolites exhibit a variety of physicochemical actions such as a molecular sieving action, cation exchangeability, a reversible water old desorption action, a catalytic action and a gas adsorption action.

The porous material of the present technique is also capable of having such physicochemical actions. Such physicochemical actions make it possible for the porous material of the present technique to be used in a variety of broad fields such as the petroleum chemical industry, wastewater treatments, detergent builders, radioactive waste treatments, the livestock industry, the fishery industry, the agriculture, separation of oxygen and nitrogen in the air and small-size heat pump systems.

The use of the first Si source composition of the present technique makes it possible to obtain an LTA type zeolite, a CHA type zeolite, zeolite X (FAU type), mordenite (MOR), ZSM-5 (MFI), an FAU type zeolite, sodalite (SOD type zeolite), a GIS type zeolite and zeolite Y (FAU type) and makes it possible to produce one or two or more from the group consisting of these. Furthermore, in the present technique, the recovered material containing the Si source obtained by the alkali extraction is used as the first Si source composition, whereby it is also possible to efficiently produce an LTA type zeolite and a CHA type zeolite each having favorable quality, respectively. An LTA type zeolite and a CHA type zeolite can be used for the production (for example, for water removal or the like) of biofuels (for example, bioethanol).

In addition, in the production method of the present technique in which a raw material containing a plant-derived Si source is used as described above, a porous material can be obtained by increasing the mole ratio of Al in the gel composition in the raw material. The increase in the mole ratio of Al makes it possible to facilitate the adsorption of heavy metal M (for example, radioactive substances, such as Cs and Sr, and the like). For example, the heavy metal M can be adsorbed by mixing a substance to be treated containing the heavy metal M with an aqueous solution containing the porous material.

The Si/Al composition ratio (mass/mass) in the porous material (more preferably zeolite) in the present technique is not particularly limited, but a preferable lower limit value thereof is preferably 0.05 or more, more preferably 0.1 or more, still more preferably 0.5 or more and more preferably 1 or more, and a preferable upper limit value thereof is preferably 200 or less, more preferably 100 or less and still more preferably 50 or less. A preferable numerical value range of the Si/Al composition ratio (mass ratio) in the raw material is more preferably 1 to 120 and more preferably 1.0 to 50. The mole ratio in the porous material can be converted from this Si/Al composition ratio (mass/mass) by Si (28.1)/Al (26.98).

For example, in the case of an MFI type, the Si/Al composition ratio (mass/mass) in the zeolite is not particularly limited, a preferable lower limit value thereof is preferably 1 or more, more preferably 5 or more and still more preferably 10 or more, and a preferable upper limit value thereof is preferably 100 or less, more preferably 50 or less and still more preferably 20 or less.

For example, in the case of mordenite, the Si/Al composition ratio (mass/mass) in the zeolite is not particularly limited, a preferable lower limit value thereof is preferably 2 or more, more preferably 5 or more and still more preferably 10 or more, and a preferable upper limit value thereof is preferably 100 or less, more preferably 50 or less, still more preferably 30 or less and more preferably 20 or less.

For example, in the case of an LTA type, the Si/Al composition ratio (mass/mass) in the zeolite is not particularly limited, a preferable lower limit value thereof is preferably 0.1 or more, preferably 0.2 or more and more preferably 0.5 or more, and a preferable upper limit value thereof is preferably 5 or less, more preferably 3 or less and still more preferably 2 or less.

For example, in the case of a CHA type, the Si/Al composition ratio (mass/mass) in the zeolite is not particularly limited, a preferable lower limit value thereof is preferably 1 or more, preferably 5 or more and more preferably 10 or more, and a preferable upper limit value thereof is preferably 300 or less, more preferably 200 or less and still more preferably 150 or less.

For example, in the case of an FAU type, the Si/Al composition ratio (mass/mass) in the zeolite is not particularly limited, a preferable lower limit value thereof is preferably 0.01 or more, preferably 0.05 or more and still more preferably 0.1 or more, and a preferable upper limit value thereof is preferably 100 or less, more preferably 20 or less and still more preferably 10 or less.

The average particle diameter in the porous material (more preferably zeolite) in the present technique is not particularly limited, but a preferable lower limit value thereof is preferably 10 nm or more and more preferably 25 nm or more. Furthermore, in the case of an MFI type, the average particle diameter is not particularly limited, but a preferable lower limit value thereof is preferably 10 nm or more and more preferably 25 nm or more, a preferable upper limit value thereof is preferably 800 nm or less and more preferably 500 nm or less, and a preferable numerical value range is preferably 25 to 800 nm and more preferably 50 to 500 nm.

Furthermore, in the case of an LTA type, the average particle diameter is not particularly limited, but a preferable lower limit value thereof is preferably 0.1 pm or more, more preferably 0.5 pm or more and still more preferably 1 pm or more, additionally, a preferable upper limit value thereof is preferably 100 pm or less, more preferably 20 pm or less and still more preferably 10 pm or less, and a preferable numerical value range is preferably 1 to 10 pm. An LTA type having such an average particle diameter can be obtained using the alkali extract of the present technique.

Furthermore, in the case of a CHA type, dish-like secondary particles generated from nanoparticles are observed, the sizes of the dish-like secondary particles are not particularly limited, but a preferable lower limit value thereof is preferably 1 pm or more and more preferably 2 pm or more, additionally, a preferable upper limit value thereof is preferably 5 pm or less and more preferably 4 pm or less, and a preferable numerical value range is preferably 2 to 4 pm.

The secondary particle diameter is the size of a particle in an aggregated state, and the size of the dish-like secondary particle is a value obtained by measuring the size of this particle in an aggregated state and can be measured by the same measurement method as for the average particle diameter.

The value ($S_{BET}$) of the specific surface area by the nitrogen BET method in the porous material (more preferably zeolite) in the present technique is not particularly limited, but a preferable lower limit value thereof is preferably 25 $m^2$/g or more, more preferably 50 $m^2$/g or more and still more preferably 100 $m^2$/g or more, additionally, a preferable upper limit value thereof is preferably 800 $m^2$/g or less and more preferably 500 $m^2$/g or less, and a preferable numerical value range is preferably 100 to 450 $m^2$/g.

In the case of an MFI type, the ($S_{BET}$) value of the specific surface area by the nitrogen BET method is preferably 200 to 700 $m^2$/g and more preferably 300 to 600 $m^2$/g, and, in the case of mordenite, the ($S_{BET}$) value is preferably 50 to 500 $m^2$/g and more preferably 100 to 400 $m^2$/g, but is not limited thereto.

The external surface area ($S_{EXT}$) value obtained by analyzing nitrogen adsorption evaluation data by a t-plot method in the porous material (more preferably zeolite) in the present technique is not particularly limited, but a preferable lower limit value thereof is preferably 5 $m^2$/g or more, more preferably 10 $m^2$/g or more and still more preferably 20 $m^2$/g or more, additionally, a preferable upper limit value thereof is preferably 500 $m^2$/g or less and more preferably 400 $m^2$/g or less, and a preferable numerical value range is preferably 20 to 400 $m^2$/g.

In the case of an MFI type, the external surface area ($S_{EXT}$) value obtained by analyzing nitrogen adsorption evaluation data by a t-plot method is preferably 10 to 500 $m^2$/g and more preferably 20 to 400 $m^2$/g, and, in the case of mordenite, the external surface area ($S_{EXT}$) value is preferably 0.5 to 200 $m^2$/g and more preferably 1 to 100 $m^2$/g, but is not limited thereto.

The total pore volume ($V_{total}$) value obtained from the BET method in the porous material (more preferably zeolite) in the present technique is not particularly limited, but a preferable lower limit value thereof is preferably 0.01 $cm^3$/g or more, more preferably 0.05 $cm^3$/g or more and still more preferably 0.1 $cm^3$/g or more, additionally, a preferable upper limit value thereof is preferably 2.0 $cm^3$/g or less and more preferably 1.0 $cm^3$/g or less, and a preferable numerical value range is preferably 0.1 to 1.0 $cm^3/g$.

In the case of an MFI type, the total pore volume ($V_{total}$) value obtained from the BET method is preferably 0.05 to 1.0 $cm^3/g$ or less and more preferably 0.1 to 1.0 $cm^3/g$ or more and, in the case of mordenite, the total pore volume ($V_{total}$) value is preferably 0.05 to 1.0 $cm^3/g$ or less and more preferably 0.1 to 0.5 $cm^3/g$, but is not particularly limited thereto.

The micropore volume ($V_{micro}$) value obtained by analyzing nitrogen adsorption evaluation data by a t-plot method in the porous material (more preferably zeolite) in the present technique is not particularly limited, but a preferable lower limit value thereof is preferably 0.005 $cm^3/g$ or more, more preferably 0.01 $cm^3/g$ or more, and a preferable upper limit value thereof is preferably 0.5 $cm^3/g$ or less and more preferably 0.2 $cm^3/g$ or less, and a preferable numerical value range is preferably 0.01 to 0.2 $cm^3/g$. In the case of an MFI type, the micropore volume ($V_{micro}$) value obtained by analyzing nitrogen adsorption evaluation data by a t-plot method is preferably 0.01 to 0.1 $cm^3/g$ and more preferably 0.05 to 0.2 $cm^3/g$ and, in the case of mordenite, the micropore volume ($V_{micro}$) value is preferably 0.01 to 0.2 $cm^3/g$ and more preferably 0.05 to 0.2 $cm^3/g$, but is not particularly limited thereto.

4. Si source composition for producing porous material

The present technique is capable of providing a Si source composition for producing a porous material containing a recovered material containing a Si source recovered when a treatment for removing the Si source (treatment for recovering the Si source) is carried out after a carbonization treatment of a plant-derived raw material. The composition is preferably for mordenite (MOR type zeolite), for an MFI type zeolite, for an LTA type zeolite (zeolite A), for a CHA type zeolite, for an FAU type zeolite (zeolite X) and for an SOD-type zeolite. Among these, since a pure phase LTA type zeolite and a single-phase CHA type zeolite can be obtained, the composition is more preferably for an LTA type zeolite (zeolite A) and for a CHA type zeolite.

Hereinafter, the "recovered material containing a Si source" recovered when a treatment for removing the Si source is carried out after a carbonization treatment of a plant-derived raw material will be referred to as "plant-derived first Si source recovered material".

For the plant-derived first Si source recovered material in the present technique, regarding the same portions as the composition and production method of the "first Si source composition" described in "2-1-1. First Si source composition" and "2-1-1-2. Plant-derived Si source and production method thereof' in <2. Production method of porous material of present technique>, description will not be repeated as appropriate.

Therefore, the Si source composition for a porous material (preferably zeolite) production of the present technique contains at least a plant-derived first Si source recovered material as an effective component. That is, the plant-derived first Si source recovered material in the present technique can be contained and used in the Si source composition for a porous material production as an effective component.

In addition, the Si source composition for a porous material production in the present technique can be contained as an effective component in compositions from which variety of actions are expected, and a variety of these compositions can be used as agents. For the Si source composition for a porous material production in the present technique, each component itself can be singly used as it is or can be used after mixed with a single body, a diluent or the like that is normally permitted.

In addition, the Si source composition for a porous material production in the present technique can be used in a variety of fields such as medication, agriculture and food.

In addition, the present technique is capable of providing a plant-derived first Si source that is used for the purpose of the production of the above-described porous material (preferably zeolite) or the like or a use thereof.

In addition, the plant-derived first Si source recovered material in the present technique can be used as an effective component in the above-described production method, use, using method or the like.

In addition, the plant-derived first Si source recovered material in the present technique can be used to produce a variety of formulations, a variety of compositions or the like having the above-described actions or for the purpose of the above-described use.

The present technique is also capable of providing a Si source composition for a porous material production containing a plant-derived first Si source recovered material as an effective component.

The present technique is also capable of providing a porous material production method in which a plant-derived first Si source recovered material is used.

The present technique is also capable of providing a plant-derived first Si source recovered material for producing porous material production or a use thereof.

5. Each measurement method of present technique

<ICP analysis>

The analysis of a variety of elements in the present technique can be measured with an ICP atomic emission spectrometer (ICPE-9000 manufactured by Shimadzu Corporation).

<Atomic absorption spectrometry>

A variety of elements that are measured by the atomic absorption spectrometry (AAs) can be measured with AA-6200 spectrometer manufactured by Shimadzu Corporation.

<X-ray diffraction method>

XRD: Evaluated by the X-ray diffraction method (RINT-Ultima III-TK (manufactured by Rigaku Corporation)) Nitrogen adsorption measurement can be evaluated with BELSORP-MAX (manufactured by MicrotracBEL Corp.).

<Average particle diameter>

The average particle diameter in the present technique was obtained based on JIS Z 8827-1 Part 1: Static image analysis methods, and the average particle diameter at this time was calculated according to JIS Z 8819-2.

<Nitrogen BET method>

The nitrogen BET method in the present technique is a method in which an adsorption isotherm is measured by adsorbing and desorbing nitrogen to and from an adsorbent (here, a porous carbon material) as an adsorbed molecule and the measured data is analyzed based on a BET formula represented by a formula (1), and the specific surface area, the pore volume or the like can be calculated based on this method.

Specifically, in the case of calculating the value of the specific surface area by the nitrogen BET method, first, nitrogen is absorbed to and desorbed from a "sample" as an adsorbed molecule, thereby obtaining an adsorption isotherm. In addition, $[p/\{Va(p0 - p)\}]$ is calculated from the obtained adsorption isotherm based on the formula (1) or a formula (1') obtained by modifying the formula (1) and plotted with respect to the equilibrium relative pressure (p/p0). In addition, this plot is regarded as a straight line, and the slope s $(= [(C - 1)/(C \cdot Vm)])$ and the intercept i $(= [1/(C \cdot Vm)])$ are calculated based on the least-square method.

In addition, Vm and C are calculated from the obtained slope s and intercept i based on a formula (2-1) and a formula (2-2). Furthermore, the specific surface area asBET is calculated from Vm based on a formula (3) (refer to the manuals of BELSORP-mini and BELSORP analysis software manufactured by MicrotracBEL Corp., pp. 62 to 66).

This nitrogen BET method is a measurement method according to JIS R 1626-1996 "Measuring methods for the specific surface area of fine ceramic powders by gas adsorption using the BET method".

$$Va = (Vm \cdot C \, p)/[(p0 - p)\{1 + (C \cdot 1)(p/p0)\}] \quad (1)$$

$$[p/\{Va(p0 - p)\}]$$
$$= [(C - 1)/(C \cdot Vm)](p/p0) + [1/(C \cdot Vm)] \quad (1')$$

$$Vm = 1/(s + i) \, (2 \cdot 1) C = (s/i) + 1 \quad (2\text{-}2)$$

$$asBET = (Vm \cdot L \cdot \sigma)/22414 \quad (3)$$

Here,

Va: Adsorption amount
Vm: Adsorption amount of single molecular layer

p: Pressure at equilibrium of nitrogen
p0: Saturated vapor pressure of nitrogen
L: Avogadro's number
σ: Adsorption cross-sectional area of nitrogen.

<Nitrogen BET method-pore volume>

In the case of calculating the pore volume Vp by the nitrogen BET method in the present technique, for example, the adsorption data of the obtained adsorption isotherm is linearly interpolated, and the adsorption amount V at a relative pressure set at a pore volume calculation relative pressure is obtained. The pore volume Vp can be calculated from this adsorption amount V based on a formula (4) (refer to the manuals of BELSORP-mini and BELSORP analysis software manufactured by MicrotracBEL Corp., pp. 62 to 65).
Hereinafter, there will be cases where the pore volume based on the nitrogen BET method is simply referred to as "pore volume".

$$Vp = (V/22414) \times (Mg/\rho g) \qquad (4)$$

Here,

V: Adsorption amount at relative pressure
Mg: Molecular weight of nitrogen
pg: Density of nitrogen.

<Pore diameters of mesopores>

The pore diameters of mesopores in the present technique can be calculated as, for example, the distribution of pores from the pore volume change rate with respect to the pore diameters based on a BJH method. The BJH method is a method that is widely used as a pore distribution analysis method.
In the case of carrying out a pore distribution analysis based on the BJH method, first, nitrogen is absorbed to and desorbed from a "sample" as an adsorbed molecule, thereby obtaining an adsorption isotherm. In addition, the thickness of an adsorption layer when an adsorbed molecule (for example, nitrogen) is desorbed stepwise from a state where pores are filled with the adsorbed molecule and the inner diameters (twice the core radii) of pores generated at that time are obtained based on the obtained adsorption isotherm, the pore radii rp are calculated based on a formula (5), and the pore volume is calculated based on a formula (6).
In addition, the pore volume change rate (dVp/drp) with respect to pore radii (2rp) is plotted from the pore radii and the pore volume, thereby obtaining a pore distribution curve (refer to the manuals of BELSORP-mini and BELSORP analysis software manufactured by MicrotracBEL Corp., pp. 85 to 88).

$$rp = t + rk \qquad (5)$$

$$Vpn = Rn \cdot dVn - Rn \cdot dtn \, c \cdot \Sigma Apj \qquad (6)$$

Here,

$$Rn = rpn2/(rkn - 1 + dtn)2 \qquad (7)$$

Here,

rp: Pore radius
rk: Core radius (inner diameter/2) in a case where an adsorption layer having a thickness t is adsorbed at the pressure to the inner wall of a pore having a pore radius rp.
Vpn: Pore volume when nth desorption of nitrogen occurs

dVn: Change amount at that time

dtn: Change amount of the thickness tn of the adsorption layer when nth desorption of nitrogen occurs

rkn: Core radius at that time

c: Fixed value

rpn: Pore radius when nth desorption of nitrogen occurs. In addition, $\Sigma Apj$ represents the integrated value of the areas of the wall surfaces of pores from j = 1 to j = n - 1.

<Pore diameters of micropores>

The pore diameters of micropores in the present technique can be calculated as, for example, the distribution of pores from the pore volume change rate with respect to the pores based on an MP method. In the case of carrying out a pore distribution analysis based on the MP method, first, nitrogen is absorbed to a "sample", thereby obtaining an adsorption isotherm. In addition, this adsorption isotherm is converted to the pore volume with respect to the thickness t of an adsorption layer (t-plotted). In addition, a pore distribution curve can be obtained based on the curve of this plot (a change amount of the pore volume with respect to the thickness t of the adsorption layer) (refer to the manuals of BELSORP-mini and BELSORP analysis software manufactured by MicrotracBEL Corp., pp. 72 to 73 and p. 82).

In the non localized density functional theory (NLDFT) regulated in JIS Z8831-2: 2010 "Pore size distribution and porosity of solid materials - Part 2: Analysis of mesopores and macropores by gas adsorption" and JIS Z 8831-3: 2010 "Pore size distribution and porosity of solid materials - Part 3: Analysis of micropores by gas adsorption", as analysis software, software installed in a surface area and pore size distribution analyzer "BELSORP-MAX" manufactured by MicrotracBEL Corp. is used. As preconditions, carbon black (CB) is assumed as a cylinder shape as a model, the distribution function of the pore distribution parameter is set to "no-assumption", and smoothing is carried out 10 times on the obtained distribution data.

Regarding each measurement method of the external surface area ($S_{EXT}$) value, the total pore volume ($V_{total}$) value and the micropore volume ($V_{micro}$) value, it is possible to refer to (1) "Characterization of Porous Solids and Powders: Surface Area, Pore Size and Density", Seymour Lowell, Joan E. Shields, Martin A. Thomas, Matthias Thommes, Springer Science & Business Media, 2006.; (2) "Introduction to Zeolite Science and Practice", P. A. Jacobs, E. M. Flanigen, J. C. Jansen, Herman van Bekkum, Elsevier, 2001.; (3) "Characterization of Micro/Mesoporous Materials by Physisorption: Concepts and Case Studies", Francisco J. Sotomayor, Katie A. Cychosz, Matthias Thommes, Acc. Mater. Surf. Res. 2018, Vol. 3 (No. 2), 34-50,; (4) Science of Adsorption, Seiichi Kondo, Tatsuo Ishikawa, Ikuo Abe, Maruzen Publishing Co., Ltd. 2001.

In the present technique, it is also possible to take the following configurations.

[1] A production method of a porous material containing Si and Al, in which a first Si source composition that is a plant-derived Si source and an Al source are used as at least raw materials. Preferably, a second Si source composition is further contained as a raw material. In addition, the first Si source composition is preferably a recovered material containing a Si source obtained by an alkali treatment and more preferably a recovered material containing a Si source obtained by alkali extraction, and the recovered material of the alkali extraction is still more preferably a recovered material obtained by alkali extraction in which a mole ratio of NaOH/Si is adjusted to a specific mole ratio.

[2] The production method of a porous material according to [1], in which the first Si source composition is a Si source recovered when a treatment for recovering the Si source is carried out after a carbonization treatment of a plant-derived raw material.

[3] The production method of a porous material according to [1] or [2], in which the first Si source composition has a silicon content of 100 g/L or more.

[4] The production method of a porous material according to any one of [1] to [3], in which a Si/Al composition ratio of the first Si source composition is 50 to 100 and/or a Si/Al composition ratio of the porous material is 1 to 120.

[5] The production method of a porous material according to any one of [1] to [4], in which the second Si source composition is a mineral-derived Si source and/or a plant-derived Si source.

[6] The production method of a porous material according to any one of [1] to [5], in which the second Si source composition is a treatment product obtained by a carbonization treatment of a plant-derived raw material.

[7] The production method of a porous material according to any one of [1] to [6], in which the second Si source composition is plant-derived ash.

[8] The production method of a porous material according to any one of [1] to [7], in which the first Si source composition is a Si source recovered when a treatment for recovering the Si source is carried out after a carbonization treatment of a plant-derived raw material, and

the second Si source composition is plant-derived ash.

[9] The production method of a porous material according to any one of [1] to [8], in which an organic structure-directing agent is further used as a raw material.

[10] The production method of a porous material according to any one of [1] to [9], in which a heating treatment of a mixture of the first Si source composition, which is a plant-derived Si source, and the Al source is carried out. Preferably, the mixture further contains a second Si source composition.

[11] The production method of a porous material according to [10], in which the heating treatment is hydrothermal synthesis.

[12] The production method of a porous material according to any one of [10] or [11], in which the heating treatment is carried out in order of stirring, aging and then hydrothermal synthesis.

[13] The production method of a porous material according to any one of [1] to [12], in which the first Si source composition is an aqueous solution recovered by removing silica from a plant-derived raw material containing the silica.

[14] The production method of a porous material according to any one of [1] to [13], in which the porous material is a zeolite.

[15] The production method of a porous material according to any one of [1] to [14], in which the plant is a gramineous plant.

[16] A porous material obtained by the production method of a porous material according to any one of [1] to [15]. The porous material is preferably one or two or more selected from the group consisting of an A type (LTA), a CHA type, zeolite X (FAU type), mordenite (MOR), a beta type (BEA), ZSM-5 (MFI) and zeolite Y (FAU type).

[17] A Si source composition for producing a porous material containing a Si source recovered when a treatment for recovering the Si source is carried out after a carbonization treatment of a plant-derived raw material.

[Examples]

Hereinafter, the present technique will be described in more detail based on experiment examples, examples and the like. The experiment examples, the examples and the like to be described below show examples of the representative experiment examples, examples and the like of the present technique, and the scope of the present technique is not narrowly interpreted by them.

Each measurement value in the following [examples] of the present technique can be obtained by the above-described "5. Each measurement method of present technique".

<Production Example A: Silica liquid waste at the time of producing first Si source composition/rice husk-derived porous carbon material (alkali treatment)>

A rice husk (silicon content rate of approximately 9 mass%), which is a plant-derived material, was carbonized at 400°C to 1400°C and then treated with an alkali of sodium hydroxide, thereby obtaining a porous carbon material. A silica liquid waste was obtained as a by-product at the time of this alkali treatment. This silica liquid waste was used as a raw material that is used for the production of the porous material of the present technique, and this silica liquid waste was used as a first Si source composition. Hereinafter, more detailed description will be made.

<Production Example A1>

First, a heating treatment (preliminary carbonization treatment) was carried out on a rice husk in an inert gas. As the preliminary carbonization treatment, specifically, a rice husk was heated at 500°C for 5 hours in a nitrogen stream to be carbonized, thereby obtaining a carbide. When such a treatment is carried out, it is possible to reduce or remove a tar component that may be generated at the time of next carbonization.

After the preliminary treatment, 10 g of this carbide was put into an alumina crucible, and the temperature was raised up to 800°C at a temperature raising rate of 5 °C/minute in a nitrogen stream (10 liters/minute). In addition, the carbide was carbonized at 800°C for 1 hour to be converted to a carbonaceous substance (porous carbon material precursor) and then cooled to room temperature. During the carbonization and the cooling, a nitrogen gas was caused to continuously flow. The preliminary treatment is possible even without particularly controlling the temperature raising rate as long as the temperature of the carbonization treatment is controlled.

Next, the porous carbon material precursor was immersed in a 30 mass% sodium hydroxide aqueous solution at a temperature within 80°C to 100°C for one night (approximately 12 hours), next, a heating treatment was carried out in a pressure-resistant container at 100°C for 1 hour to carry out an alkali treatment, and then the porous carbon material precursor was washed using water until the pH reached 7. An alkali treatment liquid waste generated as described above (pH: 13 or higher) was recovered and stored at normal temperature of approximately 10°C to 30°C for approximately 1 day. This alkali treatment liquid waste was used as the silica liquid waste that is used in the present technique (silica liquid waste of Production Example A1).

The porous carbon material precursor was immersed in a 5 mass% sodium hydroxide aqueous solution at a temperature within a range of 80°C to 100°C for one night (approximately 12 to 14 hours) and washed as described above to obtain an alkali treatment liquid waste. This alkali treatment liquid waste can be used as the silica liquid waste.

The washed carbonaceous substance (porous carbon material precursor) was dried and then activated at 90°C with a water vapor stream to produce a porous carbon material.

The silica liquid waste obtained above was left to stand for one night and filtered with a paper filter of 0.1 μm or less and a glass filter to separate solid and liquid. The filtered silica liquid waste was used as the first Si source composition of the present technique.

The pH of the filtered silica liquid waste was 13.89, and, as a result of ICP atomic emission spectroscopy (ICP atomic emission spectrometer: ICPE-9000 manufactured by Shimadzu Corporation), Na was 820 g/L, Si was 245.5 g/L, Si/Na was 0.25, and Si/Al was 73.34. Carbon was not detected, and it was considered that a carbon-based material was removed by the filtration.

<Production Example B: Second Si source composition/rice husk-derived silica ash>

<Production Example B 1>

A rice husk, which is a plant-derived material, was fired at 500°C for 10 hours while an air was blown at an air flow rate of 200 mL/minute, thereby obtaining the silica ash of the rice husk. The yield at this time was 19.5% (Production Example B1). The yield (%) was calculated by (ash of rice husk/rice husk) × 100. This silica ash of the rice husk was used as the plant-derived second Si source composition in the present technique.

As a result of the same ICP atomic emission spectroscopy as in Production Example A of the ash of the rice husk, for this silica ash of the rice husk, Si (silicon)-91.11%, K (potassium)-5.15%, Ca (calcium)-1.06%, Fe (iron)-0.51%, P (phosphorus)-0.48% and others-1.69% (Al was 1.0% or less).

<Production Example B2-4>

In addition, the ash of a rice husk was obtained in the same manner except that the temperature and time of the firing conditions were changed to "400°C and 5 hours", and the yield was 20% (Production Example B2).

In addition, the ash of a rice husk was obtained in the same manner except that the temperature and time of the firing conditions were changed to "400°C and 10 hours", and the yield was 20% (Production Example B3).

In addition, the ash of a rice husk was obtained in the same manner except that the temperature and time of the firing conditions were changed to "600°C and 10 hours", and the yield was 20% (Production Example B4).

Production Example B1 (500°C and 10 hours) is preferable from the viewpoint of the production time and the yield.

<Production Example B5>

A porous carbon material precursor was obtained in the same manner as in the production method of the porous carbon material precursor of Production Example A1, and this was used as rice husk charcoal (RHC). Furthermore, this rice husk charcoal was fired at 550°C for 8 hours while an air was blown at an air flow rate of 300 mL/minute, thereby obtaining the silica ash of a rice husk.

The rice husk charcoal obtained in Production Example B2-5 can also be used as the first Si source composition.

In addition, as the characterization of the rice husk charcoal (RHC), the TG of the rice husk charcoal was measured. As a result, for water, the temperature is 20°C to 150°C and the content rate is 32.2%, for carbon system, the temperature is 150°C to 550°C and the content rate is 24.8%, and, for silicon system, the temperature is 550°C to 1000°C and the content rate is 42.0%.

<Production Example C: Production method of porous material>

The outline of each production method of Examples 1 to 4 and Comparative Example 1 is shown in Table 1.

[Table 1]

Table 1: Outline of production method of present technique

| No. | Inorganic porous material | Gel composition (mole ratio) of raw material | Raw material 1 | Aging step | Raw material 2 | Hydrothermal synthesis |
|---|---|---|---|---|---|---|
| Example 1 | ZSM-5 (MFI type) | Si:TPAOH:Al:Na+:$H_2O$ = 1:0.25:0.1:0.1:10 | Liquid waste, ash, TPAOH | 80°C for 24 hours | $Al(NO_3)_3$ | 170°C for 24 hours |
| Comparative Example 1 | ZSM-5 (MFI type) | TEOS:TPAOH:Al:Na+: $H_2O$ = 1:0.25:0.04:0.1: 8.3 to 100 | TEOS, water, TPAOH | 80°C for 24 hours | $Al(NO_3)_3$ | 170°C for 24 hours |
| Example 2 | Mordenite (mordenite) | Si:Al:Na+:$H_2O$ = 1:0.1: 0.4:25 | Liquid waste, ash, $NaAlO_2$ | 80°C for 24 hours | None | 170°C for 24 hours |
| Example 3 | ZSM-5 (MFI type) | Si:Al:Na+:$H_2O$ = 1:0.067: 0.4:25 | Liquid waste, ash, $NaAlO_2$ | 80°C for 24 hours | None | 170°C for 24 hours |
| Example 4 | Zeolite A (LTA type) | Si:Al:Na+:$H_2O$ = 1:1:6: 150 | Liquid waste, ash, $NaAlO_2$ | None | None | 120°C for 48 hours |

Before the preparation of a Si source composition, the composition, such as $H_2O$, Si and Na, of the silica liquid waste and the composition, such as Si/Na, of the silica ash were confirmed, respectively, by the ICP analysis, the raw materials of a porous material such as the silica liquid waste and the silica ash were mixed together, and a gel that was to be an intended mole composition was adjusted. Specifically, the ash of the rice husk (Production Example B1) was added to the above-obtained silica liquid waste (Production Example A1), thereby preparing a plant-derived Si source composition.

An Al source composition was further added to these raw materials of the Si source composition, thereby producing a raw material of the porous material. At this time, since the silica liquid waste contained water, the porous material could be produced without particularly blending water, but water was added as appropriate in order to adjust each mole ratio of the gel composition of the raw material.

A first Si source composition (first Si source solution), a second Si source composition and an Al source were prepared so as to form a predetermined gel composition (mole ratio) in the end, thereby obtaining a raw material of the porous material.

At this time, an organic structure-directing agent was used as appropriate.

The use of the plant-derived Si source composition made it possible to produce a silica-based porous material regardless of the use of an organic structure-directing agent (OSDA).

<Example 1: Synthesis of MFI type zeolite using plant-derived Si source composition>

A raw material composition was prepared using, as a raw material of Example 1, the silica liquid waste of Production Example A1, the silica rice husk charcoal component of Production Example B1, an organic structure-directing agent (OSDA: TPAOH), water and $Al(NO_3)_3 \cdot 9H_2O$ such that the final gel composition (mole ratio) became Si:TP-AOH:Al:$N_a$+:$H_2O$ = 1:0.25:0.1:0.1:10. At this time, $Al(NO_3)_3 \cdot 9H_2O$ was introduced into the raw material composition after aging and before hydrothermal synthesis.

The silica liquid waste of Production Example A1, the silica rice husk charcoal component of Production Example B1, an organic structure-directing agent (OSDA: TPAOH) and water were put into an autoclave container (a sealed container having a Teflon (registered trademark) inside and an SUS cover outside) and mixed together, thereby preparing a raw material composition a1. The raw material composition a1 was aged at 80°C for 24 hours in the autoclave container (in a sealed state) while being rotated and stirred. After that, $Al(NO_3)_3 \cdot 9H_2O$ was further introduced as a raw material a2 into the raw material composition a1, thereby preparing a final raw material composition A.

This raw material composition A was hydrothermally synthesized in the autoclave container (in a sealed state) at 170°C for 24 hours. A substance produced by this reaction was used as ZSM-5-As made.

After that, a reaction was caused in the atmosphere at 550°C for 10 hours, and excess water or OSDA was evaporated, thereby obtaining Na-ZSM-5 of Example 1. After that, ions were exchanged using 2.5 M of $NH_4NO_3$ (am-

monium nitrate), thereby obtaining a zeolite of Example 1. This zeolite was confirmed to be H-ZSM-5 (MFI type) by XRD or the like.

<Comparative Example 1: Synthesis of zeolite using mineral-based silica source>

A raw material composition was prepared using, as a raw material of Comparative Example 1, a Si source as described below, an Al source, water and an organic structure-directing agent such that the final gel composition (mole ratio) became TEOS:TPAOH:Al:Na$^+$:H$_2$O = 1:0.25:0.04:0.1:8.3 to 100. As the Si source, tetraethoxysilane (TEOS), which is mineral-based silica and can be produced as a commercially available product, was used.

Tetraethoxysilane (TEOS), an organic structure-directing agent (OSDA: TPAOH) and water were put into an autoclave container and mixed together, thereby preparing a raw material composition b1. The raw material composition b1 was aged at 80°C for 24 hours in the autoclave container (in a sealed state) while being rotated and stirred.

After that, Al(NO$_3$)$_3$ ·9H$_2$O was further introduced as a raw material b2 into the raw material composition b1, thereby preparing a final raw material composition B. This raw material composition B was hydrothermally synthesized in the autoclave container (in a sealed state) at 170°C for 24 hours (a substance produced by this reaction was used as ZSM-5-As made).

After that, a reaction was caused in the atmosphere at 550°C for 10 hours, and excess water or OSDA was evaporated, thereby obtaining Na-ZSM-5 of Comparative Example 1. After that, ions were exchanged using 2.5 M of NH$_4$NO$_3$ (ammonium nitrate), thereby obtaining a zeolite of Comparative Example 1. This zeolite was confirmed to be H-ZSM-5 (MFI type) by XRD or the like.

<Example 2: Zeolite synthesis in absence of OSDA using plant-derived Si source composition>

A raw material composition was prepared using, as a raw material of Example 2, the silica liquid waste of Production Example A1, the silica rice husk charcoal component of Production Example B1, water and NaAlO$_2$ such that the final gel composition (mole ratio) became SiAl:Na$_a$+:H$_2$O = 1:0.1:0.4:25. In Example 2, an organic structure-directing agent (OSDA: TPAOH) was not used.

The silica liquid waste of Production Example A1, the silica rice husk charcoal component of Production Example B1, NaAlO$_2$ and water were put into an autoclave container (a sealed container having a Teflon (registered trademark) inside and an SUS cover outside) and mixed together, thereby preparing a raw material composition C. This raw material composition C was aged at 80°C for 24 hours in the autoclave container (in a sealed state) while being rotated and stirred. After that, this raw material composition C was hydrothermally synthesized at 170°C for 24 hours in the autoclave container (in a sealed state), and then ions were exchanged in a 2.5 M NH$_4$NO$_3$ (ammonium nitrate) aqueous solution, thereby obtaining a zeolite of Example 2. This zeolite was confirmed to be mordenite by XRD or the like.

<Example 3: Synthesis of MFI type zeolite using plant-derived Si source composition>

A raw material composition was prepared using, as a raw material of Example 3, the silica liquid waste of Production Example A1, the silica rice husk charcoal component of Production Example B1, water and NaAlO$_2$ such that the final gel composition (mole ratio) became Si:Al:Na$^+$:H$_2$O = 1:0.067:0.4:25. In Example 3, an organic structure-directing agent (OSDA: TPAOH) was not used.

The silica liquid waste of Production Example A1, the silica rice husk charcoal component of Production Example B1, NaAlO$_2$ and water were put into an autoclave container and mixed together, thereby preparing a raw material composition D.

This raw material composition D was aged at 80°C for 24 hours in the autoclave container (in a sealed state) while being rotated and stirred. After aged, the raw material composition D was hydrothermally synthesized at 170°C for 24 hours in the autoclave container (in a sealed state). After the hydrothermal synthesis, ions were exchanged in a 2.5 M NH$_4$NO$_3$ (ammonium nitrate) aqueous solution, thereby obtaining a zeolite of Example 3. This zeolite was confirmed to be ZSM-5 (MFI type) by XRD or the like.

<Example 4: Synthesis of LTA type zeolite using plant-derived Si source composition>

A raw material composition was prepared using, as a raw material of Example 4, the silica liquid waste of Production Example A1, the silica rice husk charcoal component of Production Example B1, water and NaAlO$_2$ such that the final gel composition (mole ratio) became SiAl:Na$_a$+:H$_2$O = 1:1:6:150. In Example 4, an organic structure-directing agent (OSDA: TPAOH) was not used.

The silica liquid waste of Production Example A1, the silica rice husk charcoal component of Production Example B1, NaAlO$_2$ and water were put into an autoclave container and mixed together, thereby preparing a raw material composition E.

This raw material composition E was hydrothermally synthesized at 120°C for 48 hours in the autoclave container (in a sealed state) while being rotated and stirred. After the hydrothermal synthesis, furthermore, the raw material composition E was washed, dried and fired in the atmosphere at 550°C for 10 hours, thereby obtaining a zeolite of Example 4. This zeolite was confirmed to be zeolite A (LTA type) by XRD or the like. This zeolite of Example 4 was a zeolite having a legislative shape in which each side was approximately 3 $\mu$m.

<Example 1 and Comparative Example 1>

The characteristics of the zeolite of Example 1 are that the zeolite synthesis steps were almost the same, but the derivation of the raw material was significantly different from conventional mineral-derived zeolites.

The XRD results of the zeolites of Example 1 and Comparative Example 1 are shown in Fig. 1. Since MFI phases were shown in both, the zeolites of Example 1 and Comparative Example 1 were an MFI type. This shows that MFI type zeolites can be synthesized using a plant-derived Si source (specifically, the plant-derived silica liquid waste and the plant-derived silica ash). Furthermore, mineral-based silica as in Comparative Example 1 is produced at approximately 1000°C, and thus the production energy of mineral-based silica is extremely high. On the other hand, the plant-derived silica of Example 1 enabled the effective use of a by-product that was supposed to be disposed of and was produced at a temperature within a range of 500°C to 100°C, and thus it can be said that the production energy is low.

Furthermore, the adsorption isotherms of the zeolites of Example 1 and Comparative Example 1 are shown in Fig. 2. Fig. 2 shows that there is a tendency that pores in the zeolite of Example 1 are extremely larger than pores in the zeolite of Comparative Example 1. Both are the same MFI type zeolites, but the MFI type zeolite for which the plant-derived Si source was used had larger pores than the MFI type zeolite for which the mineral-based Si source was used, which is considered as a different characteristic from zeolites produced with a conventional mineral-based raw material.

In addition, it is considered that plant-derived Si sources (preferably plant-derived silica liquid waste) are desirable as a raw material at the time of producing zeolites having a new characteristic and a new function.

<Examples 1 to 4>

In the production method of an inorganic porous material of the present technique, the plant-derived Si source (preferably the plant-derived silica liquid waste) is capable of reducing the production energy, which is preferable.

Furthermore, in a case where a plant-derived silica liquid waste and/or a plant-derived ash is used as a raw material as in Examples 1 to 4, there is a favorable advantage that zeolites can be produced even without using organic structure-directing agents.

In addition, in a case where a plant-derived silica liquid waste is used as a first Si source, broad kinds of zeolites can be appropriately produced using different Si source, Al source, amount of water or the like.

In the production method of the present technique, broad kinds of zeolites, such as an MFI type zeolite, an LTA type zeolite and mordenite can be appropriately produced by adjusting the Si/Al (mole ratio) of the gel composition and the ratio of the amounts of water (refer to Fig. 1 to Fig. 7).

Table 2 shows Si/Al (gel) in the raw materials, Si/Al (product) in the obtained porous materials, the specific surface area ($S_{BET}$) values by the nitrogen BET method, the external surface area ($S_{EXT}$) values obtained by analyzing the nitrogen adsorption evaluation data by the t-plot method, the total pore volume ($V_{total}$) values obtained by the BET method and the micropore volume ($V_{micro}$) values obtained by analyzing the nitrogen adsorption evaluation data by the t-plot method.

The external surface area ($S_{EXT}$) values obtained by analyzing the nitrogen adsorption evaluation data by the t-plot method can be measured with reference to "Science of Adsorption; Seiichi Kondo, Tatsuo Ishikawa and Ikuo Abe; Maruzen Publishing Co., Ltd. 2001, pp. 48 to 50". In addition, for the total pore volume ($V_{total}$) values obtained by the BET method, $V_{total}$ can be obtained by the BET method. In addition, the micropore volume ($V_{micro}$) values obtained by analyzing the nitrogen adsorption evaluation data by the t-plot method can be measured with reference to "Science of Adsorption; Seiichi Kondo, Tatsuo Ishikawa and Ikuo Abe; Maruzen Publishing Co., Ltd. 2001, pp. 48 to 50".

As shown in Table 2, for the MFI type zeolites (Examples 1 and 3), Si/Al (product) (mass ratio) was 10 to 20, the ($S_{BET}$) values were 100 to 450 m²/g, the ($S_{EXT}$) values were 40 to 310 m²/g, the ($V_{total}$) values were 0.1 to 0.9 cm³/g and the ($V_{micro}$) values were within a range of 0.2 to 0.9 cm³/g.

In addition, for mordenite (Example 2), Si/Al (product) (mass ratio) was 10 to 20, the ($S_{BET}$) value was 100 to 300 m²/g, the ($S_{EXT}$) value was 10 to 50 m²/g, the ($V_{total}$) value was 0.1 to 0.5 cm³/g and the ($V_{micro}$) value was within a range of 0.05 to 0.2 cm³/g.

In addition, for the LTA type zeolite (Example 4), Si/Al (product) (mass ratio) was within a range of 0.1 to 1.5.

The above-described facts show that the present technique is capable of producing a zeolite in which the average particle diameter is 50 nm or more (in the case of MFI type, 50 to 500 nm is preferable), the ($S_{BET}$) value, which is a specific surface area by the nitrogen BET method, is 100 to 450 $m^2/g$, the external surface area ($S_{EXT}$) values obtained by analyzing the nitrogen adsorption evaluation data by the t-plot method is 20 to 400 $m^2/g$, the total pore volume ($V_{total}$) values obtained by the BET method is 0.1 to 1.0 $cm^3/g$, and the micropore volume ($V_{micro}$) values obtained by analyzing the nitrogen adsorption evaluation data by the t-plot method is 0.01 to 0.2 $cm^3/g$.

[Table 2]

Table 2: Zeolites of Examples 1 to 4 and Comparative Example 1

| | Si/Al (gel) | Si/Al (product) | $S_{BET}$ [a] ($m^2g^{-1}$) | $S_{EXT}$ [b] ($m^2g^{-1}$) | $V_{Total}$ [a] ($cm^3g^{-1}$) | $V_{micro}$ [b] ($cm^3g^{-1}$) |
|---|---|---|---|---|---|---|
| Example 1 | 10 | 13.7 (mole ratio) 14.2 (mass ratio) | 405.8 | 305.5 | 0.81 | 0.05 |
| Example 2 | 10 | 14.9 (mole ratio) 15.5 (mass ratio) | 267.5 | 35.4 | 0.22 | 0.1 |
| Example 3 | 15 | 17.6 (mole ratio) 18.3 (mass ratio) | 111.2 | 54.4 | 0.2 | 0.02 |
| Comparative Example 1 | 25 | 25.2 (mole ratio) 26.2 (mass ratio) | 315.2 | 106.9 | 0.46 | 0.15 |
| Example 4 | 1 | 1.1 (mole ratio) 1.1 (mass ratio) | Not measured | Not measured | Not measured | Not measured |
| a) By Brunauer-Emmett-Teller (BET) equation. b) By the t-plot method. Si/Al (gel): Mole ratio of silicon to aluminum of gel that serves as raw material Si/Al (product): Mole ratio of silicon to aluminum of gel of completed material | | | | | | |

<Production Example D: Production of recovered material containing Si source obtained by alkali extraction>

A porous carbon material precursor used for alkali extraction was obtained in the same manner as in the production method of a porous carbon material precursor of Production Example A1, and this will be referred to as rice husk charcoal (RHC) below.

<Production Examples D1 to 3: Alkali extracts (ES-1, ES-2 and ES-3)>

As Production Example D1, 5 g of water ($H_2O$) was added to 25 g of the rice husk charcoal, an alkali solution containing this rice husk charcoal was adjusted such that the mole ratio of NaOH/Si became 0.5, and the adjusted alkali solution containing the rice husk charcoal was alkali-extracted by being stirred at 80°C for 24 hours and then filtered, thereby obtaining a silica extract (ES-1).

As Production Example D2, a silica extract (ES-2) was obtained in the same manner as the silica extract (ES-1) except that the alkali solution containing the rice husk charcoal was adjusted such that the mole ratio of NaOH/Si became 1. As Production Example D3, a silica extract (ES-3) was obtained in the same manner as the silica extract (ES-1) except that the alkali solution containing the rice husk charcoal was adjusted such that the mole ratio of NaOH/fSi became 3. These were regarded as recovered materials containing a Si source obtained by alkali extraction (ES-1, ES-2 and ES-3, respectively) and used as first Si source compositions.

The Si amount in this "NaOH/Si" was calculated by the weight residue (42%) by TG (thermogravimetric analysis) $\times$ 90% (the Si content rate of the rice husk charcoal).

TG was measured using Rigaku Thermo plus EVO II.

The Si content rate of the rice husk charcoal was measured by the ICP atomic emission spectroscopy in the same manner as in Production Example B1 after the rice husk was regarded as rice husk charcoal under the same conditions as in Production Example B1.

[Table 3]

| Table 3 | Alkali extract | | |
|---|---|---|---|
| | ES-1 | ES-2 | ES-3 |
| NaOH/Si mole ratio (theoretical ratio) | 0.5 | 1 | 3 |
| Si measured concentration[a] [mol/L] (g/L) | 0.958 (26.92 g/L) | 1.23 (34.56 g/L) | 1.27 (35.69 g/L) |
| Na measured concentration[b] [mol/L] (g/L) | 0.525 (12.02 g/L) | 1.00 (22.90 g/L) | 2.45 (56.12 g/L) |
| Na/Si measured ratio (mass/mass ratio) | 0.549 (0.446 mass ratio) | 0.815 (0.663 mass ratio) | 1.93 (1.572 mass ratio) |
| Si/Na composition ratio (mass/mass) | 2.242 | 1.508 | 0.636 |
| Extraction efficiency[c] [%] | 79.8 | 103 | 106 |
| a: Measured by ICP-AES. b: Measured by AAs. c: Si theoretical concentration calculated as 1.20 mol/L. (g/L) calculated with Si atomic weight of 28.1 g and Na atomic weight of 22.9. | | | |

<Examples 5 and 6: Synthesis of LTA type zeolite>

An LTA type zeolite was synthesized using the alkali extract (ES-3) obtained in

<Production Example D> as a first Si source composition, which was a raw material.

In Example 5, Al(OH)$_3$, which was an Al source, was added to the alkali extract (ES-3), which was the first Si source composition, such that the gel composition (mole ratio) of the raw material became SiAl:Na:H$_2$O = 1:2:1.93:45, thereby obtaining a raw material of a porous material. This raw material of a porous material was stirred at room temperature (20°C to 30°C) for 2 hours, then, hydrothermally synthesized in the atmosphere at 90°C for 24 hours in a stationary state, then, filtered, washed with water and ethanol at room temperature and dried at 100°C to synthesize a zeolite, and this zeolite was regarded as a zeolite of Example 5.

In Example 6, a zeolite was synthesized in the same manner as in Example 5 except that water and Al(OH)$_3$, which was an Al source, were added to the alkali extract (ES-3), which was the first Si source composition, such that the gel composition (mole ratio) of the raw material became SiAl:Na:H$_2$O = 1:2:1.93:55, and this zeolite was regarded as a zeolite of Example 6.

The X-ray diffraction method (XRD), the ICP analysis (ICP-AES) and the atomic absorption spectrometry (AAs) were carried out according to <5. Each measurement method of present technique>.

The XRD results of the zeolites of Example 5 and Comparative Example 6 are shown in Fig. 8, LTA in Fig. 8 is the zeolite of Example 5, LTA-3 is the zeolite of Example 5, and LTA-4 is the zeolite of Example 6. Fig. 9 shows the SEM photographs of the zeolite (LTA-3) of Example 5 on the left side and the SEM photographs of the zeolite (LTA-4) of Example 6 on the right side. In the zeolite (LTA-3) of Example 5 of Fig. 8, the SOD was slightly shown in the black circle portions, but the zeolite (LTA-4) of Example 6 was a pure phase LTA type zeolite. As shown in Fig. 9, LTA crystals were observed in the zeolite (LTA-3) of Example 5 and the zeolite (LTA-4) of Example 6 on the right side, and the average particle diameters thereof were 1 to 2 μm.

Furthermore, Si/Al's of the zeolite (LTA-3) of Example 5 and the zeolite (LTA-4) of Example 6 on the right side were 0.88 and 0.90, respectively, and the fact that Si/Al was less than 1 was considered to be attributed to the presence of amorphous alumina. This Si/Al was measured by ICP-AES analysis.

What has been described above shows that the syntheses of LTA type zeolites were succeeded by using the first Si source composition of ES-3, which was an alkali extract, and the Al source as raw materials and adjusting the gel composition ratio. The use of this alkali extract as a raw material made it possible not to further use a second Si source composition as a raw material as for the zeolite of Example 4 and made it possible to obtain the LTA type zeolite even without carrying out firing as in Example 4.

Furthermore, it was possible to confirm that, in a case where the plant-derived first Si source composition was used as a raw material, the Si/Al ratio of the synthetic gel and the amount of $H_2O$ had an influence on the generation of LTA type zeolites. Furthermore, the Si/Al ratio of LTA was approximately 0.89, and this ratio is considered to be affected by the remaining $Al(OH)_3$.

<Examples 7 to 10: Synthesis of CHA type zeolite>

CHA type zeolites were synthesized using the alkali extract (ES-1) obtained in <Production Example D> as a first Si source composition, which was a raw material. At this time, at the time of synthesizing zeolites of Examples 7 to 10, there were both cases where an organic structure-directing agent (OSDA) was added and was not added.

At the time of synthesizing zeolites of Examples 7 to 10, the organic structure-directing agent was added such that the seed crystal of the CHA type zeolite became 20 wt% of the mass of the raw material (liquid) of the porous material before hydrothermal synthesis. As this seed crystal, a seed crystal synthesized according to ⋯⋯ publication was used. The yield at the time of having been synthesized was obtained by [the mass of the recovered solid/(the mass of the seed crystal + the mass of $SiO_2$ + the mass of $Al_2O_3$) injected into an aqueous solution containing an Al source and an alkali metal source] $\times$ 100 (%). These $SiO_2$ and $Al_2O_3$ are $SiO_2$ and $Al_2O_3$ in the alkali extract (ES-1).

In Example 7, the alkali extract (ES-1), which was a first Si source composition, was added to an aqueous solution containing an Al source and an alkali metal source, which contained $Al(OH)_3$, which was an Al source, NaOH and KOH, which were alkali metal sources, and water, such that the gel composition (mole ratio) of the raw material SiAl:Na:K:$H_2O$ = 1:0.05:0.6:0.1:100, thereby obtaining a raw material of a porous material. This raw material of a porous material was stirred at room temperature (20°C to 30°C) for 2 hours, the seed crystal of the CHA type zeolite was added to and mixed with, then, the mixture was hydrothermally synthesized in the atmosphere at 150°C for 72 hours, then, filtered, washed with water and ethanol and dried at 100°C to synthesize a zeolite, and this zeolite was regarded as a zeolite of Example 7.

In Example 8, a zeolite was synthesized in the same manner as in Example 7 except that the alkali extract (ES-1), which was a first Si source composition, was added to an aqueous solution containing an Al source and an alkali metal source, which contained $Al(OH)_3$, which was an Al source, NaOH and KOH, which were alkali metal sources, and water, such that the gel composition (mole ratio) of the raw material SiAl:Na:K:$H_2O$ = 1:0.05:0.8:0.1:100, and this zeolite was regarded as a zeolite of Example 8.

In addition, in Example 9, a zeolite was synthesized in the same manner as in Example 7 except that the temperature of the hydrothermal synthesis was set to 160°C, and this zeolite was regarded as a zeolite of Example 9.

In addition, in Example 10, a zeolite was synthesized in the same manner as in Example 8 except that the temperature of the hydrothermal synthesis was set to 160°C, and this zeolite was regarded as a zeolite of Example 10.

The X-ray diffraction method (XRD), the ICP analysis (ICP-AES) and the atomic absorption spectrometry (AAs) were carried out according to <5. Each measurement method of present technique>.

As a result of XRD of the zeolites of Examples 7 to 10, it was possible to confirm that CHA type zeolites were synthesized in all of the examples, and the yields thereof were obtained.

The zeolite (CHA-1) of Example 7 contained, in addition to the CHA type, mordenite (MOR type), and the yield was 43%.

The zeolite (CHA-2) of Example 8 was a CHA type zeolite, and the yield was 28%.

The zeolite (CHA-3) of Example 9 contained, in addition to the CHA type, mordenite (MOR type), and the yield was 38%. When the mole ratio of Na in Example 9 was 0.8, it was possible to synthesize a CHA type zeolite in the absence of an OSDA.

The zeolite (CHA-4) of Example 10 was a CHA type zeolite, and the yield was 28%. When the mole ratio of Na in Example 10 was 0.8, it was possible to synthesize a CHA type zeolite in the absence of an OSDA.

<Examples 11 to 14: Synthesis of CHA type zeolite>

CHA type zeolites were synthesized using the obtained alkali extract (ES-1) as a first Si source composition, which was a raw material. At this time, zeolites of Examples 11 to 14 were synthesized in the same manner as in the <Examples 7 to 10: Synthesis of CHA type zeolite> except that the mole ratio of Na was fixed to 0.8 and the mole ratio of Al was changed to 0.1 or 0.2. At the time of this synthesis, an organic structure-directing agent (OSDA) was not added.

In Example 11, a zeolite was synthesized (at a hydrothermal synthesis temperature of 150°C) in the same manner as in Example 7 except that the alkali extract (ES-1), which was a first Si source composition, was added to an aqueous solution containing an Al source and an alkali metal source, which contained $Al(OH)_3$, which was an Al source, NaOH and KOH, which were alkali metal sources, and water, such that the gel composition (mole ratio) of the raw material $Si:Al:Na:K:H_2O$ = 1:0.1:0.8:0.1:100, and this zeolite was regarded as a zeolite of Example 11.

In Example 12, a zeolite was synthesized (at a hydrothermal synthesis temperature of 150°C) in the same manner as in Example 11 except that the alkali extract (ES-1), which was a first Si source composition, was added to an aqueous solution containing an Al source and an alkali metal source, which contained $Al(OH)_3$, which was an Al source, NaOH and KOH, which were alkali metal sources, and water, such that the gel composition (mole ratio) of the raw material $SiAl:Na:K:H_2O$ = 1:0.1:0.8:0.2:100, and this zeolite was regarded as a zeolite of Example 11.

In addition, in Example 13, a zeolite was synthesized in the same manner as in Example 11 except that the temperature of the hydrothermal synthesis was set to 160°C, and this zeolite was regarded as a zeolite of Example 13.

In addition, in Example 14, a zeolite was synthesized in the same manner as in Example 12 except that the temperature of the hydrothermal synthesis was set to 160°C, and this zeolite was regarded as a zeolite of Example 14.

The X-ray diffraction method (XRD), the ICP analysis (ICP-AES) and the atomic absorption spectrometry (AAs) were carried out according to <5. Each measurement method of present technique>.

The XRD results of the individual zeolites of Examples 11 to 14 are shown in Fig. 10, Seed-CHAin Fig. 10 is the seed crystal of the CHA type zeolite, CHA-5 is the zeolite of Example 11, CHA-6 is the zeolite of Example 12, CHA-7 is the zeolite of Example 13, and CHA-8 is the zeolite of Example 14. Fig. 11 shows the individual SEM photographs of the zeolite (CHA type) of Example 11 in CHA-5 on the upper left side, the zeolite (CHA type) of Example 12 in CHA-6 on the upper right side, the zeolite (CHA type) of Example 13 in CHA-7 on the lower left side and the zeolite (CHA type) of Example 14 in CHA-8 on the lower right side.

In the X-ray diffraction method (XRD), the zeolites (CHA-5, CHA-6, CHA-7 and CHA-8) of Examples 11 to 14 in Fig. 8 were admitted as single-phased CHA type zeolites, and MOR type zeolites that become an impure phase were not observed. It was possible to synthesize CHA type zeolites in the absence of an OSDA from the above-obtained alkali extract. The yield of the CHA type zeolite of Example 11 was 55%, the yield of the CHA type zeolite of Example 12 was 87%, the yield of the CHA type zeolite of Example 13 was 51%, the yield of the CHA type zeolite of Example 14 was 87%, the yield could be increased by fixing the mole ratio of Na to 0.8 and increasing the mole ratio of Al to 0.1 or 0.2; however, conversely, the crystallization degree decreased. In addition, it was possible to confirm that the synthesis temperatures rarely affect the yield and the crystallization degree.

As shown in Fig. 11, among the zeolites of Examples 11 to 14, a small amount of an MOR type zeolite (needle-like particle) was observed in the zeolite (CHA-5) of Example 11 and the zeolite (CHA-7) of Example 13 in which dish-like secondary particles (having an average particle diameter of 2 to 4 $\mu$m) generated from nanoparticles were observed and the mole ratio of Al was 0.1; however, in the zeolite (CHA-6) of Example 12 and the zeolite (CHA-8) of Example 14 in which the mole ratio of Al was 0.2, an MOR type zeolite (needle-like particle) was not observed, and a single-phased CHA type zeolite was admitted.

Furthermore, the Si/Al's in the CHA type zeolite (CHA-5) of Example 11, the CHA type zeolite (CHA-6) of Example 12, the CHA type zeolite (CHA-7) of Example 13 and the CHA type zeolite (CHA-8) of Example 14 were 3.93, 3.26, 3.79 and 3.25, respectively. This Si/Al was measured by ICP-AES analysis.

<Production Example E: Characterization of recovered material containing Si source obtained by alkali extraction>

A porous carbon material precursor for which alkali extraction was used was obtained in the same manner as in the production method of a porous carbon material precursor of Production Example A1, and this will be referred to as rice husk charcoal (RHC) below.

<Production Examples E1 to 4: Alkali extract>

As Production Examples E1 to 4, four raw materials were prepared by adding 5 g of water ($H_2O$) to 25 g of rice husk charcoal, four alkali solutions containing the rice husk charcoal were adjusted such that the mole ratios of NaOH/Si became 1, 2, 3 and 4, respectively, the four adjusted alkali solutions containing the rice husk charcoal were stirred at 80°C for 24 hours to extract silica and then filtered, thereby obtaining silica extracts Z-1 to Z-4. The amount of Si in "NaOH/Si", the Si content rate of the rice husk charcoal and the like were calculated in the same manner as in <Production Example D>.

The results of the individual alkali extracts are shown in Table 4.

As a result of adjusting the mole ratio (theoretical ratio) of NaOH/Si of the Si source extract from the rice husk charcoal to 1 to 4, there was a tendency that the color of the extract became darker as the amount of NaOH used increased. The Si concentration or the Si extraction efficiency was approximately the same and approximately 86% regardless of the amount of NaOH used.

[Table 4]

| Table 4 | Alkali extract | | | |
|---|---|---|---|---|
| | Z-1 | Z-2 | Z-3 | Z-4 |
| NaOH/Si mole ratio Theoretical ratio (calculated) | 1 | 2 | 3 | 4 |
| Si theoretical concentration [mol/L] | 1.2 | 1.2 | 1.2 | 1.2 |
| Si measured concentration[a] [mol/L] (g/L) | 1.02 (28.66 g/L) | 1.04 (29.22 g/L) | 1.02 (28.66 g/L) | 1.03 (28.94 g/L) |
| Si extraction efficiency[c] [%] | 85.4 | 87.2 | 85.7 | 86.3 |
| a: Measured by ICP-AES. b: Measured by AAs. (g/L) calculated with Si atomic weight of 28.1 g and Na atomic weight of 22.9. | | | | |

<Examples 15 to 18: LTA type zeolite and FAU type zeolite>

Zeolites were synthesized using the obtained the alkali extracts (Z-1 to Z-4) obtained in <Production Example E> as a first Si source composition, which was a raw material. The X-ray diffraction method (XRD), the ICP analysis (ICP-AES) and the atomic absorption spectrometry (AAs) were carried out according to

<5. Each measurement method of present technique>.

In Example 15, $Al(OH)_3$, which was an Al source, was added to the alkali extract (Z-3), which was a first Si source composition, such that the gel composition (mole ratio) of the raw material became $SiAl:Na:H_2O = 1:2:3:55$, and a raw material of a porous material was obtained. This raw material of a porous material was stirred at room temperature (20°C to 30°C) for 2 hours, then, hydrothermally synthesized in the atmosphere at 90°C for 24 hours in a stationary state, then, filtered, washed with water and ethanol and dried at 100°C to synthesize a zeolite, and this zeolite was regarded as a zeolite of Example 15.
In Example 16, a zeolite was synthesized in the same manner as in Example 5 except that water and $Al(OH)_3$, which was an Al source, were added to the alkali extract (Z-3), which was a first Si source composition, such that the gel composition (mole ratio) of the raw material became $SiAl:Na:H_2O = 1:(2/3):3:55$, and this zeolite was regarded as a zeolite of Example 16.
In Example 17, $Al(OH)_3$, which was an Al source, was added to the alkali extract (Z-4), which was a first Si source composition, such that the gel composition (mole ratio) of the raw material became $SiAl:Na:H_2O = 1:2:4:55$, and a raw material of a porous material was obtained. This raw material of a porous material was stirred at room temperature (20°C to 30°C) for 2 hours, then, hydrothermally synthesized in the atmosphere at 90°C for 24 hours in a stationary state, then, filtered, washed with water and ethanol and dried at 100°C to synthesize a zeolite, and this zeolite was regarded as a zeolite of Example 17.
In Example 18, a zeolite was synthesized in the same manner as in Example 5 except that water and $Al(OH)_3$, which was an Al source, were added to the alkali extract (Z-4), which was a first Si source composition, such that the gel composition (mole ratio) of the raw material became $Si:Al:Na:H_2O = 1:(2/3):3:55$, and this zeolite was regarded as a zeolite of Example 18.
It was confirmed that, in the case of using the alkali extract (Z-1) and the alkali extract (Z-2), which were first Si source compositions, even when the Si/Al ratio was adjusted by the addition of the Al source, the products were mainly amorphous, and the use of the alkali extract (Z-3) and the alkali extract (Z-4) each having a mole ratio of NaOH/Si of 3 to 4 made it possible to more efficiently produce LTA type zeolites and FAU type zeolites. In addition, in the case of producing a zeolite using the first Si source composition, which was alkali extraction from rice husk charcoal, as a raw material, it was considered that the concentration of Na used at the time of obtaining the alkali extract was desirably set to a certain amount or more. Specifically, it was considered that an alkali treatment was desirably carried out on rice husk charcoal such that the mole ratio of NaOH/Si in an alkali extract became 3 or more, and this alkali treatment was more desirably carried out by adjusting the NaOH/Si theoretical ratio.
Fig. 12 shows each XRD view of the zeolite (FAU type) of Example 16 in the upper tier (Z-3-1.5) and a zeolite (LTA type) of Example 15 in the lower tier (Z-3-0.5). *in the upper tier indicates the pattern of zeolite NaP (GIS type).
In addition, Fig. 13 shows SEM photographs of the zeolite (FAU type) of Example 16 in the upper tier (Z-3-1.5) and a zeolite (LTA type) of Example 15 in the lower tier (Z-3-0.5).

In a case where the alkali extract (Z-3) having a mole ratio of NaOH/Si of 3 was used as a raw material, and the Si/Al ratio was adjusted to 0.5 with an Al source, it was possible to obtain a zeolite A (LTA type) (Example 15), and, in a case where the Si/Al ratio was adjusted to 1.5 with an Al source, it was possible to obtain zeolite X (FAU type) (Example 16). In Example 15 and Example 16 in which the mole ratio of NaOH/Si was set to 3 as described above, it was possible to confirm that almost pure zeolites (LTA type and FAU type) could be obtained in the respective examples.

In addition, it was considered that a certain amount or more of Na is required for the generation of zeolites. In addition, it was confirmed that a small amount of zeolite NaP (GIS type) was contained in the zeolite of Example 16, and this implies that the use of an alkali extract makes it possible to produce GIS type zeolites.

Fig. 14 shows each XRD view of the zeolite (FAU type) of Example 17 in the upper tier (Z-4-1.5) and a zeolite (LTA type) of Example 18 in the lower tier (Z-4-0.5). * in the upper tier indicates the pattern of zeolite NaP (GIS type). □ in the upper tier and the lower tier indicates the pattern of sodalite (SOD type zeolite).

Fig. 15 shows SEM photographs of the zeolite (FAU type) of Example 18 in the upper tier (Z-4-1.5) and the zeolite (LTA type) of Example 15 in the lower tier (Z-3-0.5).

In a case where the alkali extract (Z-4) having a mole ratio of NaOH/Si of 4 was used as a raw material, and the Si/Al ratio was adjusted to 0.5 with an Al source, it was possible to obtain a zeolite A (LTA type) (Example 17), and, in a case where the Si/Al ratio was adjusted to 1.5 with an Al source, it was possible to obtain zeolite X (FAU type) (Example 18). In Example 17 and Example 18 in which the mole ratio of NaOH/Si was set to 4 as described above, the generation of sodalite (SOD type) was also shown, which was considered to be attributed to an excessively high base concentration, and it was considered that a decrease in this alkali concentration makes it easy to produce pure zeolite LTA type and FAU type. It was confirmed that a small amount of zeolite NaP (GIS type) was contained in the zeolite of Example 18, and this implies that the use of an alkali extract makes it possible to produce GIS type zeolites.

According to Examples 15 to 18, it was considered that the zeolite structure generated using the alkali extract from rice husk charcoal as the first Si source composition, which was a raw material, depends on the Si/Al mole ratio of the gel composition at the time of preparation. It was possible to confirm that, in a case where the Si/Al mole ratio was 0.5, zeolite A (LTA type) was easily generated, and, in a case where the Si/Al mole ratio was 1.5, zeolite X (FAU type) was easily generated.

**Claims**

1. A production method of a porous material containing Si and Al, wherein a first Si source composition that is a plant-derived Si source and an Al source are used as at least raw materials.

2. The production method of a porous material according to claim 1, wherein a second Si source composition is further used as a raw material.

3. The production method of a porous material according to claim 1, wherein the first Si source composition is a Si source recovered when a treatment for recovering the Si source is carried out after a carbonization treatment of a plant-derived raw material.

4. The production method of a porous material according to claim 3, wherein the treatment for recovering the Si source is a treatment by alkali extraction that is carried out by adjusting a NaOH/Si mole ratio (theoretical ratio).

5. The production method of a porous material according to claim 1, wherein the first Si source composition may have a silicon content of 10 g/L or more.

6. The production method of a porous material according to claim 1, wherein a Si/Al composition ratio (mass ratio) of the first Si source composition is 1 to 300.

7. The production method of a porous material according to claim 2, wherein the second Si source is a mineral-derived Si source and/or a plant-derived Si source.

8. The production method of a porous material according to claim 2, wherein the second Si source composition is a treatment product obtained by a decarburization treatment of a plant-derived raw material.

9. The production method of a porous material according to claim 2, wherein the second Si source composition is plant-derived ash.

**10.** The production method of a porous material according to claim 2, wherein the second Si source composition is a Si source recovered when a treatment for recovering the Si source is carried out after a carbonization treatment of a plant-derived raw material.

**11.** The production method of a porous material according to claim 1, wherein an organic structure-directing agent is further used as a raw material.

**12.** The production method of a porous material according to claim 1, wherein a heating treatment of a mixture of the first Si source composition that is a plant-derived Si source and the Al source is carried out.

**13.** The production method of a porous material according to claim 12, wherein the mixture further contains a second Si source composition.

**14.** The production method of a porous material according to claim 12, wherein the heating treatment is hydrothermal synthesis.

**15.** The production method of a porous material according to claim 12, wherein the heating treatment is carried out in order of aging and then hydrothermal synthesis.

**16.** The production method of a porous material according to claim 1, wherein the first Si source composition is an aqueous solution recovered by removing silica from a plant-derived raw material containing the silica.

**17.** The production method of a porous material according to claim 1, wherein the porous material is a zeolite.

**18.** The production method of a porous material according to claim 1, wherein the plant is a gramineous plant.

**19.** A porous material obtained by the production method of a porous material according to claim 1.

**20.** A Si source composition for producing a porous material comprising:
a Si source recovered when a treatment for recovering the Si source is carried out after a carbonization treatment of a plant-derived raw material.

Fig. 1

Fig. 2

Fig. 3

Fig. 4

Fig. 5

Fig. 6

Fig. 7

Fig. 8

Fig. 9

Fig. 10

Fig. 11

Fig. 12

XRD PATTERN

Fig. 13

Fig. 14

XRD PATTERN

Fig. 15

**INTERNATIONAL SEARCH REPORT**

| International application No. |
|---|
| PCT/JP2021/001192 |

A. CLASSIFICATION OF SUBJECT MATTER
C01B 39/48(2006.01)i; C01B 39/14(2006.01)i; C01B 39/26(2006.01)i; C01B 39/38(2006.01)i
FI: C01B39/48; C01B39/14; C01B39/26; C01B39/38

According to International Patent Classification (IPC) or to both national classification and IPC

B. FIELDS SEARCHED

Minimum documentation searched (classification system followed by classification symbols)
C01B39/48; C01B39/14; C01B39/26; C01B39/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-208872 A (YOKOHAMA NATIONAL UNIVERSITY) 24 September 2010 (2010-09-24) claims 1-8, paragraphs [0014], [0032], [0036]-[0057] | 1, 5-6, 11-12, 14-15, 17-20 |
| A | | 2-4, 7-10, 13, 16 |
| X | JP 64-037412 A (AGENCY OF INDUSTRIAL SCIENCE AND TECHNOLOGY) 08 February 1989 (1989-02-08) claim 2, page 2, upper left column, line 18 to page 2, lower left column, line 4, page 3, upper left column, line 2 to page 3, lower right column, line 10, page 4, upper right column, line 11 to page 4, lower left column, line 7 | 1, 11-12, 14-20 |
| A | | 2-10, 13 |
| A | JP 2011-042569 A (SONY CORP.) 03 March 2011 (2011-03-03) entire text | 1-20 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 January 2021 (27.01.2021) | 02 March 2021 (02.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

| | | International application No. |
| --- | --- | --- |
| | | PCT/JP2021/001192 |

| Patent Documents referred in the Report | Publication Date | Patent Family | Publication Date |
| --- | --- | --- | --- |
| JP 2010-208872 A | 24 Sep. 2010 | (Family: none) | |
| JP 64-037412 A | 08 Feb. 1989 | KR 10-1989-0001875 A | |
| JP 2011-042569 A | 03 Mar. 2011 | US 2010/0069507 A1 entire text WO 2008/123606 A1 EP 2060535 A1 CN 101541676 A KR 10-2010-0014074 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008273816 A

- JP 2012179589 A

**Non-patent literature cited in the description**

- **SEYMOUR LOWELL ; JOAN E. SHIELDS ; MARTIN A. THOMAS ; MATTHIAS THOMMES.** Characterization of Porous Solids and Powders: Surface Area, Pore Size and Density. *Springer Science & Business Media,* 2006
- Introduction to Zeolite Science and Practice. **P. A. JACOBS ; E. M. FLANIGEN ; J. C. JANSEN.** Herman van Bekkum. Elsevier, 2001

- **FRANCISCO J. SOTOMAYOR ; KATIE A. CYCHOSZ ; MATTHIAS THOMMES.** Characterization of Micro/Mesoporous Materials by Physisorption: Concepts and Case Studies. *Acc. Mater. Surf. Res.,* 2018, vol. 3 (2), 34-50
- **SEIICHI KONDO ; TATSUO ISHIKAWA ; IKUO ABE.** Science of Adsorption. Maruzen Publishing Co., Ltd, 2001
- **SEIICHI KONDO ; TATSUO ISHIKAWA ; IKUO ABE.** Science of Adsorption. Maruzen Publishing Co., Ltd, 2001, 48-50